# EUROPEAN PATENT APPLICATION

(11) **EP 4 583 548 A1**
(43) Date of publication of application: **09.07.2025**
(21) Application number: 23870440.7
(22) Date of filing: 18.09.2023
(51) Int. Cl.: H04W 4/24

(54) **COMMUNICATION METHOD, COMMUNICATION APPARATUS, AND SYSTEM**

(30) Priority: 30.09.2022 CN 202211215589
(71) Applicant: Huawei Technologies Co., Ltd., Shenzhen, Guangdong 518129 (CN)
(72) Inventor: ZHONG, Yaping, Shenzhen, Guangdong 518129 (CN); HU, Xingxing, Shenzhen, Guangdong 518129 (CN)
(74) Representative: Gill Jennings & Every LLP
(86) International application number: PCT/CN2023/119407
(87) International publication number: WO 2024/067206

(57) **Abstract**

This application discloses a communication method, apparatus, and system. **In** the method, a terminal device receives first indication information from a first access network device, where the first indication information indicates that the first access network device is currently not connected to a core network device. The terminal device stores a context of the terminal device based on the first indication information after the terminal device accesses the first access network device, so that the terminal device can access a second access network device based on the context of the terminal device after the first access network device stops providing a service for the terminal device. **In** the foregoing solution, efficiency of accessing an access network device by the terminal device can be improved, so that a delay in setting up a connection to a network side by the terminal device is shortened.

## Description

This application claims priority to Chinese Patent Application No. 202211215589.8, filed with the China National Intellectual Property Administration on September 30, 2022 and entitled "COMMUNICATION METHOD, APPARATUS, AND SYSTEM", which is incorporated herein by reference in its entirety.

### TECHNICAL FIELD

Embodiments of this application relate to the communication field, and in particular, to a communication method, apparatus, and system.

### BACKGROUND

In a regenerative satellite (regenerative satellite)-based radio access network (radio access network, RAN) architecture of a non-terrestrial network (non-terrestrial network, NTN), a satellite serving as an access network device can not only exchange signaling with a terrestrial terminal device through a service link (service link), but also be connected to a terrestrial NTN gateway through a feeder link (feeder link) to exchange signaling with a core network device through the terrestrial NTN gateway.

However, during actual application, deployment of the terrestrial NTN gateway may be limited by geography (for example, the NTN gateway cannot be deployed on a sea surface). As a result, a deployed NTN gateway cannot cover all satellites. Therefore, some satellites that provide services for a terminal device may fail to set up connections to the core network device through the NTN gateway. Consequently, the terminal device cannot exchange non-access stratum (non-access stratum, NAS) signaling with the core network device through an access network device; and when a NAS timer expires, the terminal device may trigger an attempt to re-access a next access network device, to seek a network service. However, when the terminal device re-accesses the next access network device, access-related information usually needs to be reconfigured. Therefore, it may take a long period of time for the terminal device to access the next access network device. This causes low efficiency of accessing a network device by the terminal device and affects communication experience.

### SUMMARY

This application provides a communication method, apparatus, and system, to improve efficiency of setting up a connection to an access network device by a terminal device, and reduce signaling overheads for setting up a connection to a second access network device by the terminal device.

According to a first aspect, this application provides a communication method. The communication method may be performed by a terminal device, or may be performed by a component (for example, a processor, a chip, or a chip system) of the terminal device. Using the terminal device as an example, the terminal device receives first indication information from a first access network device, where the first indication information indicates that the first access network device is incapable of exchanging information with a core network device. The terminal device stores a context of the terminal device based on the first indication information after the terminal device accesses the first access network device, where the context of the terminal device is information used by the terminal device to access a second access network device after the first access network device stops providing a service for the terminal device.

It should be noted that the first indication information only indicates that no connection is currently established between the first access network device and the core network device, but the first access network device has a capability of setting up a connection to the core network device, and the first access network device may set up the connection to the core network device at a future moment.

For example, the first indication information may be identification information that describes a status of the first access network device, for example, an identifier indicating that there is no CN connection. The first indication information may alternatively be identification information that describes a data transmission mode, for example, an identifier of a store and forward (store and forward) mode. During actual application, the first indication information may alternatively be implemented by using other identification information or indication information. A specific implementation form of the first indication information is not limited in this application.

In a possible implementation, the second access network device is an access network device that has a context of the terminal device.

In this application, the terminal device can determine, based on the first indication information from the first access network device, that the first access network device has not established the connection to the core network device, and the terminal device stores the context of the terminal device based on the first indication information in a process of setting up a connection to the first access network device (or after the connection is established). When the first access network device stops providing the service for the terminal device, the context of the terminal device records access-related information used when the terminal device accesses the first access network device. The terminal device can access the second access network device by using the existing access-related information in the context of the terminal device, and the second access network device does not need to perform initial RRC setup again. This helps reduce signaling overheads for setting up a connection to the second access network device, and improve efficiency of accessing the second access network device by the terminal device, to help shorten a delay in setting up a connection to a network side by the terminal device.

In a possible implementation, after the terminal device stores the context of the terminal device based on the first indication information, the method further includes: The terminal device sets up a connection to the second access network device based on the context of the terminal device after the first access network device stops providing the service for the terminal device.

In a possible implementation, the second access network device and the first access network device are a same access network device. For example, after the first access network device stops providing the service for the terminal device for a period of time, the first access network device moves again to a geographical area in which the terminal device is located, and the terminal device sets up a connection to the first access network device again. In this case, that the terminal device performs a connection to the second access network device based on the context of the terminal device includes: The terminal device accesses a first cell of the first access network device based on the context of the terminal device, where the first cell is a cell stored in the context of the terminal device.

Specifically, the terminal device may access the first cell of the first access network device based on the context of the terminal device in either of the following implementations.

In a possible implementation, the context of the terminal device includes cell identification information of the first cell. In this case, if the terminal device receives the cell identification information of the first cell from the first access network device, the terminal device accesses the first cell based on the cell identification information of the first cell.

In this implementation, the cell identification information that is of the first cell and that is stored in the context of the terminal device indicates that the first cell is a cell previously accessed by the terminal device (for example, a cell accessed by the terminal device when the first access network device previously provided the service for the terminal device). The context of the terminal device may record related configuration information for accessing the first cell by the terminal device. Therefore, a probability of accessing the first cell by the terminal device based on the context of the terminal device is high. This helps improve efficiency of accessing the first access network device by the terminal device.

In another possible implementation, the terminal device receives second indication information from the first access network device, where the second indication information indicates the terminal device to initiate access. The terminal device accesses the first cell of the first access network device based on the second indication information.

In this implementation, the terminal device can access the first access network device under an indication of the second indication information sent by the first access network device. This helps improve efficiency of accessing the first access network device by the terminal device.

In another possible implementation, the second access network device and the first access network device are different access network devices. The terminal device may access the second access network device based on the context of the terminal device in either of the following implementations.

In a possible implementation, the context of the terminal device includes cell identification information of a first cell. If the terminal device receives the cell identification information of the first cell from the second access network device, the terminal device accesses a second cell of the second access network device based on the cell identification information of the first cell.

In this implementation, the second access network device broadcasts the cell identification information of the first cell in system information, to indicate a terminal device that previously accessed the first cell to access the second access network device. This helps improve efficiency of accessing the second access network device by the terminal device.

In another possible implementation, the terminal device receives third indication information from the second access network device, where the third indication information indicates the terminal device to initiate access. The terminal device accesses a second cell of the second access network device based on the third indication information.

In this implementation, the terminal device can access the second access network device under an indication of the third indication information sent by the second access network device. This helps improve efficiency of accessing the second access network device by the terminal device.

In a possible implementation, before the terminal device stores the context of the terminal device based on the first indication information, the method further includes: The terminal device receives first identification information from the first access network device, where the first identification information uniquely identifies the terminal device for the first access network device.

Optionally, the first identification information uniquely identifies the terminal device in different locations of the first access network device on an orbit. To be specific, regardless of which location, on the orbit, the first access network device moves to and which terminal devices the first access network device has configured identifiers for, the first identification information can uniquely identify the terminal device. Optionally, a length of the first identification information is greater than a length of a cell radio network temporary identifier.

In this implementation, the terminal device can receive the first identification information configured by the first access network device for the terminal device. This helps the first access network device quickly find, in a subsequent signaling exchange process, information related to the terminal device (for example, the context of the terminal device and a NAS message related to the terminal device).

In a possible implementation, before the first access network device stops providing the service for the terminal device, the method further includes: The terminal device sends an uplink NAS message of the terminal device to the first access network device. After the terminal device sets up the connection to the second access network device based on the context of the terminal device, the method further includes: The terminal device sends the first identification information to the second access network device, where the first identification information is used by the second access network device to determine the context of the terminal device. The terminal device receives a downlink NAS message for the terminal device from the second access network device.

In a possible implementation, before the first access network device stops providing the service for the terminal device, the method further includes: The terminal device starts a first NAS timer when sending the uplink NAS message, where the first NAS timer is a NAS timer used when an access network device is incapable of exchanging information with the core network device. Alternatively, the terminal device starts a second NAS timer after first duration since the uplink NAS message is sent, where the second NAS timer is a NAS timer used when an access network device is capable of exchanging information with the core network device.

Optionally, duration of the first NAS timer is greater than duration of the second NAS timer. The duration of the second NAS timer may be predefined in a protocol, or may be pre-configured. This is not limited herein.

In this implementation, the first NAS timer with longer duration is set, or the starting of the second NAS timer is delayed, so that duration for the terminal device to wait for the downlink NAS message fed back by the core network device can be prolonged. This helps the terminal device delay entering a state of waiting for the downlink NAS message because the terminal device triggers cell reselection or another process due to expiration of a NAS timer (for example, the first NAS timer or the second NAS timer).

In a possible implementation, the method further includes: The terminal device receives first time information from the first access network device, where the first time information is for determining duration of the first NAS timer or the first duration. Then, the terminal device determines the duration of the first NAS timer or the first duration based on the first time information.

In this implementation, the terminal device may determine the duration of the first NAS timer based on the first time information from the first access network device, so that when the access network device has not established the connection to the core network device, the terminal device delays entering the state of waiting for the downlink NAS message because the terminal device triggers the cell reselection or the another process due to the expiration of the NAS timer (for example, the first NAS timer or the second NAS timer).

According to a second aspect, this application provides a communication method. The communication method may be performed by an access network device, or may be performed by a component (for example, a processor, a chip, or a chip system) of the access network device. Using a first access network device as an example, the first access network device broadcasts first indication information, where the first indication information indicates that the first access network device is incapable of exchanging information with a core network device. The first access network device stores a context of a terminal device after the first access network device sets up a connection to the terminal device, where the context of the terminal device is information used by a second access network device to accept the terminal device after the first access network device stops providing a service for the terminal device.

In this application, the first access network device can provide the first indication information for the terminal device, so that the terminal device can determine, based on the first indication information from the first access network device, that the first access network device has not established a connection to the core network device, and the terminal device stores a context of the terminal device based on the first indication information in a process of setting up the connection to the first access network device (or after the connection is established). In addition, the first access network device also stores the context of the terminal device after setting up the connection to the terminal device, so that the first access network device sets up a connection to the terminal device again by using the stored context of the terminal device; or the first access network device forwards the context of the terminal device to the second access network device, and the second access network device sets up a connection to the terminal device again by using the stored context of the terminal device.

In a possible implementation, that the first access network device broadcasts first indication information includes: The first access network device broadcasts the first indication information in a first area, where the first area is an area in which the access network device is incapable of setting up a connection to the core network device.

In a possible implementation, before the first access network device stops providing the service for the terminal device, the method further includes: The first access network device receives an uplink NAS message from the terminal device in the first area. After the first access network device stores the context of the terminal device, the method further includes: The first access network device sends the uplink NAS message to the core network device when the first access network device moves to a second area, where the second area is an area in which the access network device is capable of setting up a connection to the core network device.

In a possible implementation, the second access network device is the first access network device. The method further includes: The first access network device sets up a connection to the terminal device based on the context of the terminal device when the first access network device moves to the first area again.

In a possible implementation, that the first access network device sets up a connection to the terminal device based on the context of the terminal device includes: The first access network device provides a service for the terminal device based on the context of the terminal device through a first cell of the first access network device, where the first cell is a cell accessed by the terminal device when the first access network device stores the context of the terminal device.

In a possible implementation, before the first access network device sets up the connection to the terminal device based on the context of the terminal device, the method further includes: The first access network device broadcasts cell identification information of the first cell in the first area, where the cell identification information of the first cell is used by the terminal device to access the first cell.

In a possible implementation, before the first access network device sets up the connection to the terminal device based on the context of the terminal device, the method further includes: The first access network device sends second indication information to the terminal device in the first cell, where the second indication information indicates the terminal device to initiate access based on the context of the terminal device.

In a possible implementation, after the first access network device sends the uplink NAS message to the core network device, the method further includes: The first access network device receives a downlink NAS message for the terminal device from the core network device in the second area. After the first access network device sets up the connection to the terminal device based on the context of the terminal device, the method further includes: The first access network device sends the downlink NAS message to the terminal device.

In a possible implementation, before the first access network device receives the uplink NAS message from the terminal device in the first area, the method further includes: The first access network device sends first identification information to the terminal device, where the first identification information uniquely identifies the terminal device for the first access network device. Before the first access network device sends the downlink NAS message to the terminal device, the method further includes: The first access network device receives the first identification information from the terminal device. The first access network device determines the context of the terminal device based on the first identification information of the terminal device. The first access network device determines the downlink NAS message based on the context of the terminal device.

In a possible implementation, the context of the terminal device includes geographical area information of the terminal device. Before the first access network device sends the downlink NAS message to the terminal device, the method further includes: The first access network device determines the context of the terminal device based on a cell radio network temporary identifier of the terminal device and the geographical area information of the terminal device. The first access network device determines the downlink NAS message based on the context of the terminal device.

In a possible implementation, the context of the terminal device includes time information about access of the terminal device to the first access network device. Before the first access network device sends the downlink NAS message to the terminal device, the method further includes: The first access network device determines the context of the terminal device based on a cell radio network temporary identifier of the terminal device and the time information about the access of the terminal device to the first access network device. The first access network device determines the downlink NAS message based on the context of the terminal device.

In a possible implementation, the second access network device and the first access network device are different access network devices. After the first access network device stores the context of the terminal device, the method further includes: The first access network device sends the context of the terminal device to the core network device when the first access network device moves to a second area, where the second area is an area in which the access network device is capable of setting up a connection to the core network device, and the context of the terminal device is used by the second access network device determined by the core network device to set up a connection to the terminal device.

In a possible implementation, before the first access network device receives the uplink NAS message from the terminal device in the first area, the method further includes: The first access network device broadcasts first time information in the first area, where the first time information is for determining a first NAS timer.

In a possible implementation, the method further includes: The first access network device sends fourth indication information to the core network device when the first access network device moves to the second area, where the fourth indication information indicates that the terminal device accesses the first access network device when the first access network device is incapable of setting up a connection to the core network device.

In a possible implementation, the method further includes: The first access network device sends first time information to the core network device when the first access network device moves to the second area, where the first time information is for determining a first NAS timer of the core network device.

It should be noted that specific implementations and beneficial effects of this aspect are similar to some implementations of the first aspect. For details, refer to the specific implementations and beneficial effects of the first aspect. The details are not described herein again.

According to a third aspect, this application provides a communication method. The communication method may be performed by a core network device, or may be performed by a component (for example, a processor, a chip, or a chip system) of the core network device. Using the core network device as an example, the core network device receives an uplink NAS message of a terminal device and fourth indication information from a first access network device, where the fourth indication information indicates that the terminal device accesses the first access network device when the first access network device is incapable of setting up a connection to the core network device, and the fourth indication information is further used by the core network device to start a first NAS timer when sending a downlink NAS message.

In a possible implementation, the method further includes: The core network device receives first time information from the first access network device, where the first time information is for determining the first NAS timer.

In a possible implementation, the method further includes: The core network device sends a downlink NAS message for the terminal device to the first access network device, and the core network device starts the first NAS timer. Before the first NAS timer expires, the core network device receives, from the first access network device, an uplink NAS message corresponding to the downlink NAS message.

In a possible implementation, the method further includes: The core network device sends a downlink NAS message for the terminal device to a second access network device, and the core network device starts the first NAS timer, where the second access network device is an access network device that is to move to a geographical area in which the terminal device is located. Before the first NAS timer expires, the core network device receives an uplink NAS message corresponding to the downlink NAS message.

In a possible implementation, the method further includes: The core network device receives a context of the terminal device from the first access network device. The core network device sends the context of the terminal device to the second access network device.

It should be noted that specific implementations and beneficial effects of this aspect are similar to some implementations of the first aspect. For details, refer to the specific implementations and beneficial effects of the first aspect. The details are not described herein again.

According to a fourth aspect, this application provides a communication method. The communication method may be performed by an access network device, or may be performed by a component (for example, a processor, a chip, or a chip system) of the access network device. Using a second access network device as an example, the second access network device receives a context of a terminal device and a downlink NAS message for the terminal device from a core network device. The second access network device determines, based on the context of the terminal device, a geographical area in which the terminal device is located. The second access network device sends second indication information to the terminal device when the second access network device moves to the geographical area in which the terminal device is located, where the second indication information indicates the terminal device to initiate random access. The second access network device sends the downlink NAS message for the terminal device to the terminal device after the terminal device accesses the second access network device.

In a possible implementation, before the downlink NAS message for the terminal device is sent to the terminal device, the method further includes: The second access network device receives first identification information from the terminal device, where the first identification information uniquely identifies the terminal device for a first access network device. The second access network device determines the context of the terminal device based on the first identification information. The second access network device determines the downlink NAS message based on the context of the terminal device.

In a possible implementation, the context of the terminal device includes geographical area information of the terminal device. Before the second access network device sends the downlink NAS message to the terminal device, the method further includes: The second access network device determines the context of the terminal device based on a cell radio network temporary identifier of the terminal device and the geographical area information of the terminal device. The second access network device determines the downlink NAS message based on the context of the terminal device.

In a possible implementation, the context of the terminal device includes time information about access of the terminal device to the first access network device. Before the second access network device sends the downlink NAS message to the terminal device, the method further includes: The second access network device determines the context of the terminal device based on a cell radio network temporary identifier of the terminal device and the time information about the access of the terminal device to the first access network device. The second access network device determines the downlink NAS message based on the context of the terminal device.

It should be noted that specific implementations and beneficial effects of this aspect are similar to some implementations of the first aspect. For details, refer to the specific implementations and beneficial effects of the first aspect. The details are not described herein again.

According to a fifth aspect, this application provides a communication method. The communication method may be performed by a core network device, or may be performed by a component (for example, a processor, a chip, or a chip system) of the core network device. Using the core network device as an example, the core network device determines at least one access network device based on geographical area information of a terminal device, where a current coverage area of the access network device does not include a geographical area in which the terminal device is located, and a movement path of the coverage area of the access network device passes through the geographical area in which the terminal device is located. The core network device sends a paging message to the at least one access network device, where the paging message includes the geographical area information of the terminal device.

The geographical area information of the terminal device indicates the geographical area in which the terminal device is located. The geographical area information of the terminal device may be stored in a context that is of the terminal device and that is in the core network device. For example, after the terminal device registers with the core network device, the core network device sets up the context of the terminal device.

In this embodiment, the core network device can determine, based on the geographical area information of the terminal device, the at least one access network device for paging the terminal device, instead of directly determining, based on a TA list, an access network device for paging the terminal device. This helps increase a probability that the core network device successfully pages the terminal device.

In a possible implementation, the method further includes: The core network device starts a first paging timer when sending the paging message, where duration of the first paging timer is greater than duration of a pre-configured paging timer.

If the core network device can receive a response message of the terminal device during running of the first paging timer, the core network device succeeds in paging the terminal device. If the core network device does not receive a response message of the terminal device during running of the first paging timer, the core network device fails to page the terminal device.

According to a sixth aspect, this application provides a communication method. The communication method may be performed by an access network device, or may be performed by a component (for example, a processor, a chip, or a chip system) of the access network device. Using a third access network device as an example, the third access network device receives a paging message, where the paging message includes geographical area information of a terminal device. When the third access network device moves to a geographical area in which the terminal device is located, the third access network device broadcasts the paging message in the geographical area in which the terminal device is located.

In a possible implementation, the method further includes: The third access network device sends fifth indication information to a fourth access network device, where the fourth access network device is an access network device that provides a service for the terminal device after the third access network device stops providing a service for the terminal device, and the fifth indication information indicates the fourth access network device to delete the paging message for paging the terminal device.

In this implementation, if there is an inter-satellite link between the third access network device and the fourth access network device, when the third access network device fails to page the terminal device, the fourth access network device continues to page the terminal device; or when the third access network device succeeds in paging the terminal device, the third access network device sends the fifth indication information to the fourth access network device, where the fifth indication information indicates the fourth access network device to delete the paging message for paging the terminal device. Because a quantity of times that the terminal device receives the paging message can be reduced, electric energy of the terminal device can be saved.

According to a seventh aspect, this application provides a communication method. The communication method may be performed by a core network device, or may be performed by a component (for example, a processor, a chip, or a chip system) of the core network device. Using the core network device as an example, the core network device sends a plurality of data packets for a terminal device to a fifth access network device, where each data packet corresponds to one first serial number. The core network device sends a context of the terminal device and a plurality of data packets for the terminal device to a sixth access network device, where the sixth access network device is an access network device that provides a service for the terminal device after the fifth access network device stops providing a service for the terminal device, and the context of the terminal device is used by the sixth access network device to set up a connection to the terminal device and send the plurality of the data packets for the terminal device to the terminal device.

In this implementation, the core network device can replicate the plurality of data packets for the terminal device, send the data packets for the terminal device to a plurality of access network devices, and send the context of the terminal device to the plurality of access network devices. In this way, when one of the access network devices cannot send all the data packets to the terminal device, another access network device can send a data packet to the terminal device. This helps maintain continuity of data received by the terminal device.

According to an eighth aspect, this application provides a communication method. The communication method may be performed by an access network device, or may be performed by a component (for example, a processor, a chip, or a chip system) of the access network device. Using a fifth access network device as an example, the fifth access network device receives a plurality of data packets for a terminal device from a core network device, where each data packet corresponds to one first serial number. When the fifth access network device moves to a geographical area in which the terminal device is located, the fifth access network device sends, to the terminal device based on the first serial number, the data packet that carries the first serial number. Alternatively, when the fifth access network device moves to a geographical area in which the terminal device is located, the fifth access network device determines a second serial number of each data packet based on the first serial number of each data packet and a first mapping rule, and sends, to the terminal device based on the second serial number, the data packet that carries the second serial number.

In a possible implementation, the method further includes: The fifth access network device sends sixth indication information to the terminal device before stopping providing a service for the terminal device, where the sixth indication information indicates that there is a to-be-sent data packet.

According to a ninth aspect, this application provides a communication method. The communication method may be performed by an access network device, or may be performed by a component (for example, a processor, a chip, or a chip system) of the access network device. Using a sixth access network device as an example, the sixth access network device receives a plurality of data packets for a terminal device and a context of the terminal device from a core network device, where each data packet corresponds to one first serial number. The sixth access network device sets up a connection to the terminal device based on the context of the terminal device. The sixth access network device receives seventh indication information from the terminal device, where the seventh indication information indicates data packets that have been consecutively received by the terminal device successfully. The sixth access network device sends at least one of the plurality of data packets to the terminal device based on the seventh indication information.

In a possible implementation, the seventh indication information includes a target serial number, and the target serial number is a serial number of a last data packet whose receiving has been consecutively acknowledged by the terminal device.

In a possible implementation, the target serial number is a first serial number. That the sixth access network device sends at least one of the plurality of data packets to the terminal device based on the target serial number includes: The sixth access network device sends, to the terminal device, at least one data packet that carries a first serial number, where the first serial number of each of the at least one data packet is greater than the target serial number.

In a possible implementation, the target serial number is a second serial number. That the sixth access network device sends at least one of the plurality of data packets to the terminal device based on the target serial number includes: The sixth access network device determines a second serial number of each data packet based on the first serial number of each data packet and a first mapping rule. The sixth access network device sends, to the terminal device, at least one data packet that carries the second serial number, where the second serial number of each of the at least one data packet is greater than the target serial number.

According to a tenth aspect, this application provides a communication method. The communication method may be performed by a terminal device, or may be performed by a component (for example, a processor, a chip, or a chip system) of the terminal device. Using the terminal device as an example, the terminal device receives at least one data packet from a fifth access network device, where each data packet corresponds to one first serial number or one second serial number. The terminal device sets up a connection to a sixth access network device after the fifth access network device stops providing a service for the terminal device. The terminal device sends seventh indication information to the sixth access network device, where the seventh indication information indicates data packets that have been consecutively received by terminal device successfully. The terminal device receives at least one data packet from the sixth access network device.

In a possible implementation, the seventh indication information includes a target serial number, and the target serial number is a serial number of a last data packet whose receiving has been consecutively acknowledged by the terminal device.

In a possible implementation, before the fifth access network device stops providing the service for the terminal device, the method further includes: The terminal device receives sixth indication information from the fifth access network device, where the sixth indication information indicates that there is a to-be-sent data packet.

According to an eleventh aspect, an embodiment of this application provides a communication apparatus. The communication apparatus may be the terminal device in the foregoing implementations, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, to enable the terminal device to perform the method according to any one of the first aspect or the implementations of the first aspect, or perform the method according to any one of the tenth aspect or the implementations of the tenth aspect. When the communication apparatus is the chip in the terminal device, the processing module may be a processor, and the transceiver module may be an input/output interface, a pin, a circuit, or the like. The processing module executes instructions stored in a storage module, to enable the terminal device to perform the method according to any one of the first aspect or the implementations of the first aspect, or perform the method according to any one of the tenth aspect or the implementations of the tenth aspect. The storage module may be a storage module (for example, a register or a cache) in the chip, or may be a storage module (for example, a read-only memory or a random access memory) that is in the terminal device and that is located outside the chip.

According to a twelfth aspect, an embodiment of this application provides a communication apparatus. The communication apparatus may be the access network device in the foregoing implementations, or may be a chip in the access network device. The access network device may be the first access network device, the second access network device, the third access network device, the fourth access network device, the fifth access network device, the sixth access network device, or the like described in the foregoing aspects. The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions, and the processing module executes the instructions stored in the storage module, to enable the first access network device to perform the method according to any one of the second aspect or the implementations of the second aspect, enable the second access network device to perform the method according to any one of the fourth aspect or the implementations of the fourth aspect, enable the third access network device to perform the method according to any one of the sixth aspect or the implementations of the sixth aspect, enable the fifth access network device to perform the method according to any one of the eighth aspect or the implementations of the eighth aspect, or enable the sixth access network device to perform the method according to any one of the ninth aspect or the implementations of the ninth aspect. When the communication apparatus is the chip in the access network device, the processing module may be a processor, and the transceiver module may be an input/output interface, a pin, a circuit, or the like. The processing module executes instructions stored in a storage module, to enable the first access network device to perform the method according to any one of the second aspect or the implementations of the second aspect, enable the second access network device to perform the method according to any one of the fourth aspect or the implementations of the fourth aspect, enable the third access network device to perform the method according to any one of the sixth aspect or the implementations of the sixth aspect, enable the fifth access network device to perform the method according to any one of the eighth aspect or the implementations of the eighth aspect, or enable the sixth access network device to perform the method according to any one of the ninth aspect or the implementations of the ninth aspect. The storage module may be a storage module (for example, a register or a cache) in the chip, or may be a storage module (for example, a read-only memory or a random access memory) that is in the access network device and that is located outside the chip.

According to a thirteenth aspect, an embodiment of this application provides a communication apparatus. The communication apparatus may be the core network device in the foregoing implementations, or may be a chip in the core network device. The communication apparatus may include a processing module and a transceiver module. When the communication apparatus is the core network device, the processing module may be a processor, and the transceiver module may be a transceiver. The core network device may further include a storage module, and the storage module may be a memory. The storage module is configured to store instructions, and the processing module executes the instructions stored in the storage module, to enable the core network device to perform the method according to any one of the third aspect or the implementations of the third aspect, perform the method according to any one of the fifth aspect or the implementations of the fifth aspect, or perform the method according to any one of the seventh aspect or the implementations of the seventh aspect. When the communication apparatus is the chip in the core network device, the processing module may be a processor, and the transceiver module may be an input/output interface, a pin, a circuit, or the like. The processing module executes instructions stored in a storage module, to enable the core network device to perform the method according to any one of the third aspect or the implementations of the third aspect, perform the method according to any one of the fifth aspect or the implementations of the fifth aspect, or perform the method according to any one of the seventh aspect or the implementations of the seventh aspect. The storage module may be a storage module (for example, a register or a cache) in the chip, or may be a storage module (for example, a read-only memory or a random access memory) that is in the core network device and that is located outside the chip.

According to a fourteenth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the implementations of the foregoing aspects.

According to a fifteenth aspect, an embodiment of this application provides a computer program product including instructions. When the computer program product runs on a computer, the computer is enabled to perform the method according to any one of the implementations of the foregoing aspects.

According to a sixteenth aspect, an embodiment of this application provides a computer-readable storage medium, including instructions. When the instructions are run on a computer, the computer is enabled to perform the method according to any one of the implementations of the foregoing aspects.

According to a seventeenth aspect, an embodiment of this application provides a communication system. The communication system includes the terminal device performing any one of the first aspect and the implementations of the first aspect, the first access network device performing any one of the second aspect and the implementations of the second aspect, the core network device performing any one of the third aspect and the implementations of the third aspect, and the second access network device performing any one of the fourth aspect and the implementations of the fourth aspect.

According to an eighteenth aspect, an embodiment of this application provides a communication system. The communication system includes a terminal device, the core network device performing any one of the fifth aspect and the implementations of the fifth aspect, and the third access network device performing any one of the sixth aspect and the implementations of the sixth aspect.

According to a nineteenth aspect, an embodiment of this application provides a communication system. The communication system includes the core network device performing any one of the seventh aspect and the implementations of the seventh aspect, the fifth access network device performing any one of the eighth aspect and the implementations of the eighth aspect, the sixth access network device performing any one of the ninth aspect and the implementations of the ninth aspect, and the terminal device performing any one of the tenth aspect and the implementations of the tenth aspect.

### BRIEF DESCRIPTION OF DRAWINGS

FIG. 1A is a diagram of a network architecture to which a communication method according to this application is applicable;
FIG. 1B is a diagram of another network architecture to which a communication method according to this application is applicable;
FIG. 1C is a diagram of another network architecture to which a communication method according to this application is applicable;
FIG. 1D is an example diagram of an application scenario of a communication method according to this application;
FIG. 2 is a flowchart of a communication method according to this application;
FIG. 3 is another flowchart of a communication method according to this application;
FIG. 4A is another example diagram of an application scenario of a communication method according to this application;
FIG. 4B is another example diagram of an application scenario of a communication method according to this application;
FIG. 5 is another flowchart of a communication method according to this application;
FIG. 6A is another example diagram of an application scenario of a communication method according to this application;
FIG. 6B is another example diagram of an application scenario of a communication method according to this application;
FIG. 7 is another flowchart of a communication method according to this application;
FIG. 8 is another flowchart of a communication method according to this application;
FIG. 9 is a diagram of an embodiment of a communication apparatus according to this application;
FIG. 10 is a diagram of another embodiment of a communication apparatus according to this application;
FIG. 11 is a diagram of another embodiment of a communication apparatus according to this application; and
FIG. 12 is a diagram of another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the terms used in such a way are interchangeable in appropriate circumstances, so that the embodiments described herein can be implemented in other orders than the order illustrated or described herein. In addition, the terms "include", "have", and any other variants thereof are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

For ease of understanding, the following first describes a system architecture and an application scenario of a communication method provided in this application.

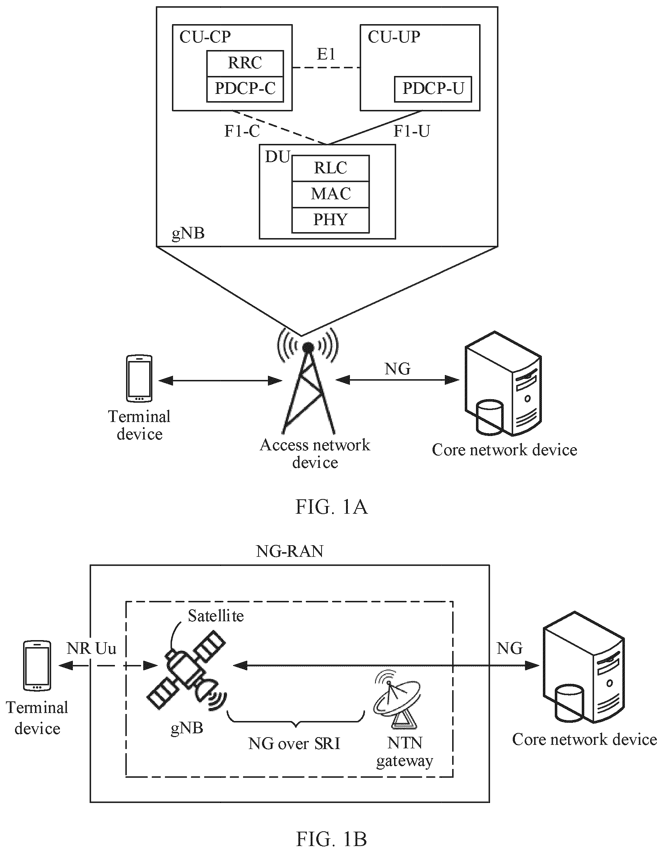

The communication method provided in this application may be applied to a long term evolution (long term evolution, LTE) system, an 5G NR (5G New Radio) system, a 6th generation mobile communication technology (6th generation mobile communication technology, 6G) system, and a subsequently evolved standard. This is not limited in this application. As shown in FIG. 1A, a communication system includes at least a terminal device, an access network device, and a core network device.

The terminal device includes a device that provides voice and/or data connectivity to a user. For example, the terminal device may include a handheld device having a wireless connection function or a processing device connected to a wireless modem. The terminal device may communicate with a core network (for example, a 5G core (5th generation core, 5GC)) through a radio access network (radio access network, RAN) and may exchange a voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile), a remote station (remote station), an access point (access point, AP), a remote terminal (remote terminal), an access terminal (access terminal), a user terminal (user terminal), a user agent (user agent), a user device (user device), or the like. In addition, the terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology for and a specific device form of the terminal device are not limited in embodiments of this application. The terminal device in this application may be any one of the foregoing devices or chips. This is not specifically limited herein. Either being a device or a chip, the terminal device can be manufactured, sold, or used as an independent product. In this embodiment and subsequent embodiments, the terminal device is used as an example for description.

The access network device may be any device with a wireless transceiver function, and may be configured to be responsible for a function related to an air interface, for example, a radio link maintenance function, a radio resource management function, and some mobility management functions. In addition, a baseband unit (baseband unit, BBU) may be further configured on the access network device, and the access network device has a baseband signal processing function. For example, the access network device may be an access network device (radio access network, RAN) that currently provides a service for the terminal device. Currently, some common examples of the access network device are a NodeB (NodeB, NB), an evolved NodeB (evolved NodeB, eNB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), and the like. In addition, in a cloud radio access network (cloud radio access network, CloudRAN), an open radio access network (open radio access network, ORAN), or another network structure, the access network device may be a device including a central unit (central unit, CU) (also referred to as a control unit) and/or a distributed unit (distributed unit, DU). The RAN device including the CU and the DU splits protocol layers of a gNB in the NR system. Functions of a part of protocol layers are centrally controlled by the CU, functions of a part or all of remaining protocol layers are distributed in the DU, and the CU centrally controls the DU. It should be understood that the access network device in this embodiment of this application may be any one of the foregoing devices or a chip in the foregoing device. This is not specifically limited herein. Either being a device or a chip, the access network device can be manufactured, sold, or used as an independent product. In this embodiment and the subsequent embodiments, the access network device is used as an example for description. In an NTN, the access network device may include a satellite and an NTN gateway.

Optionally, when the access network device includes the CU and the DU, a plurality of DUs may share one CU. The CU and the DU may be split based on a protocol stack. For example, as shown in FIG. 1A, in a possible manner, a radio resource control (radio resource control, RRC) layer, a service data adaptation protocol (service data adaptation protocol, SDAP) layer, and a packet data convergence protocol (packet data convergence protocol, PDCP) layer are deployed in the CU, and other layers, namely, a radio link control (radio link control, RLC) layer, a media access control (media access control, MAC) layer, and a physical (physical, PHY) layer, are deployed in the DU. The CU is connected to the DU through an F1 interface. The CU is connected to the core network through an NG interface on behalf of the gNB, the CU is connected to another gNB through an Xn interface on behalf of the gNB, and on behalf of the gNB, the CU may be further connected to another eNB through an X2 interface to perform a dual connectivity operation. Further, the CU may be divided into a control plane (CU-CP) and a user plane (CU-UP). The CU-CP is responsible for a control plane function, and mainly includes the RRC and a PDCP corresponding to the control plane (namely, a PDCP-C). The PDCP-C is mainly responsible for encryption, decryption, integrity protection, data transmission, and the like of control plane data. The CU-UP is responsible for a user plane function, and mainly includes the SDAP and a PDCP corresponding to the user plane (namely, a PDCP-U). The SDAP is mainly responsible for processing data of the core network and mapping a flow to a bearer. The PDCP-U is mainly responsible for encryption, decryption, integrity protection, header compression, serial number maintenance, data transmission, and the like on a data plane. The CU-CP is connected to the CU-UP through an E1 interface. The CU-CP, on behalf of the gNB, is connected to the core network through the NG interface and connected to the DU through an F1 interface-control plane (namely, F1-C). The CU-UP is connected to the DU through an F1 interface-user plane (namely, F1-U). In another possible implementation, the PDCP-C is also in the CU-UP. The control plane of the CU, namely, the CU-CP, further includes a further split architecture. In other words, the existing CU-CP is further split into a CU-CP 1 and a CU-CP 2. The CU-CP 1 includes various radio resource management functions (for example, mobility management and a specific value of each piece of information in a downlink RRC message sent to the terminal device). The CU-CP 2 includes only an RRC function (for example, being responsible for generating the downlink RRC message and decoding an uplink RRC message) and a PDCP-C function (namely, a basic function of control plane signaling at the PDCP layer).

The core network device is a device, in the core network (core network, CN), that provides service support for the terminal device. Currently, some common examples of the core network device are an access and mobility management function (access and mobility management function, AMF) entity, a session management function (session management function, SMF) entity, a user plane function (user plane function, UPF) entity, and the like. Details are not enumerated one by one herein. The AMF entity may be responsible for access management and mobility management of the terminal device. The SMF entity may be responsible for session management, for example, user session establishment. The UPF entity may be a functional entity on a user plane, and is mainly responsible for connecting to an external network. It should be noted that the entity in this application may also be referred to as a network element or a functional entity. For example, the AMF entity may also be referred to as an AMF network element or an AMF functional entity. For another example, the SMF entity may also be referred to as an SMF network element or an SMF functional entity. It should be noted that the core network device in this application includes at least the AMF entity.

For example, the communication method provided in this application may be applied to a non-terrestrial network NTN architecture, for example, a non-terrestrial network based on an NG-RAN architecture (NTN-based NG-RAN architecture) defined in a 3GPP protocol. In this case, some or all functions of the access network device may be implemented by a non-terrestrial network device (for example, at least one of a satellite, a tethered unmanned aerial system (tethered unmanned aerial system, TUA), a lighter than air UAS (lighter than air UAS, LTA), a heavier than air UAS (heavier than air UAS, HTA), or a high altitude platform station (high altitude platform station, HAPS)); or the access network device provides a service for a terminal device through a non-terrestrial network device. It should be noted that in this application, an example in which the non-terrestrial network device is a satellite is used for description. However, this is not limited in this application. The non-terrestrial network device may alternatively be any other one of the foregoing devices. That is, the satellite described in the present invention may alternatively be replaced with any one of the foregoing non-terrestrial network devices.

This application may be applied to a regenerative satellite (regenerative satellite)-based NG-RAN architecture. The following separately describes several common examples of the regenerative satellite-based NG-RAN architecture.

FIG. 1B shows an example of an NG-RAN architecture based on a regenerative satellite without an inter-satellite link (inter-satellite link, ISL) (which may also be referred to as an inter-satellite link) (regenerative satellite without an ISL). A satellite serves as an access network device, or a satellite has a function of an access network device. In the network structure, a terminal device sends a Uu radio interface signal to the access network device (namely, the satellite) through a service link (service link) between the terminal device and the satellite. Correspondingly, the satellite serves as the access network device to receive the Uu radio interface signal from the terminal device and perform parsing processing on the received signal. In addition, as the access network device, the satellite exchanges information with a terrestrial NTN gateway through a feeder link (feeder link), and further, the satellite exchanges NG interface information with a terrestrial core network device through the terrestrial NTN gateway. For example, the satellite generates NG interface information, and sends the NG interface information to the core network device through the terrestrial NTN gateway. Similarly, the core network device generates NG interface information, and sends the NG interface information to the satellite through the terrestrial NTN gateway. In this example, the satellite generates the following signals: a Uu radio interface signal and a satellite radio interface (satellite radio interface, SRI) signal on the feeder link between the NTN gateway and the satellite.

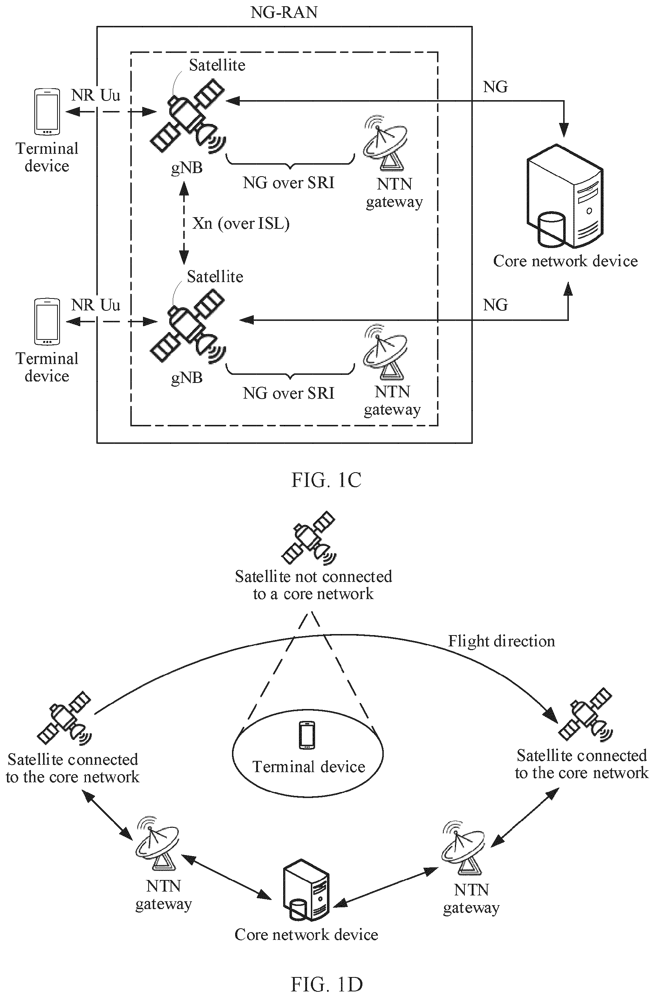

FIG. 1C shows an example of a RAN architecture based on regenerative satellites with an inter-satellite link (regenerative satellites with an ISL). In this example, a satellite serves as an access network device, or a satellite has a function of an access network device. In this example, a relationship between a terrestrial terminal device, the satellite, an NTN gateway, and a core network device is similar to that in the example shown in FIG. 1B. A difference lies in that there is the inter-satellite link between two satellites in the example shown in FIG. 1C, and Xn interface information may be exchanged through the inter-satellite link.

In the foregoing several regenerative satellite-based NG-RAN architectures, the satellite serving as the access network device may exchange Uu interface signaling with the terrestrial terminal device through the service link, and may further need to exchange NG interface signaling with the core network device through the terrestrial NTN gateway. However, as shown in FIG. 1D, when no NTN gateway is deployed on ground corresponding to an area in which a satellite is located, the satellite is incapable of successfully setting up or cannot successfully set up a connection to a core network through an NTN gateway. In this case, a cell of a satellite may be in two states: (1) System information broadcast by the satellite indicates that a cell state is a cell incapable of providing a service (for example, a cell-barred state indicated by the system information is a barred state), a terminal device cannot access the satellite (namely, a satellite that has not established a connection to the core network device), and the terminal device cannot benefit from a network service. (2) System information broadcast by the satellite indicates that a cell state is a cell capable of providing a service (for example, a cell-barred state indicated by the system information is a not barred state), but a terminal device does not sense that the satellite has not established the connection to the core network. Therefore, the terminal device may access the satellite. Because the satellite is incapable of forwarding or cannot forward an access request of the terminal device to the core network device, after accessing the satellite, the terminal device cannot receive a downlink NAS message returned by the core network device. Consequently, when a NAS timer expires, the terminal device re-performs cell measurement, cell reselection, or another process, or the terminal device cannot complete interaction needed for a connection. As a result, the terminal device is in a state of searching for an accessible satellite, and cannot benefit from a network service.

In view of this, this application provides a communication method, apparatus, and system, to enable a terminal device to obtain a network service when the terminal device accesses an access network device that has not established a connection to a core network device, and therefore not to be in a network-disconnected state.

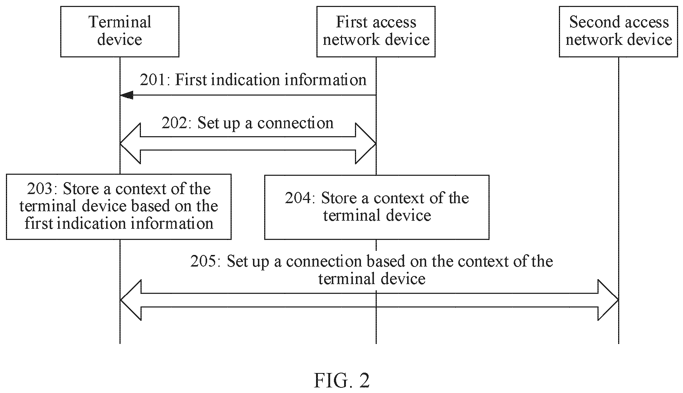

With reference to FIG. 2, the following describes a main procedure for the communication method provided in this application. An access network device (for example, a first access network device and a second access network device that are described below) in this embodiment may be a non-terrestrial network device, for example, a satellite. For example, this embodiment may be applied to the NTN architecture shown in FIG. 1B, namely, the RAN architecture based on the regenerative satellite without the inter-satellite link. This embodiment may also be applied to an NTN architecture obtained by combining FIG. 1B and FIG. 1C, namely, a scenario in which there are no consecutive inter-satellite links between NTNs but there is an inter-satellite link between some NTNs. For example, there is no inter-satellite link between the first access network device and the second access network device, and signaling exchange is not performed. Specifically, the first access network device, the second access network device, and a terminal device perform the following steps.

Step 201: The first access network device sends first indication information.

Correspondingly, the terminal device receives the first indication information.

For example, the first access network device broadcasts the first indication information, and the terminal device receives the first indication information from the first access network device. The first indication information may be carried in system information (for example, a system information block 1 (system information block 1, SIB1) or a master information block (master information block, MIB)). For example, the first access network device broadcasts the system information, and the terminal device receives the system information to obtain the first indication information.

The first indication information indicates that the first access network device is incapable of exchanging information with a core network device currently. It may be understood that the first indication information indicates that the first access network device currently is incapable of setting up or cannot set up a connection to the core network device successfully through an NTN gateway. For example, an area in which the first access network device is currently located is not covered by an NTN gateway. As a result, the first access network device cannot set up a feeder link (feeder link) to the NTN gateway currently, and the first access network device is incapable of exchanging or cannot exchange the information with the core network device through the NTN gateway currently. For another example, an NTN gateway of an area in which the first access network device is currently located is faulty. As a result, the first access network device cannot set up a feeder link (feeder link) to the NTN gateway currently, and the first access network device is incapable of exchanging the information with the core network device through the NTN gateway currently. It may alternatively be understood that the first indication information indicates that the first access network device is capable of setting up a connection to the core network device through the NTN gateway currently, but the connection is faulty or overloaded and consequently the first access network device is incapable of exchanging the information with the core network device. For example, an NTN gateway covering an area in which the first access network device is currently located is not faulty, the first access network device is capable of setting up a feeder link (feeder link) to the NTN gateway, and the NTN gateway is also capable of setting up a connection to the core network device. However, due to incorrect configuration information or poor signal quality on the feeder link, the first access network device is incapable of exchanging the information with a core network through the NTN gateway.

It should be noted that, in a possible implementation, the first indication information only indicates that no connection is successfully established between the first access network device and the core network device currently. However, the first access network device has a capability of setting up a connection to the core network device, and the first access network device may set up the connection to the core network device at a future moment. For example, when the first access network device moves to an area covered by an NTN gateway, the first access network device is capable of setting up the connection to the core network device through the NTN gateway. In another possible implementation, the first indication information only indicates that the first access network device is incapable of exchanging or cannot exchange the information with the core network device currently. However, the first access network device has a capability of setting up a connection to the core network device, and the first access network device may set up the connection to the core network device at a future moment. For example, when the first access network device moves to an area covered by an NTN gateway, the first access network device is capable of setting up the connection to the core network device through the NTN gateway. In another possible implementation, the first indication information only indicates that the first access network device is incapable of exchanging or cannot exchange the information with the core network device currently, but the first access network device has established a connection to the core network device. For example, the first access network device previously established the connection to the core network device through an NTN gateway. However, when the first access network device currently moves to an area in which the terminal device is located, there is no available NTN gateway in the area. When the first access network device moves to an area in which there is an available NTN gateway, the first access network device is capable of exchanging the information with the core network device through the NTN gateway again.

For example, the first indication information may be identification information that describes a status of the first access network device, for example, an identifier indicating that there is no CN connection. The first indication information may alternatively be identification information that describes a data transmission mode, for example, an identifier of a store and forward (store and forward) mode. In this application, when the first access network device is incapable of exchanging signaling with the core network device, the first access network device receives and stores signaling (for example, NAS signaling) or data from the terminal device, and forwards, to the core network device when the first access network device moves to an area in which the first access network device is capable of exchanging information with the core network device, the signaling or the data from the terminal device. This signaling transmission mode is referred to as the store and forward (store and forward) mode. The store and forward (store and forward) mode also includes a case in which the first access network device receives and stores, when the first access network device is capable of exchanging signaling with the core network device, signaling or data that is related to the terminal device and that is from the core network, and forwards, to the terminal device when the first access network device moves to an area in which the first access network device can cover the terminal device, the signaling or data that is related to the terminal device and that is from the core network. Store and forward may be defined as an operation mode of an NTN access system. In this mode, the NTN access system cannot provide a feeder link for connecting to an NTN gateway, but can still provide a communication service for a user covered by an access network device. During actual application, the first indication information may alternatively be implemented by using other identification information or indication information. A specific implementation form of the first indication information is not limited in this application.

Step 202: The terminal device sets up a connection to the first access network device.

After the terminal device receives the first indication information from the first access network device, and when the terminal device needs to obtain a network service, the terminal device may initiate random access to the first access network device to set up the connection to the first access network device. Optionally, if the terminal device receives the first indication information in a first cell of the first access network device, the terminal device may initiate the random access in the first cell.

It should be noted that the terminal device may initiate four-step random access to access the first access network device, or may initiate two-step random access to access the first access network device. This is not specifically limited in this application.

It should be noted that, in a process of setting up a connection to an access network device, the terminal device first performs uplink time synchronization through a random access procedure and then performs an RRC connection. In an RRC connection setup process, the first access network device may allocate identification information of the terminal device to the terminal device, where the identification information uniquely identifies the terminal device in signaling exchange between the terminal device and the first access network device. For example, the identification information of the terminal device is a cell radio network temporary identifier (cell radio network temporary identifier, C-RNTI). In addition, the first access network device further configures, for the terminal device, a resource to be used by the terminal device. The resource includes but is not limited to a time-frequency resource (for example, an RLC resource, a MAC resource, and a physical layer resource in a cell group configuration (CellgroupConfig) (for example, a physical resource in a physical cell group configuration (PhysicalCellGroupConfig)) and a resource for uplink and downlink transmission in a special cell configuration (Spcellconfig)) and a bearer resource (for example, a signaling radio bearer 0 (signaling radio bearer 0, SRB0), a signaling radio bearer 1 (signaling radio bearer 1, SRB1), and a signaling radio bearer 2 (signaling radio bearer 2, SRB2)).

When the RRC connection setup between the terminal device and the first access network device is complete, to be specific, when the terminal device sends an RRC setup complete (RRC Setup Complete) message to the first access network device, the RRC setup complete message carries a NAS message (for example, a dedicated NAS-Message information element in the 3rd generation partnership project (3rd generation partnership project, 3GPP) technical specification (technical specification) TS 38.331). The NAS message is for communicating terminal device-specific NAS information between the terminal device and the core network device, and an RRC layer only transparently transmits the NAS message. In this application, the NAS message sent by the terminal device to the first access network device when the RRC setup is complete is referred to as an uplink NAS message (also referred to as an initial NAS message in some scenarios). For example, in an NR system, the uplink NAS message in the RRC setup complete message includes a registration request (Registration Request), and the registration request is for initiating an initial registration request to the core network.

Step 203: The terminal device stores a context of the terminal device based on the first indication information.

It should be noted that the terminal device may perform step 203 after performing step 202, or may perform step 203 in a process of performing step 202. This is not limited herein.

In this step, the context (UE context) of the terminal device includes access stratum (access stratum, AS)-related information used when the terminal device accesses the first access network device, where the AS-related information is also referred to as an AS context of the terminal device. For example, the context of the terminal device includes the identification information of the terminal device configured by the first access network device for the terminal device, for example, the C-RNTI configured by the first access network device; resource-related information configured by the first access network device for the terminal device, for example, time-frequency resource-related information (for example, cell resource configuration information (the cell group configuration)) and bearer-related information (for example, information related to the SRB0 and the SRB 1 in a radio bearer configuration (radio bearer configuration)) that are configured by the first access network device for the terminal device; and identification information, for example, a cell global identity (cell global identity, CGI) or a physical cell identifier (physical cell identifier, PCI), of a cell accessed by the terminal device. Optionally, the AS-related information further includes one or more of time information about access of the terminal device to the first access network device, geographical area information about the access of the terminal device to the first access network device, and a TAC broadcast by the first access network device when the terminal device accesses the first access network device.

Optionally, the context of the terminal device further includes non-access stratum (non-access stratum, NAS)-related information of the terminal device, where the NAS-related information is also referred to as a NAS context of the terminal device, for example, an uplink NAS message that has been sent by the terminal device and a related NAS timer that has been started by the terminal device.

Optionally, the context of the terminal device further includes the first indication information. For example, if the context of the terminal device includes the identifier indicating that there is no CN connection or the identifier of the store and forward mode, it indicates that the first access network device accessed by the terminal device cannot forward a NAS message of the terminal device to the core network currently.

Optionally, the context of the terminal device is a context maintained until the first access network device stops providing a service. For example, from a moment at which the terminal device starts to access the first access network device, the terminal device may continuously record the context of the terminal device. After the terminal device successfully accesses the first access network device, the terminal device also continuously updates the context of the terminal device until the first access network device stops providing the service for the terminal device. That the first access network device stops providing the service for the terminal device may be that the terminal device cannot receive a signal from the first access network device. Alternatively, the first access network device may stop providing the service for the terminal device after the terminal device sends the RRC setup complete (RRC Setup Complete) message to the first access network device or after the terminal device receives an RRC release message sent by the first access network device.

Optionally, when the first access network device stops providing the service for the terminal device, if the terminal device does not receive the RRC release message sent by the first access network device, or the terminal device receives the RRC release message sent by the first access network device but the RRC release message carries indication information indicating the terminal device to store the context, the terminal device continues to store the context of the terminal device.

The terminal device can determine, based on the first indication information from the first access network device, that the first access network device is incapable of exchanging the information with the core network, and the terminal device stores the context of the terminal device based on the first indication information in the process of setting up the connection to the first access network device (or after the connection is established). For example, the terminal device continuously records the context of the terminal device from the moment at which the terminal device starts to access the first access network device, until the first access network device stops providing the service for the terminal device. Therefore, when the first access network device stops providing the service for the terminal device, the context of the terminal device records the access-related information (for example, the C-RNTI, the information related to the SRB0, and the information related to the SRB1 that are configured by the first access network device) used when the terminal device accesses the first access network device. This helps the terminal device reuse an existing access-related configuration based on the context of the terminal device to access an access network device (for example, the second access network device described below) that can provide a service for the terminal device, to reduce signaling overheads for configuring a resource by the access network device for the terminal device, improve efficiency of accessing the access network device by the terminal device, and shorten a delay in setting up a connection to a network side by the terminal device.

Step 204: The first access network device stores a context of the terminal device.

It should be noted that the first access network device may perform step 204 after performing step 202, or may perform step 204 in a process of performing step 202. This is not limited herein. It should be further noted that there is no specific limitation on a chronological order between step 203 and step 204. For example, the terminal device first performs step 203, and then the first access network device performs step 204. For another example, the first access network device first performs step 204, and then the terminal device performs step 203. For another example, the first access network device performs step 204 while the terminal device performs step 203.

In this step, the context of the terminal device includes the access stratum AS-related information configured for the terminal device when the terminal device accesses the first access network device. The context of the terminal device further includes non-access stratum NAS-related information that is sent by the terminal device to the first access network after the terminal device accesses the first access network device and that needs to be transparently transmitted to the core network. Optionally, the context of the terminal device is a context maintained until the first access network device stops providing the service. For details, refer to related descriptions in step 203. The details are not described herein again.

It should be noted that the context that is of the terminal device and that is stored in the first access network device may be used when the first access network device sets up a connection to the terminal device again, or may be sent to the core network device, so that the core network device sends the context to another second access network device that can provide a service for the terminal device, where the context is used when the second access network device sets up a connection to the terminal device.

It should be further noted that when a coverage area of the first access network device leaves a geographical area in which the terminal device is located, the first access network device stops providing the service for the terminal device. After the first access network device stops providing the service for the terminal device, the terminal device may perform step 205.

Step 205: The terminal device sets up the connection to the second access network device based on the context of the terminal device.

Step 205 is an optional step.

**In** this step, the context of the terminal device is information used by the terminal device to access the second access network device after the first access network device stops providing the service for the terminal device. In other words, after the first access network device stops providing the service for the terminal device, the terminal device may set up the connection to the second access network device by using the context of the terminal device.

The second access network device is an access network device that has the context of the terminal device. For example, the second access network device stores the context of the terminal device. It should be noted that the context that is of the terminal device and that is in the second access network device is the context that is of the terminal device and that is stored by the first access network device when the terminal device accesses the first access network device.

It should be noted that the second access network device is an access network device that moves to the geographical area in which the terminal device is located. For example, after the first access network device leaves the geographical area in which the terminal device is located (in other words, after the first access network device moves out of a physical area in which the first access network device can provide the service for the terminal device), to be specific, when the first access network device cannot continue to provide the service for the terminal device, and when the second access network device moves to the geographical area in which the terminal device is located (in other words, the second access network device moves to a geographical area in which the second access network device can provide the service for the terminal device), to be specific, when the second access network device can provide the service for the terminal device, the terminal device may receive system information of the second access network device, so that the terminal device may autonomously determine to access the second access network device, or may trigger access to the second access network device under an indication of the second access network device.

It should be further noted that the second access network device and the first access network device may be a same access network device, or may be different access network devices. The following separately provides descriptions.

In an implementation 1, the second access network device and the first access network device are a same access network device. For example, after the first access network device stops providing the service for the terminal device for a period of time, the first access network device moves again to the geographical area in which the terminal device is located, and the terminal device sets up a connection to the first access network device again. In this implementation, the context that is of the terminal device and that is stored in the second access network device is the context that is of the terminal device and that is stored in the first access network device (for example, the context that is of the terminal device and that is stored by the first access network device in step 204). The terminal device may trigger the setup of the connection to the first access network device (namely, the second access network device) in any one of the following implementations:
In an implementation 1.1 of this implementation 1, the terminal device determines, based on content of the system information from the first access network device, whether to trigger the access to the first access network device. Specifically, the first access network device broadcasts, in the system information, cell identification information of each cell of the first access network device, and the terminal device receives the system information for each cell. If the cell identification information read by the terminal device from the system information is the same as cell identification information that is of the first cell and that is stored in the context of the terminal device, the terminal device triggers access to the first cell of the first access network device.

In this implementation, the cell identification information that is of the first cell and that is stored in the context of the terminal device indicates that the first cell is a cell previously accessed by the terminal device (for example, a cell accessed by the terminal device when the first access network device previously provided the service for the terminal device). The context of the terminal device may record related configuration information for accessing the first cell by the terminal device. Therefore, a probability of accessing the first cell by the terminal device based on the context of the terminal device is high. This helps improve efficiency of accessing the first access network device by the terminal device.

In another implementation 1.2 of this implementation 1, the terminal device triggers the access to the first access network device based on indication information from the first access network device. Specifically, the first access network device may send second indication information to the terminal device. The second indication information indicates the terminal device to initiate access. This may also be understood as: The second indication information indicates the terminal device to trigger the access to the first access network device. After the terminal device receives the second indication information from the first access network device, the terminal device triggers the access to the first access network device based on the second indication information. The first access network device may send the second indication information only once, or may periodically send the first indication information for a plurality of times until the terminal device successfully accesses the first access network device. This is not limited in this embodiment.

Optionally, the terminal device first performs downlink synchronization with the first cell of the first access network device, receives the second indication information, and triggers, based on the second indication information, access to the first cell of the first access network device. For example, the second indication information may be a physical downlink control channel order (physical downlink control channel order, PDCCH order) that is sent to the terminal device and that is scrambled by using the identification information (for example, the C-RNTI or first identification information, where the first identification information uniquely identifies the terminal device in the first access network device and is specifically described in step 302.4 below, and details are not described herein) of the terminal device. If the terminal device receives the second indication information in the first cell, the terminal device triggers the access to the first cell. The first cell is a cell stored in the context of the terminal device.

It should be noted that the terminal device triggers access to a cell in which the first access network device sends the second indication information and the terminal device receives the second indication information. Therefore, the terminal device may access a same cell of the first access network device twice, or may access different cells of the first access network device.

In this embodiment, after the terminal device triggers the access to the first access network device in the foregoing implementation 1.1 or implementation 1.2, because the terminal device stores the context of the terminal device, and the first access network device stores the context of the terminal device, the terminal device may set up the connection to the first access network device again by using the AS-related information that is in the context of the terminal device and that is used when the terminal device accesses the first access network device. Specifically, the terminal device initiates random access to the first cell of the first access network device and performs uplink synchronization. After the uplink and downlink synchronization succeed, the terminal device and the first access network device perform subsequent transmission by using the AS-related information in the context of the terminal device. In other words, the terminal device may perform subsequent transmission by using a resource configuration (for example, a time-frequency resource configuration and/or a bearer configuration) used when the terminal device accessed the first access network device last time, and does not need to perform initial RRC setup with the first access network device again. The subsequent transmission may be exchanging a NAS message, or may be exchanging a configuration for the terminal device. For example, after the terminal device completes the uplink and downlink synchronization with the first access network device, the terminal device directly performs transparent transmission of the NAS message with the first access network device subsequently. For another example, after the terminal device completes the uplink and downlink synchronization with the first access network device, the first access network device first initiates, to the terminal device, a configuration message for updating a configuration in the current context of the terminal device. After the update succeeds, the terminal device and the first access network device perform subsequent NAS transparent transmission.

In another implementation 2, the second access network device and the first access network device are different access network devices. For example, after the first access network device stops providing the service for the terminal device, the second access network device (for example, an access network device having a same movement trajectory as the first access network device) moves to a geographical area in which the second access network device can serve the terminal device, and then the terminal device sets up the connection to the second access network device. Specifically, the second access network device may immediately provide the service for the terminal device after the first access network device stops providing the service for the terminal device, or may provide the service for the terminal device after a period of time since the first access network device stops providing the service for the terminal device. This is not limited herein. In addition, the second access network device is an access network device that moves after the first access network device to the geographical area in which the terminal device is located. A specific ranking of the second access network device in access network devices that move after the first access network device to the geographical area in which the terminal device is located is not limited herein. In this implementation, the context that is of the terminal device and that is stored in the second access network device is from the first access network device. For example, after storing the context of the terminal device, the first access network device forwards the context to the second access network device through the core network device. The terminal device may trigger the setup of the connection to the second access network device in any one of the following implementations:
In an implementation 2.1 of this implementation 2, the terminal device determines, based on content of the system information from the second access network device, whether to trigger the access to the second access network device. Specifically, the second access network device stores the context of the terminal device, the context of the terminal device includes cell identification information of the first cell, and the first cell is a cell previously accessed by the terminal device in the first access network device. The second access network device broadcasts the cell identification information of the first cell in the system information, to indicate a terminal device that previously accessed the first cell to trigger access to the second access network device. If the terminal device receives the cell identification information of the first cell in the system information of the second access network device, and the context of the terminal device has stored the cell identification information of the first cell, it indicates that the terminal device previously accessed the first cell, and a cell in the second access network device can replace the first cell to continue to provide a service for the terminal device. In this case, the terminal device triggers the access to the second access network device based on the stored terminal context.

Optionally, the terminal device accesses a second cell of the second access network device based on the cell identification information of the first cell from the second access network device. The second cell is a cell in which the second access network device broadcasts the cell identification information of the first cell. For example, the second access network device broadcasts the cell identification information of the first cell in the second cell, and the terminal device triggers access to the second cell when receiving the second indication information in the second cell.

In another implementation 2.2 of this implementation 2, the terminal device triggers the access to the second access network device based on indication information from the second access network device. Specifically, the second access network device may send third indication information to the terminal device. The third indication information indicates the terminal device to initiate access. This may also be understood as: The third indication information indicates the terminal device to trigger the access to the second access network device. Optionally, the third indication information may alternatively indicate that the second access network device stores the context of the terminal device. After the terminal device receives the third indication information from the second access network device, the terminal device triggers the access to the second access network device based on the third indication information. The second access network device may send the third indication information only once, or may periodically send the third indication information for a plurality of times until the terminal device successfully accesses the second access network device. This is not limited in this embodiment.

Optionally, the terminal device triggers access to a second cell of the second access network device based on the third indication information. For example, if the second access network device broadcasts the third indication information in the second cell, and the terminal device receives the third indication information in the second cell, the terminal device triggers the access to the second cell. The second cell may be any cell in the second access network device.

Optionally, the third indication information may be a physical downlink control channel order (PDCCH Order) that is sent to the terminal device and that is scrambled by using the identification information (for example, the C-RNTI or first identification information) of the terminal device. Alternatively, the third indication information may be indication information indicating a terminal device that stores the cell identification information of the first cell in a context of the terminal device. For example, the third indication information may be the cell identification information of the first cell or information indicating the first cell.

For example, when contexts that are of a plurality of terminal devices and that are stored in the second access network device include cell identifiers of cells that previously accessed by the plurality of terminal devices, the third indication information sent by the second access network device may be cell identification information of the plurality of cells, and each piece of cell identification information indicates a cell that was previously accessed by a corresponding terminal device in the plurality of terminal devices.

In this embodiment, after the terminal device triggers the access to the second access network device in the foregoing implementation 2.1 or implementation 2.2, because the terminal device stores the context of the terminal device, and the second access network device stores the context of the terminal device, the terminal device may set up the connection to the second access network device by using the context of the terminal device. Specifically, the terminal device initiates random access to the second cell of the second access network device and performs uplink synchronization. After the uplink and downlink synchronization succeed, the terminal device and the second access network device perform subsequent transmission by using the AS-related information in the context of the terminal device.

For example, the terminal device sends a random access preamble to the second access network device, and the second access network device sends a random access response to the terminal device after receiving the random access preamble from the terminal device, so that the second access network device completes uplink time synchronization with the terminal device. Then, the terminal device may determine, by using the time-frequency resource-related information and the bearer-related information in the context, a time-frequency resource and a radio bearer for communicating with the second access network device. Optionally, the terminal device may send an uplink NAS message to the second access network device through the foregoing time-frequency resource and radio bearer, so that the second access network device exchanges the NAS message of the terminal device with the core network device when the second access network device is capable of setting up a connection to the core network device, and the terminal device can access the network.

In this embodiment, the terminal device can determine, based on the first indication information from the first access network device, that the first access network device has not established the connection to the core network device, and the terminal device stores the context of the terminal device based on the first indication information in the process of setting up the connection to the first access network device (or after the connection is established). Therefore, when the first access network device stops providing the service for the terminal device, the context of the terminal device records the access-related information (for example, the C-RNTI, the information related to the SRB0, and the information related to the SRB1 that are configured by the first access network device) used when the terminal device accesses the first access network device, and the terminal device can communicate with the second access network device by continuing to use the configuration (for example, the time-frequency resource and the radio bearer that have been configured for the terminal device) in the context of the terminal device without performing initial RRC setup again in the second access network device by the terminal device. Therefore, this helps reduce signaling overheads for setting up the connection to the second access network device, improve efficiency of accessing the second access network device by the terminal device, and shorten the delay in setting up the connection to the network side by the terminal device.

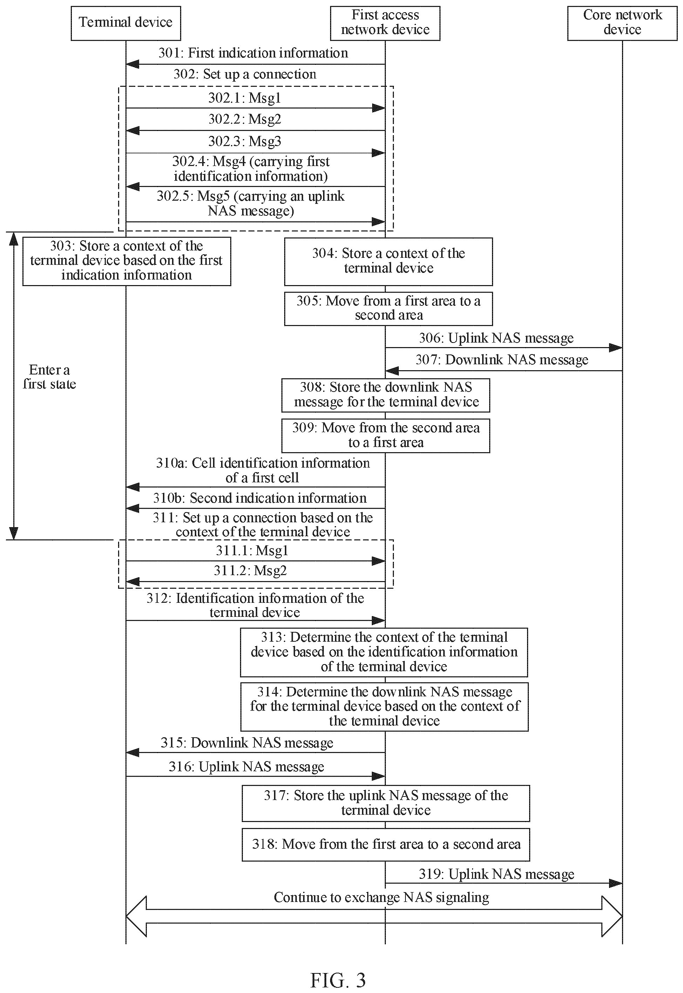

With reference to FIG. 3, the following further describes the communication method provided in this application. In this embodiment, a second access network device and a first access network device are a same access network device. For example, only the first access network device provides a service for a terminal device. Specifically, the first access network device, the terminal device, and a core network device perform the following steps.

Step 301: The first access network device broadcasts first indication information.

Correspondingly, the terminal device receives the first indication information. For descriptions of the first indication information, refer to step 201. Details are not described herein again.

Optionally, the first access network device broadcasts the first indication information in a first area, where the first area is an area in which the access network device is incapable of exchanging information with the core network device. For example, the first area is an area not covered by an NTN gateway. Therefore, the first access network device cannot successfully set up a connection to the core network device through the NTN gateway in the first area. A geographical area in which the terminal device is located is in the first area, in other words, the geographical area in which the terminal device is located is an area not covered by the NTN gateway. A concept relative to the first area is a second area. The first access network device does not broadcast the first indication information in the second area. The second area is an area in which the access network device is capable of exchanging information with the core network device. For example, the second area is an area covered by an NTN gateway. Therefore, the first access network device is capable of successfully setting up a connection to the core network device through the NTN gateway in the second area. For example, the second area may be a 1^{st} area that is covered by an NTN gateway and to which the first access network device moves on an orbit after the first access network device leaves the terminal device, or may be an area, on an orbit, that is to enter a location of the terminal device and that is covered by an NTN gateway. This is not limited herein.

It should be noted that, if the terminal device can receive the first indication information from the first access network device, it indicates that the first access network device does not successfully set up the connection to the core network device currently. In this application, the first access network device stores signaling from the terminal device in the first area, and forwards, to the core network device after the first access network device moves to the second area, the signaling from the terminal device. This signaling transmission mode is referred to as a store and forward (store and forward) mode. The terminal device that receives the first indication information may be referred to as a terminal in the store and forward mode, and the geographical area in which the terminal device is located may be referred to as a geographical area in the store and forward mode.

Optionally, after an AS of the terminal device reads the first indication information in system information, the AS of the terminal device notifies a NAS of the terminal device to make a first NAS timer of the terminal device take effect or delay starting a second NAS timer of the terminal device.

In this step, the second NAS timer is a NAS timer used by the terminal device when an access network device (for example, the first access network device) is capable of setting up a connection to the core network device. This may also be understood as: The second NAS timer is a NAS timer used by the terminal device when the terminal device does not receive the first indication information from an access network device (for example, the first access network device); the second NAS timer is a NAS timer used by the terminal device when the terminal device is not in the store and forward mode; or the second NAS timer is a NAS timer used by the terminal device when the terminal device is not located in the geographical area in the store and forward mode. The second NAS timer is a conventional NAS timer that is in a terrestrial network TN and that has been defined in a current protocol (for example, TS 24.501 for a 5G NAS timer). The second NAS timer is not specifically a single timer, and there may be different second NAS timers for different types of NAS messages. For example, when the NAS message is a registration request (Registration Request) message, the second NAS timer is T3510. When the terminal device sends the registration request message, the terminal device starts T3510. When the terminal device receives a registration reject (Registration Reject) message or a registration accept (Registration Accept) message, the terminal device stops T3510. In addition, the second timer may alternatively be another NAS timer, for example, T3511, that is defined in the protocol and that is used by the terminal device. This is not enumerated one by one herein.

In this step, the first NAS timer is a NAS timer used by the terminal device when an access network device (for example, the first access network device) is incapable of setting up a connection to the core network device. This may also be understood as: The first NAS timer is a NAS timer used by the terminal device when the terminal device receives the first indication information from the first access network device; the first NAS timer is a NAS timer used by the terminal device when the terminal device is in the store and forward mode; or the first NAS timer is a NAS timer used by the terminal device when the terminal device is located in the geographical area in the store and forward mode. The first NAS timer is not specifically a single timer, and there may be different first NAS timers based on different types of NAS messages. For example, when the NAS message is a registration request (Registration Request) message, the first NAS timer is a NAS timer corresponding to the registration request message. When the terminal device sends the registration request, the terminal device starts the first NAS timer. When the terminal device receives a registration reject (Registration Reject) message or a registration accept (Registration Accept) message, the terminal device stops the first NAS timer.

It should be noted that the first NAS timer may be a newly defined timer independent of the second NAS timer. Optionally, duration of the first NAS timer is greater than duration of the second NAS timer. For example, the first NAS timer may be a timer obtained by newly adding a duration offset based on the second NAS timer. Using an example in which the NAS message is the registration request (Registration Request) message, the second NAS timer corresponding to the registration request message is T3510, and the first NAS timer corresponding to the registration request message may be T3510-new that is newly defined and that is dedicated to a non-terrestrial network NTN. For example, the terminal device uses T3510 in a TN communication process, and uses T3510-new in an NTN communication process. If default duration of the second NAS timer T3510 in the protocol is 15s, the first NAS timer T3510-new may be a NAS timer whose duration is 20s and that is obtained by adding the duration offset (for example, 5s) based on the second NAS timer T3510.

It should be noted that, that the NAS of the terminal device makes the first NAS timer take effect means: When starting a NAS timer, the terminal device starts the first NAS timer instead of starting a NAS timer (for example, the second NAS timer) in a conventional technology. For example, the terminal device starts the first NAS timer when sending an uplink NAS message, instead of complying with a conventional technical solution to starting the second NAS timer when the uplink NAS message is sent.

It should be further noted that, that the terminal device delays starting the second NAS timer means: The terminal device does not immediately start the second NAS timer at a moment at which a NAS timer should be started in a conventional technology, but starts the second NAS timer after a delay of a period of time (for example, first duration). For example, the terminal device starts the second NAS timer after the first duration since the uplink NAS message is sent, instead of complying with a conventional technical solution to starting the second NAS timer immediately when the uplink NAS message is sent.

Optionally, the first access network device may send first time information to the terminal device. Correspondingly, the terminal device may further receive the first time information from the first access network device. The first time information may be carried in the system information, or may be delivered to the terminal device by using dedicated signaling for the terminal device. A specific carrying form is not limited. The first time information is used by the terminal device to determine the duration of the first NAS timer or the first duration. The terminal device may convert the first time information into the duration of the first NAS timer or the first duration according to an agreed algorithm. For example, the first time information may be a moment at which the first access network device arrives, next time, at the geographical area in which the terminal device is located, may be duration for which the first access network device revolves around the orbit, or may be ephemeris information. This is not limited herein. The ephemeris information (also referred to as ephemeris data (ephemeris data) or an ephemeris) indicates orbital information of an operating satellite. The terminal device may determine a location of the satellite based on the orbital information. For example, the ephemeris information may be represented in a two-line orbital element (two-line orbital element, TLE) format.

Optionally, if the first access network device broadcasts the first indication information in the first cell, the first access network device may further broadcast cell identification information of the first cell in the first cell. Correspondingly, the terminal device may further receive, in the first cell, the cell identification information of the first cell from the first access network device. Identification information of the first access network device may be a satellite identifier. The cell identification information of the first cell may be a cell global identity (cell global identity, CGI). The CGI is bound to the first access network device, but is not bound to a ground area.

Step 302: The terminal device sets up a connection to the first access network device.

For example, the terminal device sets up the connection to the first access network device located in the first area.

Using a four-step random access procedure as an example, the terminal device sets up the connection to the first access network device through the following steps:
Step 302.1: The terminal device sends a message 1 (message 1, Msg1) to the first access network device.

The Msg1 includes a random access preamble (random access preamble, RAP). A main function of the RAP is to notify the first access network device that there is a random access request and enable the first access network device to estimate a transmission delay between other terminal devices, so that the first access network device can calibrate an uplink timing advance (uplink timing advance) and notify the terminal device of calibration information by using a timing advance command.

Step 302.2: The first access network device sends a message 2 (message 2, Msg2) to the terminal device.

The Msg2 includes a random access response (random access response, RAR), and the RAR includes a temporary cell radio network temporary identifier (temporary cell radio network temporary identifier, T-CRNTI) allocated by the first access network device to the terminal device and the uplink timing advance.

Step 302.3: The terminal device sends a message 3 (message 3, Msg3) to the first access network device.

During initial network access, the Msg3 is an RRC setup request (RRC Setup Request) message, and includes identification information (for example, a temporary mobile subscriber identity (temporary mobile subscription identity, TMSI) or a random number) of the terminal device and an RRC setup cause value.

Step 302.4: The first access network device sends a message 4 (message 4, Msg4) to the terminal device.

During the initial access, the Msg4 sent by the first access network device to the terminal device may include a contention resolution message and an RRC setup (RRC Setup) message. In the RRC setup message, a cell group configuration (cell group configuration) (TS 38.331, section 5.3.5.5) and a radio bearer configuration (radio bearer configuration) (TS 38.331 section 5.3.5.6) are configured, or a dedicated radio bearer configuration (dedicated radio bearer configuration) (TS 36.331 section 5.3.3) is configured, and a cell radio network temporary identifier C-RNTI is set to the T-CRNTI in step 302.2.

Optionally, the Msg4 further includes first identification information, and the first identification information uniquely identifies the terminal device in the first access network device. This may also be understood as: The first access network device in different locations on the orbit may uniquely identify the terminal device by using the first identification information. In other words, regardless of which location on the orbit the first access network device moves to and how many terminal devices have accessed the first access network device, the first identification information can uniquely identify the foregoing terminal device.

Optionally, a length of the first identification information is greater than a length of the cell radio network temporary identifier C-RNTI.

It should be noted that, as the first access network device moves, a large quantity of terminal devices may access the first access network device at different moments. As a result, one terminal device cannot be uniquely identified by using the C-RNTI only. Therefore, in addition to allocating the C-RNTI to the terminal device, the first access network device may further allocate the first identification information to the terminal device, so that the terminal device can be uniquely identified in the first access network device. This helps the first access network device find a context of the terminal device by using the first identification information when the first access network device arrives, next time, at the geographical area in which the terminal device is located.

Step 302.5: The terminal device sends a message 5 (message 5, Msg5) to the first access network device.

The Msg5 is an RRC setup complete (RRC Setup Complete) message, and the Msg5 carries an uplink NAS message (for example, the uplink NAS message during the initial access is the registration request (Registration Request) message). When the terminal device includes the uplink NAS message in the to-be-sent Msg5, the terminal device immediately starts the first NAS timer based on a type of the uplink NAS message, or starts the second NAS timer after the first duration based on a type of the uplink NAS message. For descriptions of the first NAS timer and the second NAS timer, refer to related descriptions in step 301. Details are not described herein again. A processing manner used after the first NAS timer expires or the second NAS timer expires is the same as that used after the second NAS timer expires. For details about a manner used after a NAS timer in a 5G system expires, refer to section 10.2 in TS 24.501.

Optionally, after the terminal device sends the Msg5, or during running of the first NAS timer or the second NAS timer, the terminal device is in a new RRC state. The new RRC state is different from an RRC idle state, an RRC inactive state, and an RRC connected state in a conventional technology. For ease of description, the new RRC state is referred to as a first state below. It should be understood that the "first state" is merely a name example enumerated for ease of description. A name of the RRC state is not limited in this application.

In an implementation, in the first state, the terminal device maintains a context of the terminal device (for example, a context of the terminal device stored in step 303), and the terminal device may perform cell measurement, perform downlink synchronization with a cell, and read the system information, but does not trigger a radio link failure (radio link failure, RLF) procedure or an RRC re-setup procedure. Further, the terminal that enters the first state may temporarily disable physical layer search, signal detection, and the like after the first access network device stops the service, and enable the physical layer search, the signal detection, and the like when or before the first access network device arrives again at the geographical area in which the terminal device is located (for example, the terminal device may determine, by using the first time information, the moment at which the first access network device arrives at the geographical area).

In another implementation, in the first state, the terminal device maintains a context of the terminal device (for example, a context of the terminal device stored in step 303). Before the first access network device arrives again at an area in which the first access network device can cover the terminal device, the terminal device does not perform cell measurement, perform downlink synchronization with a cell, or read the system information. When or after the first access network device arrives again at the area in which the first access network device can cover the terminal device, the terminal device performs cell measurement, performs downlink synchronization with the cell, and reads the system information, but does not trigger a radio link failure (radio link failure, RLF) procedure or an RRC re-setup procedure. In this implementation, when the terminal device enters the first state, the terminal device may first disable physical layer search, signal detection, and the like, and enable the physical layer search, the signal detection, and the like when or before the first access network device arrives again at the geographical area in which the terminal device is located (for example, the terminal device may determine, by using the first time information, the moment at which the first access network device arrives at the geographical area).

The terminal device that enters the first state does not trigger the radio link failure RLF procedure or the RRC re-setup procedure. This helps the terminal device reuse an existing RRC connection-related configuration, and reduces signaling overheads for setting up an RRC connection again. In addition, the terminal device in the first state may temporarily disable the physical layer search, the signal detection, and the like. This helps reduce energy consumption of the terminal device.

Optionally, when the terminal device initiates connection setup to the first access network device again, the terminal device exits the first state.

Step 303: The terminal device stores the context of the terminal device based on the first indication information.

The context of the terminal device includes access stratum AS-related information used when the terminal device accesses the first access network device, where the AS-related information is also referred to as an AS context of the terminal device. The AS context of the terminal device includes a cell identifier of a serving cell. For example, if the terminal device accesses the first cell of the first access network device, the cell identifier of the serving cell is a cell identifier of the first cell. The AS context of the terminal device further includes identification information of the terminal device. For example, the identification information of the terminal device may be the C-RNTI configured by the first access network device for the terminal device. For another example, when the first access network device has configured the first identification information for the terminal device in the access process, the identification information of the terminal device may alternatively be the first identification information. The AS context of the terminal device further includes time-frequency resource-related information (for example, the cell resource configuration information (cell group configuration)) configured by the first access network device for the terminal device and bearer-related information (for example, information related to an SRB0 and information related to an SRB1 in the radio bearer configuration (radio bearer configuration)) configured by the first access network device for the terminal device.

Optionally, the context of the terminal device further includes non-access stratum (non-access stratum, NAS)-related information of the terminal device, where the NAS-related information is also referred to as a NAS context of the terminal device, for example, an uplink NAS message that has been sent by the terminal device, a related NAS timer that has been started by the terminal device, a selected PLMN identity (selected PLMN-Identity), or information related to a registered core network device (for example, a registered AMF).

It should be noted that the terminal device may perform step 303 after performing step 302, or may perform step 303 in a process of performing step 302. This is not limited herein.

For example, from a moment at which the terminal device starts to access the first access network device, the terminal device may continuously record the context of the terminal device. After the terminal device successfully accesses the first access network device, the terminal device also continuously updates the context of the terminal device until the first access network device stops providing the service for the terminal device. For example, when the first access network device initiates the Msg1, the terminal device records at least one of the following: the cell identification information of the first cell, a public land mobile network (public land mobile network, PLMN), and a TAC. After sending the Msg3, the terminal device records the identification information (for example, a TC-RNTI) of the terminal device and the RRC setup cause value in the context of the terminal device. For another example, after receiving the Msg4, the terminal device records the information related to the SRB1, the C-RNTI, and/or the first identification information in the context of the terminal device. For another example, after sending the Msg5, the terminal device records, in the context of the terminal device, the uplink NAS message that has been sent by the terminal device or sent uplink NAS indication information, and records the selected PLMN identity, the information related to the registered core network device, and the like that are carried in the Msg5.

In this step, the terminal device can determine, based on the received first indication information from the first access network device, that the first access network device is incapable of successfully setting up the connection to the core network device currently. Therefore, when the terminal device accesses the first access network device, the terminal device continuously records the context of the terminal device from the moment at which the terminal device starts to access the first access network device, until the first access network device stops providing the service for the terminal device. After the first access network device stops providing the service for the terminal device, the terminal device stores the context, and does not update the context based on a configuration of the first access network device until the first access network re-initiates access. When the terminal device selects another network due to a failure in accessing the first access network device and initiates access, the terminal device deletes the foregoing context. Therefore, when the first access network device stops providing the service for the terminal device, the context of the terminal device records the access-related information (for example, the C-RNTI, the first identification information, and the information related to the SRB1 that are configured by the first access network device) used when the terminal device accesses the first access network device. This helps the terminal device quickly access the first access network device when the first access network device moves again to the geographical area in which the terminal device is located.

Step 304: The first access network device stores the context of the terminal device.

It should be noted that there is no specific limitation on a chronological order between step 303 and step 304. For example, the terminal device first performs step 303, and then the first access network device performs step 304. For another example, the first access network device first performs step 304, and then the terminal device performs step 303. For another example, the first access network device performs step 304 while the terminal device performs step 303.

In this step, the context of the terminal device includes the access stratum AS-related information used when the terminal device accesses the first access network device, where the AS-related information is also referred to as the AS context of the terminal device. The AS context of the terminal device includes the cell identifier of the serving cell, the identification information (including the first identification information and/or the C-RNTI) of the terminal device, and the time-frequency resource-related information (including the cell resource configuration information (the cell group configuration) and the radio bearer configuration (radio bearer configuration)) configured by the first access network device for the terminal device. For details, refer to related descriptions in step 303. The details are not described herein again. Optionally, the AS context of the terminal device further includes geographical area information about access of the terminal device to the first access network device and/or time information about the access of the terminal device to the first access network device. The geographical area information of the terminal device indicates the geographical area in which the terminal device is located (for example, the geographical area in which the terminal device is located when the terminal device accesses the first access network device). The geographical area may be a physical area represented by longitude and latitude, or may be a TAC area (for example, an area indicated by the TAC or an area indicated by the PLMN and the TAC).

The context of the terminal device further includes the NAS-related information, where the NAS-related information is also referred to as the NAS context of the terminal device, for example, the uplink NAS message that has been sent by the terminal device, the related NAS timer that has been started by the terminal device, the selected PLMN identity (selected PLMN-Identity), or the information related to the registered core network device (for example, the registered AMF).

For example, after the first access network device receives the Msg3 from the terminal device, the first access network device sets up the context of the terminal device, and records the access stratum AS-related information until the first access network device stops providing the service for the terminal device. For example, the first access network device obtains the identification information (for example, the TMSI or the random number) of the terminal device and the RRC setup cause value in the Msg3, and records the identification information (for example, the TMSI or the random number) of the terminal device and the RRC setup cause value in the context of the terminal device. Then, the first access network device performs SRB1 resource admission and resource allocation, and records the information related to the SRB 1 in the context of the terminal device. For another example, after the first access network device allocates the C-RNTI and/or the first identification information to the terminal device by using the Msg4, the first access network device records the C-RNTI and/or the first identification information in the context of the terminal device. For another example, after the terminal device accesses the first access network device, the first access network device records the geographical area information of the terminal device and/or the time information about the access of the terminal device to the first access network device.

Step 305: The first access network device moves from the first area to the second area.

Because the first area includes the geographical area in which the terminal device is located, when the first access network device leaves the first area (in other words, the first access network device leaves the geographical area in which the terminal device is located), the first access network device stops providing the service for the terminal device. In this case, the terminal device is still in the first state. When the first access network device arrives at the second area, the first access network device is capable of successfully setting up a connection (for example, an S1/NG connection) to the core network device in the second area (or the first access network device is capable of exchanging information with the core network device in the second area), and then the first access network device exchanges NAS signaling related to the terminal device with the core network device. Specifically, the first access network device and the core network device sequentially perform step 306 and step 307.

Step 306: The first access network device sends an uplink NAS message to the core network device.

Correspondingly, the core network device receives the uplink NAS message from the first access network device.

In this step, a 1^{st} uplink NAS message received by the first access network device from the terminal device may be carried in an initial message (Initial UE Message) to be forwarded to a core network. For example, the first access network device sends the initial UE message including the registration request (Registration Request) message to the core network device. Correspondingly, the core network device receives the initial message of the terminal device from the first access network device to obtain the uplink NAS message.

Optionally, the first access network device sends fourth indication information to the core network device, where the fourth indication information indicates that the terminal device accesses the first access network device when the first access network device is incapable of exchanging information with the core network device. For example, the fourth indication information may indicate that the terminal device dynamically accesses the core network and the access network device or performs a dynamic connection to the core network and the access network device (for descriptions of the dynamic connection, refer to related descriptions in step 701 below). For example, the fourth indication information is information indicating that the terminal device is in the store and forward mode (that the terminal device is in the store and forward mode may also be referred to as that the terminal device performs access through an access network device in the store and forward mode). For example, the fourth indication information may alternatively be implemented by using information indicating a mode of the geographical area in which the terminal device is located. For example, the fourth indication information indicates that the geographical area in which the terminal device is located is the geographical area in the store and forward mode.

Optionally, after receiving the fourth indication information, the core network device is configured to, based on the fourth indication information, make a first NAS timer of the core network device take effect or delay starting a second NAS timer of the core network device.

In this step, the second NAS timer is a NAS timer used by the core network device when an access network device (for example, the first access network device) is capable of setting up a connection to the core network device. This may also be understood as: The second NAS timer is a NAS timer used by the core network device when the core network device does not receive the fourth indication information from the access network device; the second NAS timer is a NAS timer used by the core network device when the terminal device is not in the store and forward mode; or the second NAS timer is a NAS timer used by the core network device when the terminal device is not located in the geographical area in the store and forward mode. The second NAS timer is a conventional NAS timer that is in the terrestrial network TN and that has been defined in the current protocol (for example, TS 24.501 for the 5G NAS timer). The second NAS timer is not specifically a single timer, and there may be different second NAS timers for different types of NAS messages. For example, when the NAS message is an authentication request (Authentication Request) message, the second NAS timer is T3460. When the core network device sends the authentication request message, the core network device starts T3460. When the core network device receives an authentication response (Authentication Response) message, the core network device stops T3460. For example, when the NAS message is an identity request (Identity Request) message, the second NAS timer is T3470. When the core network device sends the identity request message, the core network device starts T3470. When the core network device receives an identity response (Identity Response) message, the core network device stops T3470. In addition, the second timer may alternatively be another NAS timer that is defined in a protocol and that is used by the core network device. This is not enumerated one by one herein.

In this step, the first NAS timer is a NAS timer used by the core network device when an access network device (for example, the first access network device) is incapable of setting up a connection to the core network device. This may also be understood as: The first NAS timer is a NAS timer used by the core network device when the core network device receives the fourth indication information from the first access network device; the first NAS timer is a NAS timer used by the core network device when the terminal device is in the store and forward mode; or the first NAS timer is a NAS timer used by the core network device when the terminal device is located in the geographical area in the store and forward mode. The first NAS timer is not specifically a single timer, and there may be different first NAS timers based on different types of NAS messages. For example, when the NAS message is an authentication request (Authentication Request) message, the first NAS timer is a NAS timer corresponding to the authentication request message. When the core network device sends the authentication request, the core network device starts the first NAS timer. When the core network device receives an authentication response (Authentication Response) message, the core network device stops the first NAS timer.

It should be noted that the first NAS timer may be a newly defined timer independent of the second NAS timer. Optionally, duration of the first NAS timer is greater than duration of the second NAS timer. For example, the first NAS timer may be a timer obtained by newly adding a duration offset based on the second NAS timer. Using an example in which the NAS message is the authentication request (Authentication Request) message, the second NAS timer corresponding to the authentication request message is T3460, and the first NAS timer corresponding to the authentication request message may be T3460-new that is newly defined and that is dedicated to the non-terrestrial network NTN. For example, the core network device uses T3460 in the TN communication process, and uses T3460-new in the NTN communication process. If default duration of the second NAS timer T3460 in the protocol is 10s, the first NAS timer T3460-new may be a NAS timer whose duration is 15s and that is obtained by adding the duration offset (for example, 5s) based on the second NAS timer T3460.

It should be noted that, that the core network device makes the first NAS timer take effect means: When starting a NAS timer, the core network device starts the first NAS timer instead of starting a NAS timer (for example, the second NAS timer) in a conventional technology. For example, the core network device starts the first NAS timer when sending a downlink NAS message, instead of complying with a conventional technical solution to starting the second NAS timer when the downlink NAS message is sent.

It should be further noted that, that the core network device delays starting the second NAS timer means: The core network device does not immediately start the second NAS timer at a moment at which a NAS timer should be started in a conventional technology, but starts the second NAS timer after a delay of a period of time (for example, the first duration). For example, the core network device starts the second NAS timer after the first duration since the downlink NAS message is sent, instead of complying with a conventional technical solution to starting the second NAS timer immediately when the downlink NAS message is sent.

Optionally, the first access network device may further send the first time information to the core network device. Correspondingly, the core network device may further receive the first time information from the first access network device. For descriptions of the first time information, refer to related descriptions in step 301. Details are not described herein again.

It should be noted that the fourth indication information and/or the first time information may be carried in the initial message of the terminal device to be sent to the core network device, or may be carried in another message to be sent to the core network device. This is not limited herein.

Step 307: The core network device sends a downlink NAS message to the first access network device.

Correspondingly, the first access network device receives the downlink NAS message from the core network device.

When the core network device sends the downlink NAS message to the first access network device, the core network device immediately starts the first NAS timer, or starts the second NAS timer after the first duration.

It should be noted that the core network device may send a plurality of downlink NAS messages to the first access network device currently located in the second area. For example, the core network device sends, to the first access network device, a downlink NAS message for authentication, a downlink NAS message for encryption, and a downlink NAS message for registration. Alternatively, the core network device may send one downlink NAS message to the first access network device currently located in the second area, and send another downlink NAS message to the first access network device when the first access network device moves to the second area again. For example, the core network device first sends a downlink NAS message for authentication to the first access network device currently located in the second area, sends a downlink NAS message for NAS encryption to the first access network device when the first access network device moves to the second area next time, and sends a downlink NAS message for registration acceptance to the first access network device when the first access network device moves to the second area the time after next.

Step 308: The first access network device stores the downlink NAS message for the terminal device.

After the first access network device receives the downlink NAS message from the core network device, the first access network device stores the downlink NAS message for the terminal device and the context of the terminal device correspondingly. Because the first access network device has not established a connection to the terminal device at this moment, the first access network device does not immediately deliver the downlink NAS message.

Step 309: The first access network device moves from the second area to a first area.

Because the geographical area in which the terminal device is located is in the first area, after the first access network device moves to the first area, the first access network device triggers, through step 310a or step 310b, the terminal device to perform step 311, to be specific, the first access network device triggers, through step 310a or step 310b, the terminal device to initiate access to the first access network device.

It should be noted that the first area in step 309 and the first area in step 301 to step 305 may be different physical areas, or may be a same physical area. Both the first area in step 309 and the first area in step 301 to step 305 include the physical area in which the terminal device is located.

Step 310a: The first access network device broadcasts the cell identification information of the first cell.

Correspondingly, the terminal device receives the cell identification information of the first cell from the first access network device.

Optionally, the cell identification information of the first cell may be carried in system information. For example, the first access network device broadcasts, in the system information, the cell identification information of each cell of the first access network device, and the terminal device may receive the system information that includes the cell identification information of each cell. If the cell identification information received by the terminal device from the system information is the same as the cell identification information that is of the first cell and that is stored in the context of the terminal device, the terminal device triggers access to the cell.

The cell identification information that is of the first cell and that is stored in the context of the terminal device indicates that the first cell is a cell previously accessed by the terminal device (for example, a cell accessed by the terminal device when the first access network device previously provided the service for the terminal device). The context of the terminal device may record related configuration information for accessing the first cell by the terminal device. Therefore, a probability of accessing the first cell by the terminal device based on the context of the terminal device is high. This helps improve efficiency of accessing the first access network device by the terminal device.

Step 310b: The first access network device broadcasts second indication information.

Correspondingly, the terminal device receives the second indication information from the first access network device.

The second indication information indicates the terminal device to initiate access. This may also be understood as: The second indication information indicates the terminal device to trigger the access to the first access network device. For example, the second indication information is a physical downlink control channel order (physical downlink control channel order, PDCCH order). After the terminal device receives the second indication information from the first access network device, the terminal device triggers the access to the first access network device based on the second indication information.

Optionally, the terminal device triggers the access to the first cell of the first access network device based on the second indication information. For example, if the first access network device broadcasts the second indication information in the first cell, and the terminal device receives the second indication information in the first cell, the terminal device triggers the access to the first cell. The first cell is a cell stored in the context of the terminal device.

It should be noted that the terminal device triggers access to a cell in which the first access network device broadcasts the second indication information and the terminal device receives the second indication information. Therefore, the terminal device may access a same cell of the first access network device twice, or may access different cells of the first access network device.

Step 311: The terminal device sets up a connection to the first access network device based on the context of the terminal device.

The terminal device stores the context of the terminal device, and the first access network device also stores the context of the terminal device. In addition, the context of the terminal device includes AS configuration information for the terminal device. Therefore, the terminal device and the first access network device only need to perform uplink synchronization to reuse the AS configuration information in the context to set up the connection. For example, the terminal device may first perform uplink and downlink synchronization with the first access network device, and then continue to use a configuration in the context of the terminal device to perform further communication with the first access network device, so that the first access network device may communicate with the first access network device through a time-frequency resource and/or a radio bearer resource that are/is configured in the context of the terminal device, and the first access network device does not need to perform initial RRC setup again.

For example, the terminal device sets up the connection to the first access network device through the following steps:
Step 311.1: The terminal device sends a Msg1 to the first access network device.

The Msg1 includes a random access preamble (random access preamble, RAP), and the RAP may be carried in the PDCCH order, or may be broadcast in the system information. If the RAP is carried in the PDCCH order, the RAP is allocated by the first access network device to the terminal device, and the RAP may be for contention-free random access. If the RAP is in a random access configuration broadcast in the system information, the terminal device randomly selects the random access preamble, and the terminal device may perform contention-based random access.

Step 311.2: The first access network device sends a Msg2 to the terminal device.

The Msg2 includes a random access response RAR, a temporary cell radio network temporary identifier T-CRNTI allocated by the first access network device to the terminal device, and an uplink timing advance.

Step 312: The terminal device sends the identification information of the terminal device to the first access network device.

The identification information of the terminal device is the C-RNTI and/or the first identification information stored in the context of the terminal device.

In a possible implementation, after step 311.2, the terminal device may send a C-RNTI MAC CE to the first access network device in an uplink grant of the Msg2, where a C-RNTI is the C-RNTI allocated when the terminal device initially accesses the first access network device, and is stored in the context of the terminal device.

In a possible implementation, if the first access network device configures the first identification information for the terminal device in step 302, and the context of the terminal device stores the first identification information, the terminal device sends the first identification information to the first access network device.

Step 313: The first access network device determines the context of the terminal device based on the identification information of the terminal device.

A manner in which the first access network device determines the context of the terminal device varies with an implementation of the identification information of the terminal device received by the first access network device. The following separately provides descriptions.

In a possible implementation, if the first access network device receives the first identification information from the terminal device, the first access network device determines the context of the terminal device based on the first identification information. Because the first identification information can uniquely identify the terminal device in the first access network device, the first access network device can accurately search for the context of the terminal device based on the first identification information.

In another possible implementation, the first access network device receives the cell radio network temporary identifier from the terminal device. When the context that is of the terminal device and that is stored in the first access network device includes the geographical area information about the access of the terminal device to the first access network device and/or the time information about the access of the terminal device to the first access network device, the first access network device determines the context of the terminal device based on the geographical area information about the access of the terminal device to the first access network device and/or the time information about the access of the terminal device to the first access network device, and the cell radio network temporary identifier.

In a possible example of this implementation, the context that is of the terminal device and that is stored in the first access network device includes the geographical area information about the access of the terminal device to the first access network device, and the first access network device determines the context of the terminal device based on the geographical area information about the access of the terminal device to the first access network device and the cell radio network temporary identifier.

In another possible example of this implementation, the context that is of the terminal device and that is stored in the first access network device includes the time information about the access of the terminal device to the first access network device, and the first access network device determines the context of the terminal device based on the time information about the access of the terminal device to the first access network device and the cell radio network temporary identifier.

In another possible example of this implementation, the context that is of the terminal device and that is stored in the first access network device includes the geographical area information about the access of the terminal device to the first access network device and the time information about the access of the terminal device to the first access network device, and the first access network device determines the context of the terminal device based on the geographical area information of the terminal device, the time information about the access of the terminal device to the first access network device, and the cell radio network temporary identifier.

In this embodiment, after the first access network device determines the context of the terminal device in any one of the foregoing implementations, the first access network device and the terminal device may continue to exchange a NAS message.

Step 314: The first access network device determines the downlink NAS message for the terminal device based on the context of the terminal device.

It should be noted that the first access network device may determine a plurality of downlink NAS messages for the terminal device based on the context of the terminal device, or may determine only one downlink NAS message for the terminal device based on the context of the terminal device. Optionally, a quantity of downlink NAS messages for the terminal device that are determined by the first access network device based on the context of the terminal device is the same as a quantity of downlink NAS messages that are received by the first access network device from the core network device in the second area.

Step 315: The first access network device forwards the downlink NAS message to the terminal device.

Optionally, the first access network device further updates the NAS-related information (namely, the NAS context of the terminal device) in the context of the terminal device. For example, the first access network device stores, in the context of the terminal device, the downlink NAS message forwarded to the terminal device, or the first access network device stores one piece of indication information to indicate the specific downlink NAS message forwarded by the first access network device to the terminal device.

Step 316: The terminal device sends an uplink NAS message to the first access network device.

In this step, the uplink NAS message may be a message corresponding to the downlink NAS message in step 315. For example, the uplink NAS message is a response message of the downlink NAS message. For example, if the downlink NAS message is an authentication request (Authentication Request) message, the uplink NAS message may be an authentication response (Authentication Response) message. For another example, if the downlink NAS message is a security mode command (Security Mode Command) message, the uplink NAS message may be a security mode complete (Security Mode Complete) message. For another example, if the downlink NAS message is a registration accept (Registration Accept) message, the uplink NAS message may be a registration complete (Registration Complete) message.

In addition, the uplink NAS message may alternatively be a procedure message triggered by the NAS of the terminal device. For example, when a packet data unit (packet data unit, PDU) bearer needs to be established after the initial access is complete, the uplink NAS message is a bearer establishment request (PDU session establishment request) message.

Step 317: The first access network device stores the uplink NAS message of the terminal device.

In a possible implementation, the first access network device stores the received uplink NAS message in the context of the terminal device.

In another possible implementation, the first access network device establishes a mapping relationship between the received uplink NAS message and the context of the terminal device, so that the first access network device may find, based on the context of the terminal device, the uplink NAS message that needs to be transparently transmitted to the core network device.

Step 318: The first access network device moves from the first area to a second area.

After the first access network device moves to the second area, the first access network device successfully sets up a connection to the core network device.

It should be noted that the second area in step 318 and the second area in step 305 to step 309 may be different physical areas, or may be a same physical area. The first access network device is capable of exchanging information with the core network device in both the second area in step 318 and the second area in step 305 to step 309. For example, both the second area in step 318 and the second area in step 305 to step 309 include at least one NTN gateway that can enable the first access network device to set up the connection to and perform information exchange with the core network device.

Step 319: The first access network device sends the uplink NAS message to the core network device.

It should be noted that when the first access network device determines that the core network device is a core network device stored in the context of the terminal device, the first access network device forwards the uplink NAS message to the core network device.

It should be noted that, if exchange of NAS signaling is not complete, the core network device continues to exchange the NAS signaling with the terminal device through the first access network device. For example, the core network device further sends a next downlink NAS message to the first access network device, and the first access network device stores the received downlink NAS message. After the first access network device moves to a first area, the first access network device sets up a connection to the terminal device, sends the stored downlink NAS message to the terminal device, receives, from the terminal device, an uplink NAS message returned by the terminal device, and stores the uplink NAS message. After the first access network device moves to a second area, the first access network device sets up a connection to the core network device, and sends the stored uplink NAS message to the core network device. A specific process is similar to step 307 to step 319, and details are not described herein again.

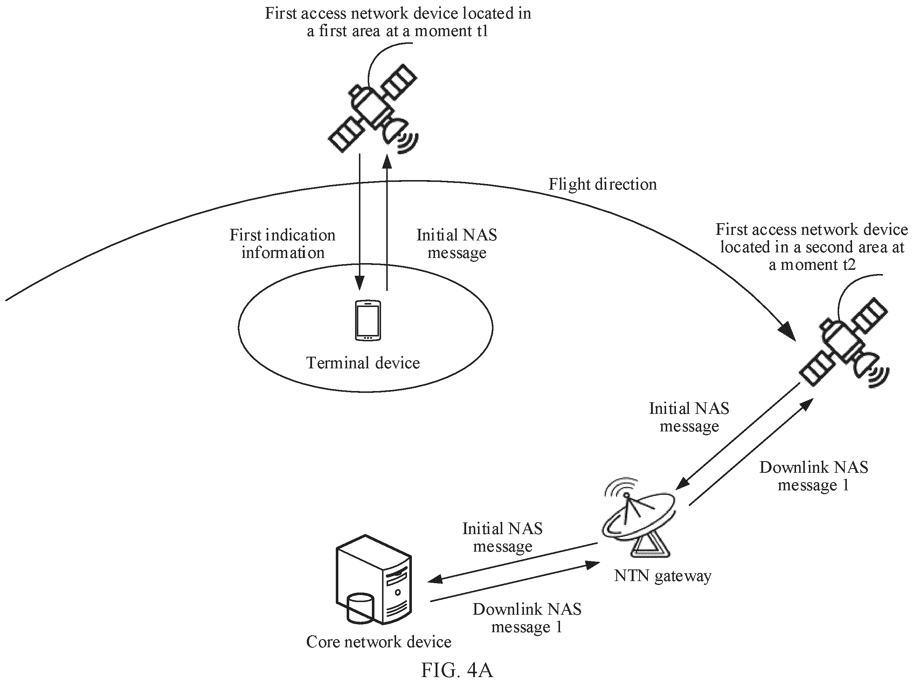

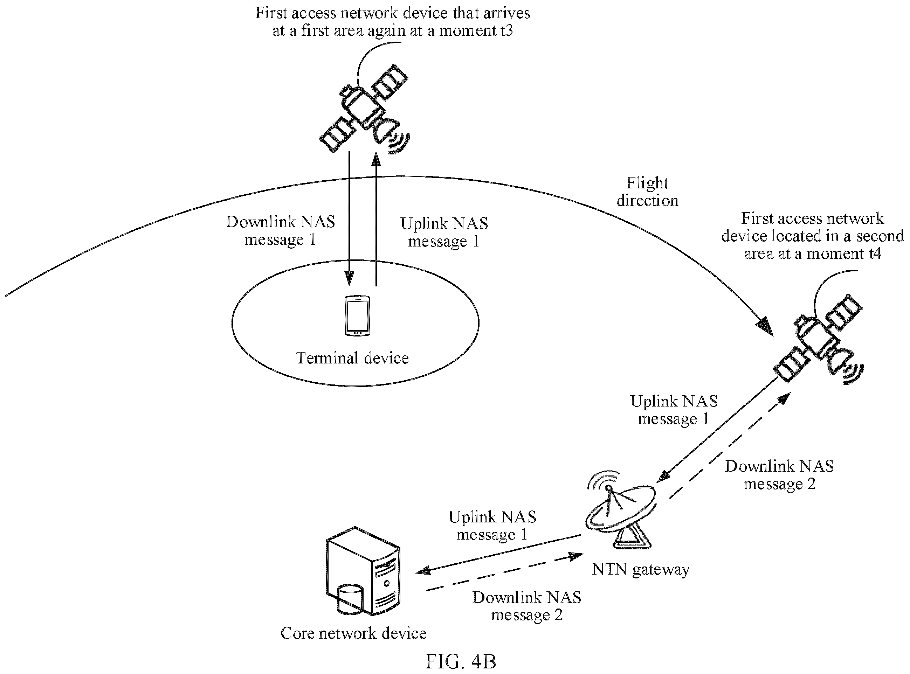

For ease of understanding, FIG. 4A and FIG. 4B are used as examples to describe the solution of this embodiment. As shown in FIG. 4A, when the first access network device is located in a first area (for example, an area not covered by an NTN gateway), the first access network device notifies, by using first indication information, the terminal device that the first access network device has not established a connection to the core network device. After the terminal device accesses the first access network device, both the terminal device and the first access network device can store a context of the terminal device, and the first access network device further stores an initial NAS message (namely, an uplink NAS message, for example, a registration request message, carried in a Msg5) received from the terminal device. After the first access network device stops providing a service for the terminal device, the first access network device moves from the first area to a second area (for example, an area covered by an NTN gateway) along an orbit. The first access network device located in the second area sets up a connection to the core network device, sends the initial NAS message to the core network device through the NTN gateway, and receives a downlink NAS message 1 from the core network device through the NTN gateway. As shown in FIG. 4B, when the first access network device moves to a first area (including a geographical area in which the terminal device is located) again, the first access network device quickly sets up a connection to the terminal device based on the stored context of the terminal device. After the connection is established, the first access network device sends the downlink NAS message 1 to the terminal device, and the terminal device returns, to the first access network device, an uplink NAS message 1 in response to the downlink NAS message 1. After the first access network device stops providing a service for the terminal device, the first access network device moves from the first area to a second area (for example, an area covered by an NTN gateway) again. The first access network device located in the second area sets up a connection to the core network device again, and sends the uplink NAS message 1 to the core network device through the NTN gateway. Optionally, if there is further NAS signaling (for example, a downlink NAS message 2) that needs to be exchanged, the first access network device may continue to exchange the NAS signaling in a similar manner. NAS registration between the terminal device and the core network succeeds through a plurality of times of NAS signaling exchange, so that the terminal device can obtain a network service.

In this embodiment, because both the terminal device and the first access network device can store the context of the terminal device to reserve the configuration information (for example, the time-frequency resource and the radio bearer) used when the terminal device accesses the first access network device, when the first access network device arrives again at the geographical area in which the terminal device is located, the terminal device and the first access network device can quickly complete the uplink and downlink synchronization based on the context of the terminal device and continue to exchange the NAS signaling, and the terminal device does not need to perform initial RRC setup again in the first access network device. Therefore, this not only helps reduce signaling overheads for setting up the connection to the first access network device, but also helps improve the efficiency of accessing the first access network device by the terminal device. Each time the first access network device arrives at the geographical area in which the terminal device is located, the first access network device can quickly accept the terminal device and continue to exchange NAS signaling with the terminal device. Therefore, a registration procedure of the terminal device on a core network side can be complete by quickly completing the exchange of the NAS signaling through the first access network device, so that the terminal device in the area not covered by the NTN gateway can also obtain the network service.

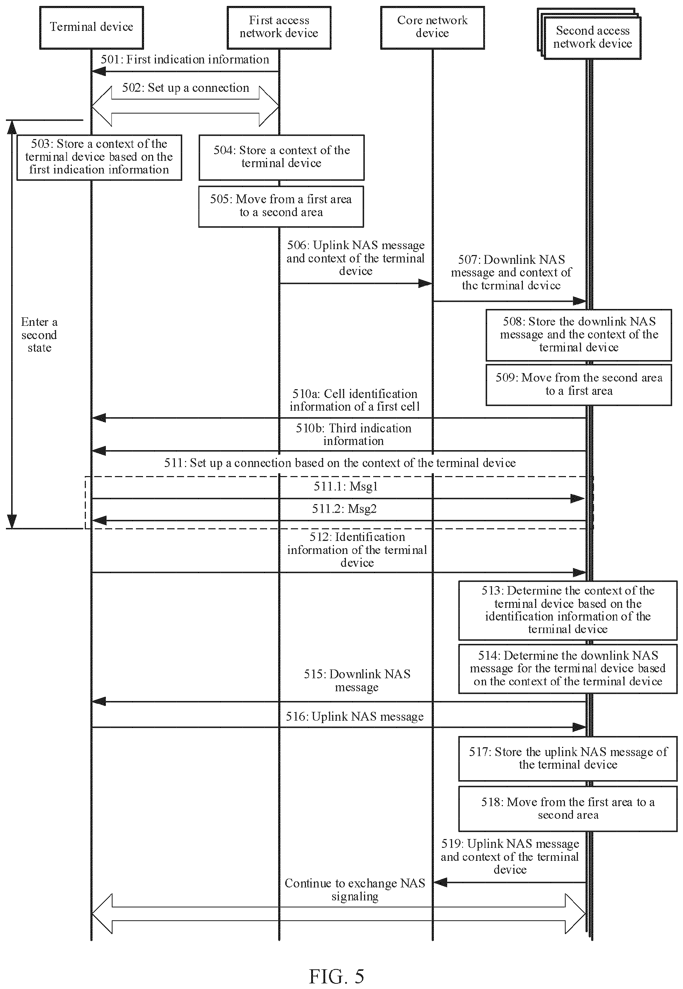

With reference to FIG. 5, the following further describes the communication method provided in this application. In this embodiment, a second access network device and a first access network device are different access network devices. For example, the first access network device and the second access network device may provide services for a terminal device at different moments. Specifically, the first access network device, the second access network device, the terminal device, and a core network device perform the following steps.

Step 501: The first access network device broadcasts first indication information.

Correspondingly, the terminal device receives the first indication information.

Step 502: The terminal device sets up a connection to the first access network device.

Optionally, after the terminal device sends a Msg5, or during running of a first NAS timer or a second NAS timer, the terminal device is in a new RRC state. The new RRC state is different from an RRC idle state, an RRC inactive state, and an RRC connected state in a conventional technology. For ease of description, the new RRC state is referred to as a second state below. It should be understood that the "second state" is merely a name example enumerated for ease of description. A name of the RRC state is not limited in this application.

In an implementation, in the second state, the terminal device maintains a context of the terminal device (for example, a context of the terminal device stored in step 503), and the terminal device may perform cell measurement, perform downlink synchronization with a cell, and read system information, but does not trigger a radio link failure (radio link failure, RLF) procedure or an RRC re-setup procedure. Further, the terminal that enters the second state may temporarily disable physical layer search, signal detection, and the like after the first access network device stops providing the service, and enable the physical layer search, the signal detection, and the like when or before the second access network device arrives again at a geographical area in which the terminal device is located (for example, the terminal device may determine, by using first time information, a moment at which the second access network device arrives at the geographical area).

In another implementation, in the second state, the terminal device maintains a context of the terminal device (for example, a context of the terminal device stored in step 503). Before the second access network device arrives again at an area in which the second access network device can cover the terminal device, the terminal device does not perform cell measurement, perform downlink synchronization with a cell, or read system information. When or after the second access network device arrives again at the area in which the second access network device can cover the terminal device, the terminal device performs cell measurement, performs downlink synchronization with the cell, and reads the system information, but does not trigger a radio link failure (radio link failure, RLF) procedure or an RRC re-setup procedure. In this implementation, when the terminal device enters the second state, the terminal device may first disable physical layer search, signal detection, and the like, and enable the physical layer search, the signal detection, and the like when or before the second access network device arrives again at a geographical area in which the terminal device is located (for example, the terminal device may determine, by using first time information, a moment at which the second access network device arrives at the geographical area).

The terminal device that enters the second state does not trigger the radio link failure RLF procedure or the RRC re-setup procedure. This helps the terminal device reuse an existing RRC connection-related configuration, and reduces signaling overheads for setting up an RRC connection again. In addition, the terminal device in the second state may temporarily disable the physical layer search, the signal detection, and the like. This helps reduce energy consumption of the terminal device.

Optionally, when the terminal device initiates connection setup to the second access network device again, the terminal device exits the second state.

Step 503: The terminal device stores the context of the terminal device based on the first indication information.

Step 504: The first access network device stores a context of the terminal device.

It should be noted that there is no specific limitation on a chronological order between step 503 and step 504. For example, the terminal device first performs step 503, and then the first access network device performs step 504. For another example, the first access network device first performs step 504, and then the terminal device performs step 503. For another example, the first access network device performs step 504 while the terminal device performs step 503.

Step 505: The first access network device moves from a first area to a second area.

When the first access network device moves to the second area (namely, an area in which the first access network device is capable of exchanging information with the core network device), the first access network device may set up a connection to and exchange the information with the core network device through an NTN gateway.

In this embodiment, step 501 to step 505 are similar to step 301 to step 305 in the embodiment corresponding to FIG. 3. For details, refer to related descriptions in step 301 to step 305. The details are not described herein again.

Step 506: The first access network device sends an uplink NAS message and the context of the terminal device to the core network device.

Correspondingly, the core network device receives the uplink NAS message and the context of the terminal device from the first access network device.

The context of the terminal device is used by the second access network device determined by the core network device to set up a connection to the terminal device. For specific descriptions of the context of the terminal device, refer to related descriptions in step 304. Details are not described herein again. For specific descriptions of the uplink NAS message, refer to related descriptions in step 306. Details are not described herein again. It should be noted that the first access network device may send the uplink NAS message and the context of the terminal device to the core network device by using one message. For example, the first access network device sends an initial message (Initial UE Message) of the terminal device including the uplink NAS message and the context of the terminal device to the core network device. Alternatively, the first access network device may send the uplink NAS message and the context of the terminal device to the core network device by using two different messages. The first access network device sends an initial message (Initial UE Message) of the terminal device including the uplink NAS message to the core network device, and sends another message including the context of the terminal device to the core network device.

Optionally, the first access network device sends fourth indication information to the core network device, where the fourth indication information indicates that the terminal device accesses the first access network device when the first access network device is incapable of exchanging information with the core network device. Optionally, after receiving fourth indication information, based on the fourth indication information, the core network device makes a first NAS timer take effect or delays starting a second NAS timer. For descriptions of the fourth indication information, the first NAS timer, and the second NAS timer, refer to related descriptions in step 301 and step 306. Details are not described herein again.

Optionally, the first access network device may further send the first time information to the core network device. Correspondingly, the core network device may further receive the first time information from the first access network device. For descriptions of the first time information, refer to related descriptions in step 301. Details are not described herein again.

It should be noted that at least one of the fourth indication information, the first time information, and the context of the terminal device may be carried in the initial message of the terminal device to be sent to the core network device, or may be carried in another message to be sent to the core network device. This is not limited herein.

Step 507: The core network device sends a downlink NAS message and the context of the terminal device to the second access network device.

Correspondingly, the second access network device receives the downlink NAS message and the context of the terminal device from the core network device.

First, the core network device determines the second access network device, and then the core network device sends the downlink NAS message and the context of the terminal device to the second access network device.

In a possible implementation, the core network device may determine the second access network device based on the context of the terminal device and orbital information of each access network device. Because the context of the terminal device includes geographical location information of the terminal device, and the core network device has known the orbital information of each access network device, the core network device may determine, based on the geographical location information of the terminal device and the orbital information of each access network device, that an access network device whose orbit passes through the geographical area in which the terminal device is located is the second access network device. Optionally, the second access network device may be an access network device that has a same orbit as the first access network device.

In another possible implementation, the core network device may determine the second access network device based only on orbital information of each access network device without considering the context of the terminal device. For example, the core network device determines, as the second access network device, an access network device that has a same orbit as the first access network device and that operates after the first access network device.

When the core network device sends the downlink NAS message to the second access network device, the core network device immediately starts the first NAS timer, or starts the second NAS timer after first duration. For descriptions of fourth information, refer to related descriptions in step 306. Details are not described herein again.

It should be noted that when the core network device sends the downlink NAS message and the context of the terminal device to the second access network device, the second access network device has moved to a second area, namely, an area in which the second access network device is capable of exchanging information with the core network device. The core network device may send a plurality of downlink NAS messages to the second access network device currently located in the second area, or the core network device may send one downlink NAS message to the second access network device currently located in the second area. This is not limited herein.

It should be noted that the second area to which the first access network device moves in step 505 and the second area in which the second access network device is located in step 507 may be different physical areas, or may be a same physical area. The first access network device is capable of exchanging the information with the core network device in the second area in step 505, and the second access network device is capable of exchanging the information with the core network device in the second area in step 507.

In an example, the first access network device and the second access network device set up the connections to the core network device through the same NTN gateway, and both the first access network device and the second access network device are located in a physical area in which the same NTN gateway provides a service. In this case, the second area to which the first access network device moves in step 505 and the second area in which the second access network device is located in step 507 are a same physical area, namely, the area in which the NTN gateway provides the service.

In another example, the first access network device and the second access network device set up the connections to the core network device through different NTN gateways. For example, the first access network device sets up the connection to and exchanges the information with the core network device through an NTN gateway 1, and the second access network device sets up the connection to and exchanges the information with the core network device through an NTN gateway 2. If a physical area in which the NTN gateway 1 provides a service is different from a physical area in which the NTN gateway 2 provides a service, the second area to which the first access network device moves in step 505 and the second area in which the second access network device is located in step 507 are different physical areas, in other words, are separately the areas in which the two different NTN gateways provide the services.

Step 508: The second access network device stores the downlink NAS message for the terminal device and the context of the terminal device.

After the second access network device receives the downlink NAS message and the context of the terminal device from the core network device, the second access network device stores the downlink NAS message for the terminal device and the context of the terminal device correspondingly. Because the second access network device has not established the connection to the terminal device at this moment, the second access network device does not immediately deliver the downlink NAS message.

Step 509: The second access network device moves from the second area to a first area.

The second access network device receives the context of the terminal device from the core network device, the context of the terminal device includes geographical area information of the terminal device, and the geographical area information can indicate the geographical area in which the terminal device is located. Therefore, the second access network device can determine, based on the geographical area information in the context of the terminal device, the geographical area in which the terminal device is located. Because the geographical area in which the terminal device is located is in the first area, when the second access network device moves to the first area and moves to the geographical area in which the terminal device is located, the second access network device triggers, through step 510a or step 510b, the terminal device to perform step 511, to be specific, the second access network device triggers, through step 510a or step 510b, the terminal device to initiate access to the second access network device.

It should be noted that the first area in step 509 and the first area in step 501 to step 505 may be different geographical areas, or may be a same geographical area. Both the first area in step 509 and the first area in step 501 to step 505 include the geographical area in which the terminal device is located.

Step 510a: The second access network device broadcasts cell identification information of a first cell.

Correspondingly, the terminal device receives the cell identification information of the first cell from the second access network device.

Optionally, the cell identification information of the first cell may be carried in system information. For example, the second access network device broadcasts the cell identification information of the first cell in the system information. If the terminal device receives the cell identification information of the first cell from the system information, and the context of the terminal device stores the cell identification information of the first cell, the terminal device triggers the access to the second access network device.

Step 510b: The second access network device sends third indication information.

Correspondingly, the terminal device receives the third indication information from the second access network device.

The third indication information indicates the terminal device to initiate access. This may also be understood as: The third indication information indicates the terminal device to trigger the access to the second access network device. For example, the third indication information may be a physical downlink control channel order (PDCCH Order) that is sent to the terminal device and that is scrambled by using identification information (for example, a C-RNTI or first identification information) of the terminal device. Alternatively, the third indication information may be indication information indicating a terminal device that stores the cell identification information of the first cell in a context of the terminal device. For example, the third indication information may be the cell identification information of the first cell or information indicating the first cell. After the terminal device receives the third indication information from the second access network device, the terminal device triggers the access to the second access network device based on the third indication information. For details, refer to related descriptions in step 205. The details are not described herein again.

Optionally, the terminal device triggers access to a second cell of the second access network device based on the third indication information. For example, if the second access network device broadcasts the third indication information in the second cell, and the terminal device receives the third indication information in the second cell, the terminal device triggers the access to the second cell. The second cell may be any cell in the second access network device.

Step 511: The terminal device sets up the connection to the second access network device based on the context of the terminal device.

The terminal device stores the context of the terminal device, and the second access network device also stores the context of the terminal device. In addition, the context of the terminal device includes AS configuration information for the terminal device. Therefore, the terminal device and the second access network device only need to perform uplink synchronization to reuse the AS configuration information in the context to set up the connection. For example, the terminal device may first perform uplink and downlink synchronization with the second access network device, and then continue to use a configuration in the context of the terminal device to perform further communication with the second access network device, so that the second access network device may communicate with the second access network device through a time-frequency resource and/or a radio bearer resource that are/is configured in the context of the terminal device, and the second access network device does not need to perform initial RRC setup again.

For example, the terminal device sets up the connection to the second access network device through the following steps:
Step 511.1: The terminal device sends a Msg1 to the second access network device.

The Msg1 includes a random access preamble (random access preamble, RAP), and the RAP may be carried in the PDCCH order, or may be broadcast in the system information. If the RAP is carried in the PDCCH order, the RAP is allocated by the first access network device to the terminal device, and the RAP may be for contention-free random access. If the RAP is in a random access configuration broadcast in the system information, the terminal device randomly selects the random access preamble, and the terminal device may perform contention-based random access.

Step 511.2: The second access network device sends a Msg2 to the terminal device.

The Msg2 includes a random access response RAR, a temporary cell radio network temporary identifier T-CRNTI allocated by the second access network device to the terminal device, and an uplink timing advance.

Step 512: The terminal device sends the identification information of the terminal device to the second access network device.

The identification information of the terminal device is the C-RNTI and/or the first identification information stored in the context of the terminal device.

In a possible implementation, after step 511.2, the terminal device may send a C-RNTI MAC CE to the second access network device in an uplink grant of the Msg2, where a C-RNTI is the C-RNTI allocated when the terminal device initially accesses the first access network device, and is stored in the context of the terminal device.

In a possible implementation, if the first access network device configures the first identification information for the terminal device in step 302, and the context of the terminal device stores the first identification information, the terminal device sends the first identification information to the second access network device.

Step 513: The second access network device determines the context of the terminal device based on the identification information of the terminal device.

A manner in which the second access network device determines the context of the terminal device varies with an implementation of the identification information of the terminal device received by the second access network device. The following separately provides descriptions.

In a possible implementation, if the second access network device receives the first identification information from the terminal device, the second access network device determines the context of the terminal device based on the first identification information.

In another possible implementation, the second access network device receives the cell radio network temporary identifier from the terminal device. When the context that is of the terminal device and that is stored in the second access network device includes the geographical area information of the terminal device and/or time information about access of the terminal device to the first access network device, the second access network device determines the context of the terminal device based on the geographical area information of the terminal device and/or the time information about the access of the terminal device to the first access network device, and the cell radio network temporary identifier.

In a possible example of this implementation, the context that is of the terminal device and that is stored in the second access network device includes the geographical area information of the terminal device, and the second access network device determines the context of the terminal device based on the geographical area information of the terminal device and the cell radio network temporary identifier.

In another possible example of this implementation, the context that is of the terminal device and that is stored in the second access network device includes the time information about the access of the terminal device to the first access network device, and the second access network device determines the context of the terminal device based on the time information about the access of the terminal device to the first access network device and the cell radio network temporary identifier.

In another possible example of this implementation, the context that is of the terminal device and that is stored in the second access network device includes the geographical area information of the terminal device and the time information about the access of the terminal device to the first access network device, and the second access network device determines the context of the terminal device based on the geographical area information of the terminal device, the time information about the access of the terminal device to the first access network device, and the cell radio network temporary identifier.

In this embodiment, after the second access network device determines the context of the terminal device in any one of the foregoing implementations, the first access network device and the terminal device may continue to exchange a NAS message.

Step 514: The second access network device determines the downlink NAS message for the terminal device based on the context of the terminal device.

It should be noted that the second access network device may determine a plurality of downlink NAS messages for the terminal device based on the context of the terminal device, or may determine only one downlink NAS message for the terminal device based on the context of the terminal device. Optionally, a quantity of downlink NAS messages for the terminal device that are determined by the second access network device based on the context of the terminal device is the same as a quantity of downlink NAS messages that are received by the second access network device from the core network device in the second area.

Step 515: The second access network device forwards the downlink NAS message to the terminal device.

Optionally, the second access network device further updates NAS-related information (namely, a NAS context of the terminal device) in the context of the terminal device. For example, the second access network device stores, in the context of the terminal device, the downlink NAS message forwarded to the terminal device, or the second access network device stores one piece of indication information to indicate the specific downlink NAS message forwarded by the second access network device to the terminal device.

Step 516: The terminal device sends an uplink NAS message to the second access network device.

The uplink NAS message may be a message corresponding to the downlink NAS message in step 315. For example, the uplink NAS message is a response message of the downlink NAS message. Details are similar to those in step 316, and are not described herein again.

Step 517: The second access network device stores the uplink NAS message of the terminal device.

In a possible implementation, the second access network device stores the received uplink NAS message in the context of the terminal device.

In another possible implementation, the second access network device establishes a mapping relationship between the received uplink NAS message and the context of the terminal device, so that the second access network device may find, based on the context of the terminal device, the uplink NAS message that needs to be transparently transmitted to the core network device.

Step 518: The second access network device moves from the first area to a second area.

After the second access network device moves to the second area, the second access network device sets up the connection to the core network device.

It should be noted that the second area at which the second access network device arrives in step 518 and the second area at which the first access network device arrives in step 505 may be a same physical area, or may be different physical areas. For details, refer to descriptions in the related example in step 507. The details are not described herein again.

It should be further noted that the second area at which the second access network device arrives in step 518 and the second area at which the second access network device arrives in step 507 may be a same physical area, or may be different physical areas.

In an example, the second access network device sets up the connections to the core network device through a same NTN gateway twice, and the second access network device is located twice in a physical area in which the same NTN gateway provides a service. In this case, the second area to which the second access network device moves in step 507 and the second area to which the second access network device moves in step 518 are a same physical area, namely, the area in which the NTN gateway provides the service.

In another example, the second access network device sets up the connections to the core network device twice through different NTN gateways. For example, in step 507, the second access network device sets up the connection to and exchanges information with the core network device through an NTN gateway a; and in step 518, the second access network device sets up the connection to and exchanges information with the core network device through an NTN gateway b. If a physical area in which the NTN gateway a provides a service is different from a physical area in which the NTN gateway b provides a service, the second area to which the second access network device moves in step 507 and the second area to which the second access network device moves in step 518 are different physical areas, in other words, are separately the areas in which the two different NTN gateways provide the services. For example, the NTN gateway a is a last NTN gateway found before the second access network device is to provide the service for the terminal device, and the NTN gateway b is a 1^{st} NTN gateway found after the second access network device stops providing the service for the terminal device.

Step 519: The second access network device sends the uplink NAS message and the context of the terminal device to the core network device.

Correspondingly, the core network device receives the uplink NAS message and the context of the terminal device from the second access network device.

It should be noted that, if exchange of NAS signaling is not complete, the core network device further determines another second access network device to continue to exchange the NAS signaling with the terminal device. For ease of description, the second access network device in step 519 is referred to as a second access network device #1, and the second access network device determined by the core network device after step 519 is referred to as a second access network device #2. After the core network device receives the uplink NAS message and the context of the terminal device from the second access network device #1, the core network device determines, based on the context of the terminal device, the another second access network device #2 that is on the orbit and that can pass through the geographical area in which the terminal device is located, and then sends a next downlink NAS message and the context of the terminal device to the second access network device #2. The second access network device #2 stores the received downlink NAS message and context of the terminal device. After the second access network device #2 moves to a geographical location of the terminal device in a first area, the second access network device #2 sets up a connection to the terminal device, sends the stored downlink NAS message to the terminal device, receives, from the terminal device, an uplink NAS message returned by the terminal device, and stores the uplink NAS message. When the second access network device #2 moves to a second area again, the second access network device #2 sets up a connection to the core network device again, and sends the stored uplink NAS message to the core network device. A specific process is similar to step 507 to step 519, and details are not described herein again.

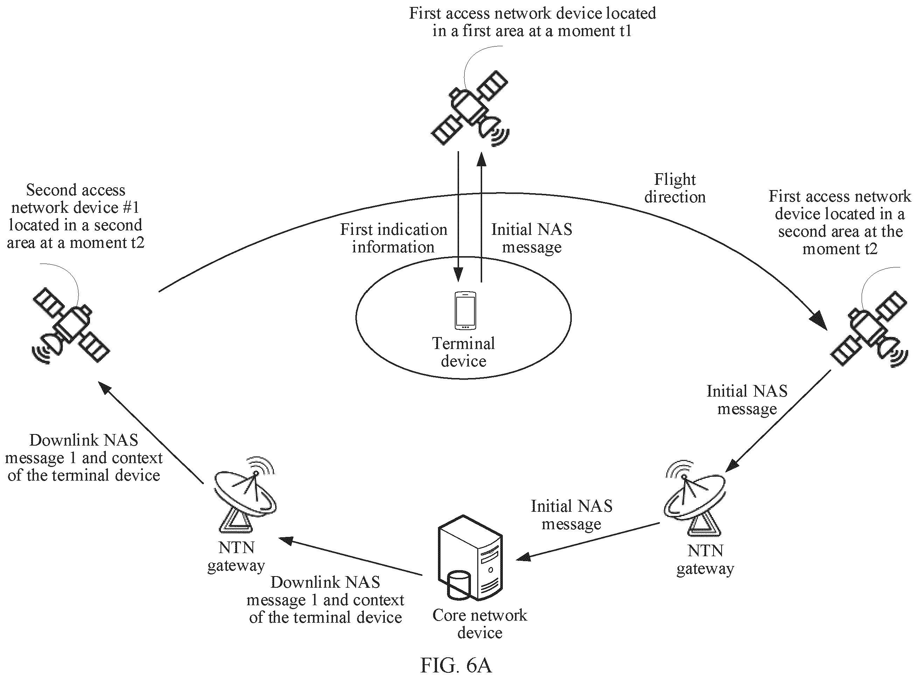

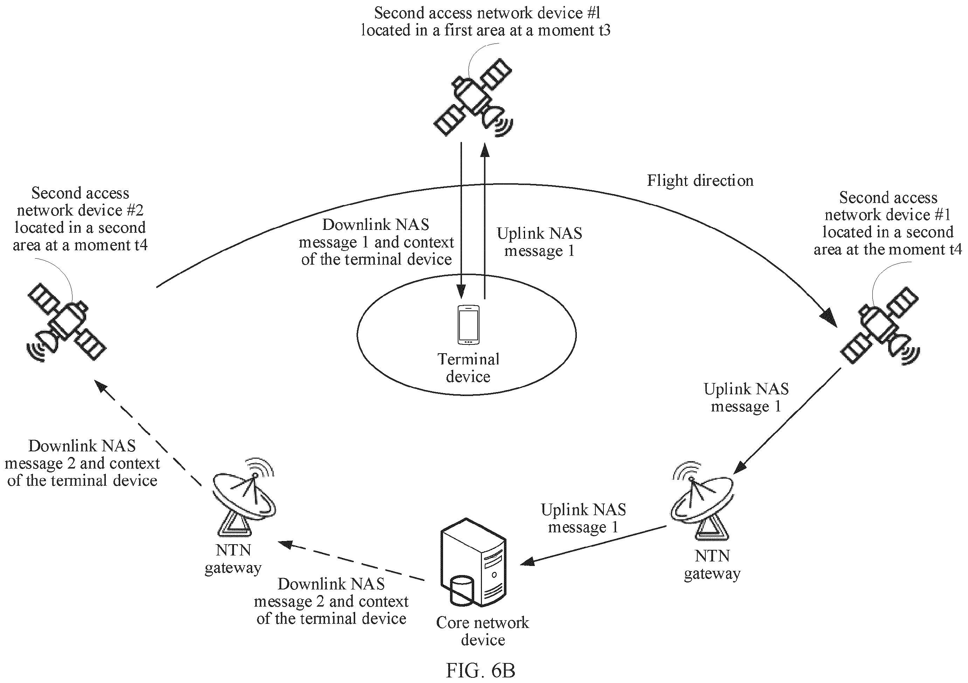

For ease of understanding, FIG. 6A and FIG. 6B are used as examples to describe the solution of this embodiment. As shown in FIG. 6A, when the first access network device is located in a first area (for example, an area not covered by an NTN gateway), the first access network device notifies, by using first indication information, the terminal device that the first access network device has not established a connection to the core network device. After the terminal device accesses the first access network device, both the terminal device and the first access network device can store a context of the terminal device, and the first access network device further stores an initial NAS message (namely, an uplink NAS message, for example, a registration request message, carried in a Msg5) received from the terminal device. After the first access network device stops providing the service for the terminal device, the first access network device moves from the first area to a second area (for example, an area covered by an NTN gateway) along an orbit. The first access network device located in the second area sets up a connection to the core network device, and sends the initial NAS message and the context of the terminal device to the core network device through the NTN gateway, so that the core network device determines the second access network device #1. Then, the core network device sends a downlink NAS message 1 to the second access network device #1 through the NTN gateway. As shown in FIG. 6B, when the second access network device #1 moves to a first area (including a geographical area in which the terminal device is located), the second access network device #1 quickly sets up a connection to the terminal device based on the context of the terminal device received from the core network device. After the connection is established, the second access network device #1 sends the downlink NAS message 1 to the terminal device, and the terminal device returns, to the first access network device, an uplink NAS message 1 in response to the downlink NAS message 1. After the second access network device #1 stops providing a service for the terminal device, the second access network device #1 moves from the first area to a second area (for example, an area covered by an NTN gateway) again. The second access network device #1 located in the second area sets up a connection to the core network device again, and sends the uplink NAS message 1 to the core network device through the NTN gateway. Optionally, if there is further NAS signaling (for example, a downlink NAS message 2) that needs to be exchanged, the core network device may determine the second access network device #2, and send the downlink NAS message 2 and the context of the terminal device to the second access network device #2 through the NTN gateway, so that the second access network device #2 continues to exchange NAS signaling in a manner similar to that used by the second access network device #1. NAS registration between the terminal device and the core network succeeds through a plurality of times of NAS signaling exchange, so that the terminal device can obtain a network service.

In this embodiment, because both the terminal device and the first access network device can store the context of the terminal device to reserve configuration information (for example, a time-frequency resource and a radio bearer) used when the terminal device accesses the first access network device, and the first access network device can further forward the context of the terminal device to the core network device, so that after the first access network device stops providing the service for the terminal device, the core network device can select the second access network device for the terminal device to continue to provide the service for the terminal device. When the second access network device arrives at the geographical area in which the terminal device is located, because the second access network device has the context of the terminal device from the first access network device that is received from the core network device, the terminal device and the second access network device can quickly complete the uplink and downlink synchronization based on the context of the terminal device and continue to exchange the NAS signaling, and the terminal device does not need to perform initial RRC setup again in the second access network device. Therefore, this not only helps reduce signaling overheads for setting up the connection to the second access network device, but also helps improve efficiency of accessing the second access network device by the terminal device. Before the second access network device stops providing the service for the terminal device, the second access network device further sends the updated context of the terminal device to the core network device, so that the core network device continues to provide the service for the terminal device through a next second access network device. Each time each second access network device that carries the context of the terminal device arrives at the geographical area in which the terminal device is located, the second access network device can quickly accept the terminal device and continue to exchange NAS signaling with the terminal device. Therefore, a registration procedure of the terminal device on a core network side can be complete by quickly completing the exchange of the NAS signaling through the second access network device, so that communication efficiency is improved, and the terminal device in the area not covered by the NTN gateway can also obtain the network service.

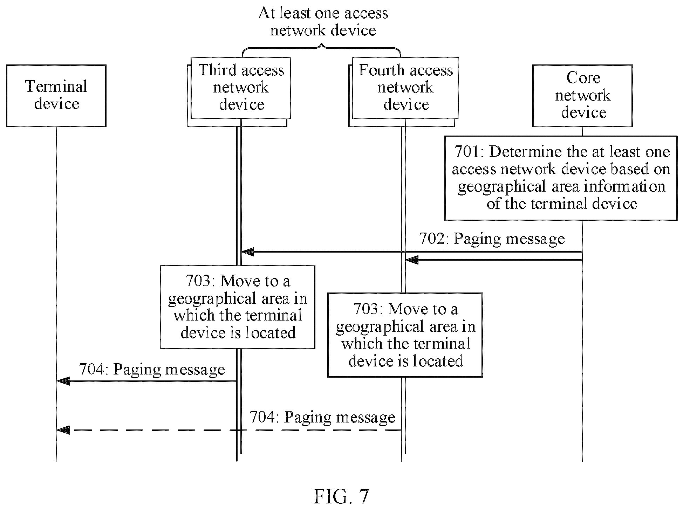

With reference to FIG. 7, the following describes another embodiment of the communication method in this application. In this embodiment, after a terminal device completes registration with a core network device, if the terminal device enters an idle state, the core network device may page the terminal device in a manner described in FIG. 7. It should be noted that the terminal device may complete the registration with the core network device in a manner provided in any one of the embodiments corresponding to FIG. 2, FIG. 3, and FIG. 5 or another manner in a conventional technology. This is not limited in this embodiment. Specifically, the core network device, an access network device, and the terminal device perform the following steps.

Step 701: The core network device determines at least one access network device based on geographical area information of the terminal device.

After the terminal device registers with the core network device, the core network device stores a context of the terminal device, the context of the terminal device includes the geographical area information of the terminal device, and the geographical area information of the terminal device indicates a geographical area in which the terminal device is located. When the core network device needs to initiate paging to the terminal device, the core network device determines the at least one access network device based on the geographical area information that is of the terminal device and that is stored in the core network device. The at least one access network device is configured to page the terminal device (namely, the terminal device located in the geographical area indicated by the geographical area information).

A moving path of a coverage area of each of the at least one access network device can pass through the geographical area in which the terminal device is located. This may also be understood as: The access network device determined by the core network device is an access network device that can move in future to the geographical area in which the terminal device is located.

It should be noted that the access network device determined by the core network device may be an access network device that is capable of setting up a connection to the core network device through an NTN gateway currently, or may be an access network device that is incapable of setting up a connection to the core network device through an NTN gateway currently but is capable of setting up a connection to or exchanging information with the core network device through an NTN gateway in future. For example, if the access network device determined by the core network device may be the access network device that is capable of setting up the connection to or exchanging information with the core network device through the NTN gateway currently, a current coverage area of the access network device generally does not include the geographical area in which the terminal device is located. If the access network device determined by the core network device may be the access network device that is incapable of setting up the connection to or exchanging the information with the core network device through the NTN gateway currently, the core network device sends some information (for example, a paging message) to the access network device only when the access network device is capable of setting up the connection to or exchanging the information with the core network device through the NTN gateway. The geographical area information of the terminal device may be a tracking area TAC, or may be a geographical area represented by longitude and latitude. The geographical area information of the terminal device may alternatively be a tracking area list (tracking area list, TAL) to which a tracking area TAC in which the terminal device is currently located belongs. It may be understood that the geographical area of the terminal is a logical concept, and is mainly used by the core network to select the access network device for paging. For example, the geographical area information may be a PLMN + the TAC that correspond to the terminal device during access. The core network determines, based on the PLMN + the TAC, that an access network device whose operating trajectory is to pass through the area in which the terminal device is located is the access network device for paging the terminal device. The core network device may determine one access network device, or may determine a plurality of access network devices to improve a paging success rate. The plurality of access network devices determined by the core network device may be selected simultaneously, or may be selected successively in a plurality of batches. This is not limited herein.

An example in which the geographical area information of the terminal device is the TAC is used. If the terminal device is located in an area indicated by a TAC 1, each of the at least one access network device determined by the core network device can move to the area indicated by the TAC 1 (to be specific, all the access network devices can provide a service for the area indicated by the TAC 1). However, when the access network device currently sets up the connection to the core network device, the access network device may not be in the area indicated by the TAC 1. For example, when currently setting up a connection to the core network device, an access network device 1 is located in an area indicated by a TAC 2, but the access network device 1 can operate in future to the area indicated by the TAC 1.

Optionally, if the core network device receives fourth indication information in a registration phase of the terminal device, or the context that is of the terminal device and that is stored in the core network device includes fourth indication information, the fourth indication information indicates that the terminal device accesses a first access network device when the first access network device is incapable of exchanging information with the core network device. For specific descriptions of the fourth indication information, refer to step 306. Details are not described herein again. In this case, the core network device may trigger, based on the fourth indication information, paging of the terminal device in a manner provided in this embodiment. If the core network device does not receive fourth indication information in a registration phase of the terminal device, or the context that is of the terminal device and that is stored in the core network device does not include fourth indication information, the core network device determines, from the tracking area TA list of the terminal device by using a conventional technology, the access network device configured to page the terminal device. For example, the core network device initiates paging to all access network devices in the TA list.

Optionally, TAC list information is pre-configured on the core network device, and the pre-configured TAC list information indicates that a terminal device in the TAC list can be connected to the core network device and the access network device only in a dynamic connection mode. The dynamic connection refers to a process in which, in a scenario in which a link between the access network device and the NTN gateway or the core network does not always exist or is not always available, information sent by the terminal device to the core network device needs to be first stored by the access network device and then the access network device is connected to the core network device after operating along an orbit for a period of time and forwards the information to the core network device. The dynamic connection is relative to a static connection. The static connection means that in a scenario in which a link between the access network device and the NTN gateway or the core network always exists or is always available, information sent by the terminal device to the core network device may be directly forwarded by the access network device, and does not need to be first stored and then forwarded.

In addition, the pre-configured TAC list information may be configured in the core network device, or may be centrally managed in an operations, administration and maintenance (operations, administration and maintenance, OAM) and delivered by the OAM to the core network device. A specific pre-configuration form is not limited. When the TAC of the terminal device is in the pre-configured TAC list information, the core network device pages the terminal device in the manner provided in this embodiment.

Step 702: The core network device sends the paging message to the at least one access network device.

Optionally, when the core network device sends the paging message, the core network device starts a first paging timer.

The first paging timer is a paging timer used by the core network device when the terminal device is in a store and forward mode. This may also be understood as: The first paging timer is a paging timer used by the core network device when the terminal device is in a geographical area in a store and forward mode, or the first paging timer is a paging timer used when the core network device receives the fourth indication information from the access network device.

It should be noted that, if the terminal device is not in the store and forward mode, the terminal device is not located in the geographical area in the store and forward mode, and the core network device does not receive the fourth indication information, the core network device starts a pre-configured paging timer when sending the paging message. Duration of the first paging timer is greater than duration of the pre-configured paging timer. The duration of the pre-configured paging timer may be configured by a network management device, or may be predefined in a protocol. This is not limited herein.

If the core network device can receive a response message of the terminal device during running of the first paging timer, the core network device succeeds in paging the terminal device. If the core network device does not receive a response message of the terminal device during running of the first paging timer, the core network device fails to page the terminal device. A paging retry process may be performed subsequently according to an existing paging process.

Correspondingly, the access network device receives the paging message from the core network device. The paging message includes the geographical area information of the terminal device. Because the geographical area indicated by the geographical area information of the terminal device is inconsistent with a geographical area in which the access network device is located when the access network device receives the paging message, the access network device stores the paging message received from the core network device, instead of immediately delivering the paging message.

The example in which the geographical area information of the terminal device is the TAC is used. If the geographical area information of the terminal device carried in the paging message is the TAC 1, it indicates that the terminal device is located in the area indicated by the TAC 1. If the access network device 1 receives the paging message from the core network device in the area indicated by the TAC 1, the access network device stores the paging message, instead of immediately delivering the paging message.

Step 703: The at least one access network device moves to the geographical area in which the terminal device is located.

It should be noted that the at least one access network device may separately arrive, at different moments, at the geographical area in which the terminal device is located, or two or more access network devices may simultaneously arrive at the geographical area in which the terminal device is located. This is not limited herein.

Optionally, the at least one access network device includes a third access network device and a fourth access network device. The fourth access network device is an access network device that provides a service for the terminal device after the third access network device stops providing a service for the terminal device. In other words, the third access network device arrives earlier than the fourth access network device at the geographical area in which the terminal device is located. For example, the third access network device is an access network device that is in the at least one access network device and that first arrives at the geographical area in which the terminal device is located, and the fourth access network device is an access network device that is in the at least one access network device and that second arrives at the geographical area in which the terminal device is located.

Step 704: The at least one access network device sends the paging message in the geographical area in which the terminal device is located.

Correspondingly, the terminal device receives the paging message from the at least one access network device.

In a possible implementation, when each of the at least one access network device arrives at the geographical area in which the terminal device is located, the access network device sends the paging message in the geographical area in which the terminal device is located. For example, when the third access network device moves to the geographical area in which the terminal device is located, the third access network device sends a paging message in the geographical area in which the terminal device is located. When the fourth access network device moves to the geographical area in which the terminal device is located, the fourth access network device sends a paging message in the geographical area in which the terminal device is located.

In a possible implementation, after receiving a 1^{st} paging message (for example, the paging message from the third access network device), the terminal device processes the paging message, and does not receive or process a subsequent paging message before completing the processing of the paging message or before responding to the paging message (for example, before the terminal device triggers access to a wireless network since the 1^{st} paging message is received).

In an example, if an AS of the terminal device receives the paging message, the AS of the terminal device notifies a NAS of the terminal device, so that the NAS of the terminal device processes the paging message. After the NAS of the terminal device starts to process the paging message, the NAS of the terminal device notifies the AS of the terminal device not to monitor another paging message. Because a quantity of times that the terminal device receives a paging message can be reduced, energy consumption of the terminal device can be reduced.

In another example, if an AS of the terminal device receives the paging message, the AS of the terminal device notifies a NAS of the terminal device, so that the NAS of the terminal device processes the paging message. After the NAS of the terminal device starts to process the paging message, the NAS of the terminal device no longer receives a paging message from the AS of the terminal device, and the AS of the terminal device no longer forwards a paging message to the NAS of the terminal device even if the AS of the terminal device receives the paging message. Because a quantity of times that the terminal device processes a paging message can be reduced, energy consumption of the terminal device can be reduced.

In another possible implementation, only a part of access network devices in the at least one access network device broadcast the paging message when arriving at the geographical area in which the terminal device is located. For example, when the third access network device moves to the geographical area in which the terminal device is located, the third access network device sends a paging message in the geographical area in which the terminal device is located. When the fourth access network device moves to the geographical area in which the terminal device is located, the fourth access network device does not send a paging message.

In an example, if there is an inter-satellite link between the third access network device and the fourth access network device, when the third access network device fails to page the terminal device (for example, the third access network device does not receive a response to the paging message from the terminal device), the fourth access network device continues to page the terminal device; or when the third access network device succeeds in paging the terminal device, the third access network device sends fifth indication information to the fourth access network device, where the fifth indication information indicates the fourth access network device to delete a paging message for paging the terminal device or indicates to the fourth access network device that the terminal device does not need to be paged. The third access network device may further indicate an identifier of the terminal device to the fourth access network device. In this way, the fourth access network device can know a terminal device corresponding to the fifth indication information, to be specific, can know a specific terminal device corresponding to a paging message to be deleted or a specific terminal device that does not need to be paged. Because unnecessary paging overheads of the fourth access network device can be reduced, signaling overheads in an entire network can be reduced.

In this embodiment, the core network device can determine, based on the geographical area information of the terminal device, the at least one access network device for paging the terminal device, instead of directly determining, based on the TA list, an access network device for paging the terminal device. This helps increase a probability that the core network device successfully pages the terminal device.

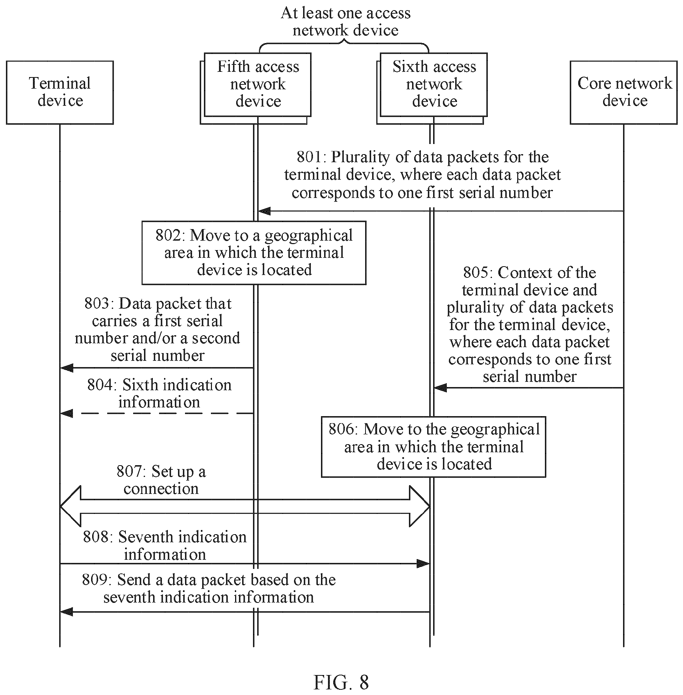

With reference to FIG. 8, the following describes another embodiment of the communication method in this application. In this embodiment, after a terminal device completes registration with a core network device, if the core network device is to send downlink data, the core network device may deliver the data in a manner described in FIG. 8. It should be noted that the terminal device may complete the registration with the core network device in a manner provided in any one of the embodiments corresponding to FIG. 2, FIG. 3, and FIG. 5 or another manner. This is not limited in this embodiment. Specifically, the core network device, an access network device, and the terminal device perform the following steps.

Step 801: The core network device sends a plurality of data packets for the terminal device to a fifth access network device, where each data packet corresponds to one first serial number.

Correspondingly, the fifth access network device receives the plurality of data packets for the terminal device from the core network device, where each data packet corresponds to one first serial number.

The fifth access network device is an access network device that is determined by the core network device and that is configured to forward downlink data to the terminal device. The core network device stores a context of the terminal device, and the core network device may determine, based on the context of the terminal device, the access network device configured to forward the downlink data to the terminal device. Optionally, the context of the terminal device includes geographical area information of the terminal device. The core network device determines at least one access network device based on the geographical area information of the terminal device, where the at least one access network device is configured to forward the downlink data to the terminal device. A current coverage area of each access network device does not include a geographical area in which the terminal device is located, and a movement path of the coverage area of the access network device passes through the geographical area in which the terminal device is located. Specifically, refer to step 701. Details are not described herein again.

Optionally, the at least one access network device includes the fifth access network device. For example, the fifth access network device is an access network device that is in the at least one access network device and that first arrives at the geographical area in which the terminal device is located. It should be noted that the fifth access network device and the first access network device in the embodiment corresponding to FIG. 3 or FIG. 5 may be a same access network device, or may be different access network devices. The fifth access network device is used as an example for description below.

In addition, each of the plurality of data packets corresponds to one first serial number, and the first serial number is generated by the core network device. For example, the first serial number may be a general packet radio service tunneling protocol user plane serial number (GPRS tunneling protocol user plane serial number, GTPU SN), or may be another serial number for marking the data packet. This is not limited herein. It should be noted that each data packet sent by the core network device carries a first serial number corresponding to the data packet.

Optionally, the fifth access network device sends the context of the terminal device to the core network device. The context of the terminal device includes AS-related information (namely, an AS context) and NAS-related information (namely, a NAS context).

For example, the AS context of the terminal device includes identification information of the terminal device (for example, a C-RNTI configured by the access network device during initial access of the terminal device), resource-related information (for example, cell resource configuration information (a cell group configuration) and a radio bearer configuration (radio bearer configuration)) configured by the access network device for the terminal device, identification information (for example, a cell global identity (cell global identity, CGI) or a physical cell identifier (physical cell identifier, PCI)) of a cell accessed by the terminal device, and other Uu interface-related information.

For example, the NAS context of the terminal device includes an uplink NAS message that has been sent by the terminal device, a related NAS timer that has been started by the terminal device, status information of the terminal device, security related information, capability information of the terminal device, an IMSI, and other NG interface information related to a core network.

Step 802: The fifth access network device moves to the geographical area in which the terminal device is located.

Step 803: The fifth access network device sends, to the terminal device, a data packet that carries a first serial number and/or a second serial number.

Correspondingly, the terminal device receives, from the fifth access network device, the data packet that carries the first serial number and/or the second serial number.

In a possible implementation, the fifth access network device sends, to the terminal device, a data packet that carries only the first serial number. For example, the fifth access network device sends data packets to the terminal device in a sequence of data received from the core network device. For example, if the core network device sends the data packets to the fifth access network device in ascending order of the first serial numbers, the fifth access network device sends the data packets to the terminal device in ascending order of the first serial numbers.

It should be noted that after the terminal device receives the data packet from the fifth access network device, the terminal device sends, to the fifth access network device, a feedback of receiving the data packet, to indicate whether the data packet is successfully received. Specifically, there may be the following plurality of implementations:
In an implementation, each time the terminal device successfully receives a data packet, the terminal device returns, to the fifth access network device, an indication (for example, an acknowledgment character (acknowledgment character, ACK)) indicating receiving acknowledgment. The indication indicating the receiving acknowledgment indicates the data packet that carries a first serial number and that has been received by the terminal device.

For example, if the fifth access network device receives five data packets from the core network device, and first serial numbers of the five data packets are respectively 1, 2, 3, 4, and 5, the fifth access network device first sends the data packet with the serial number 1, and then sends the data packet with the serial number 2. The rest can be deduced by analogy. After receiving the data packet with the serial number 1, the terminal device returns an ACK with the serial number 1 to the fifth access network device. After receiving the data packet with the serial number 2, the terminal device returns an ACK with the serial number 2 to the fifth access network device. The rest can be deduced by analogy.

In another implementation, the terminal device receives a feedback report indication from the fifth access network device, where the feedback report indication may be included in a specific data packet. If the terminal device receives the data packet including the feedback report indication and all previous data packets, the terminal device feeds back an ACK to the fifth access network device. If the terminal device receives the data packet including the feedback report indication, but data previous to the data packet including the feedback report indication is not completely received, the terminal device feeds back, to the fifth access network device, a serial number of an unsuccessfully received data packet.

For example, the fifth access network device receives five data packets from the core network device, first serial numbers of the five data packets are respectively 1, 2, 3, 4, and 5, and the data packet with the first serial number 5 includes the feedback report indication. If the terminal device receives the five data packets, the terminal device feeds back an ACK to the fifth access network device. If the terminal device receives only the data packet including the feedback report indication (namely, the data packet with the first serial number 5), but data previous to the data packet including the feedback report indication is not completely received (for example, only the data packets with the first serial numbers 1, 2, and 3 are received), the terminal device feeds back, to the fifth access network device, a serial number (namely, the first serial number 4) of an unsuccessfully received data packet.

Optionally, the fifth access network device may alternatively determine, based on an RLC-layer data packet correct-receiving status fed back by the terminal device at an RLC layer, whether the data packet received from the core network device is correctly received by the terminal device.

In another possible implementation, the fifth access network device determines a second serial number of each data packet based on the first serial number of each data packet and a first mapping rule, and then the fifth access network device sends, to the terminal device, a data packet that carries the second serial number. Optionally, the sent data packet may further carry the first serial number in addition to the second serial number. For example, the second serial number is a PDCP SN.

For example, if the fifth access network device receives five data packets from the core network device, and first serial numbers of the five data packets are respectively 1, 2, 3, 4, and 5, the fifth access network device first determines a second serial number of each data packet based on the first serial number of each data packet and the first mapping rule. For example, a second serial number determined for the first serial number 1 according to the first mapping rule is A, and a second serial number determined for the first serial number 2 according to the first mapping rule is B. By analogy, the fifth access network device can determine that the second serial numbers of the five data packets are respectively A, B, C, D, and E. Then, the fifth access network device first sends the data packet with the serial number A to the terminal device, and then sends the data packet with the serial number B to the terminal device. The rest can be deduced by analogy.

It should be noted that after the terminal device receives the data packet from the fifth access network device, the terminal device sends, to the fifth access network device, a feedback of receiving the data packet, to indicate whether the data packet is successfully received. Specifically, this is similar to the feedback manner in the foregoing implementation, and details are not described herein again.

Optionally, the fifth access network device may alternatively determine, based on an RLC-layer data packet correct-receiving status fed back by the terminal device at an RLC layer, whether the data packet received from the core network device is correctly received by the terminal device.

It should be noted that the at least one access network device determined by the core network device has the same first mapping rule.

Step 804: The fifth access network device sends sixth indication information to the terminal device.

Correspondingly, the terminal device receives the sixth indication information from the fifth access network device.

Step 804 is an optional step.

Before the fifth access network device stops providing a service for the terminal device, if the fifth access network device still needs to send a data packet to the terminal device, or an ACK is still not received for a sent data packet, the fifth access network device sends the sixth indication information to the terminal device, where the sixth indication information indicates that there is a to-be-sent data packet. The to-be-sent data packet may be an unsuccessfully sent data packet, namely, a data packet that has been sent by the fifth access network device but for which an ACK is not received; or may be an unsent data packet, namely, a data packet that has never been sent by the fifth access network device. Optionally, the sixth indication information may be in a form of a MAC CE, or may be in a form of a MAC PDU (for example, the sixth indication information is carried at a PDCP layer or an RLC layer). A specific indication form is not limited.

In a possible implementation, the sixth indication information is first quantity information, and the first quantity information is a total quantity of data packets for the terminal device that are received by the fifth access network device from the core network device. The terminal device determines, based on a quantity of received data packets and the first quantity information, whether there is still a data packet not received. For example, if the fifth access network device receives five data packets from the core network device, the first quantity information is 5. If the terminal device has received three data packets, the terminal device can determine that there are still to-be-received data packets.

In another possible implementation, the sixth indication information is second quantity information, and the second quantity information is a quantity of to-be-sent data packets in the fifth access network device. If a value of the second quantity information is 0, it indicates that there is no to-be-sent data packet in the fifth access network device. If a value of the second quantity information is not 0, it indicates that there is a to-be-sent data packet in the fifth access network device.

It should be noted that step 804 is an optional step. If the fifth access network device does not perform step 804, and the terminal device does not receive a connection release or suspension (suspend) indication from the fifth access network device when the fifth access network device stops providing the service for the terminal device, the terminal device determines that there is still a to-be-sent data packet in the fifth access network device.

It should be noted that step 804 is an optional step. If the fifth access network device does not perform step 804, after the fifth access network device stops serving the terminal, and the terminal device accesses a sixth access network device (step 807), the terminal device determines whether to send step 808 to the sixth access network device.

Step 805: The core network device sends the context of the terminal device and a plurality of data packets for the terminal device to the sixth access network device, where each data packet corresponds to one first serial number.

Optionally, the at least one access network device further includes the sixth access network device in addition to the fifth access network device. The sixth access network device is an access network device that provides a service for the terminal device after the fifth access network device stops providing the service for the terminal device. In other words, the fifth access network device arrives earlier than the sixth access network device at the geographical area in which the terminal device is located. For example, the fifth access network device is an access network device that is in the at least one access network device and that first arrives at the geographical area in which the terminal device is located, and the sixth access network device is an access network device that is in the at least one access network device and that second arrives at the geographical area in which the terminal device is located.

Because the access network device has a movement characteristic (for example, the fifth access network device can move on an orbit), and a period of time for which a single access network device serves the terminal device is limited, the single access network device may be incapable of completing transmission of all data that needs to be sent to the terminal device. Therefore, in addition to sending the plurality of data packets to the fifth access network device, the core network device further sends the context of the terminal device and the plurality of data packets for the terminal device to the sixth access network device, where each data packet corresponds to one first serial number, so that the sixth access network device continues to send the downlink data packet to the terminal device.

It should be noted that step 805 may be simultaneously performed with step 801, or may be performed after step 801 and before step 806. This is not limited herein.

Step 806: The sixth access network device moves to the geographical area in which the terminal device is located.

Step 807: The terminal device sets up a connection to the sixth access network device.

For example, the sixth access network device sets up the connection to the terminal device based on the context of the terminal device.

It should be noted that a process of setting up the connection between the terminal device and the sixth access network device may be implemented in the manner provided in the embodiment (for example, step 311) corresponding to FIG. 3 or the embodiment (for example, step 511) corresponding to FIG. 5, or may be implemented in another manner. A manner of setting up the connection between the terminal device and the sixth access network device is not limited in this embodiment.

Step 808: The terminal device sends seventh indication information to the sixth access network device.

Correspondingly, the sixth access network device receives the seventh indication information from the terminal device.

The seventh indication information indicates data packets that have been consecutively received by the terminal device successfully and/or a next data packet to be received by the terminal device. The seventh indication information includes a target serial number.

In a possible implementation, the target serial number is a serial number of a last data packet whose receiving has been consecutively acknowledged by the terminal device. For example, if the terminal device has received a data packet with a serial number 1, a data packet with a serial number 2, a data packet with a serial number 3, and a data packet with a serial number 5, the target serial number is 3, and indicates the sixth access network device to send a data packet starting from the serial number 4.

In another possible implementation, the target serial number includes a serial number of a 1^{st} data packet following data packets whose receiving has been consecutively acknowledged by the terminal device. For example, if the terminal device has received a data packet with a serial number 1, a data packet with a serial number 2, a data packet with a serial number 3, and a data packet with a serial number 5, the serial number included in the seventh indication information is 4, and indicates the sixth access network device to send a data packet starting from the serial number 4.

In another possible implementation, the target serial number includes a serial number of a last received data packet and a serial number of a data packet that is previous to the last received data packet and for which no ACK is received. For example, if the terminal device has received a data packet with a serial number 1, a data packet with a serial number 2, a data packet with a serial number 3, and a data packet with a serial number 5, the serial number 5 and a serial number 4 are fed back by using the seventh indication information, to indicate that the serial number of the last received data packet is 5 and a serial number of a data packet not received is 4.

In another possible implementation, the target serial number includes a serial number of a data packet following a last received data packet and a serial number of a data packet that is previous to the last received data packet and for which no ACK is received. For example, if the terminal device has received a data packet with a serial number 1, a data packet with a serial number 2, a data packet with a serial number 3, and a data packet with a serial number 5, a serial number 6 and a serial number 4 are fed back by using the seventh indication information, to indicate that a serial number of a latest to-be-sent data packet is 6 and a serial number of a data packet that is not received in sent data packets is 4, and the data packet with the serial number 4 may be resent.

In another possible implementation, the target serial number indicates a data packet that is correctly received or a data packet that is not correctly received. For example, if the terminal device has received a data packet with a serial number 1, a data packet with a serial number 2, a data packet with a serial number 3, and a data packet with a serial number 5, it is fed back, by using the seventh indication information, that the data packets with the serial numbers 1, 2, 3, and 5 have been correctly received by the terminal device.

During actual application, the seventh indication information may be implemented in any one of the foregoing implementations.

It should be noted that, if the sixth access network device sends a data packet including a first serial number to the terminal device, the serial number in the seventh indication information is the first serial number; or if the sixth access network device sends a second serial number to the terminal device, the serial number indicated in the seventh indication information is the second serial number.

Step 809: The sixth access network device sends a data packet to the terminal device based on the seventh indication information.

Correspondingly, the terminal device receives the data packet from the sixth access network device.

Optionally, the sixth access network device sends the data packet to the terminal device based on the seventh indication information. The sixth access network device compares the serial number indicated by the received seventh indication information with the data packets received by the sixth access network device from the core network device. If the sixth access network device determines that the terminal device has received all the data packets delivered by the core network device, the sixth access network device does not deliver a data packet to the terminal device; or if the terminal device does not receive all the data packets delivered by the core network device, the sixth access network delivers the data packet to the terminal device based on the seventh indication information.

Optionally, the target serial number may be the first serial number, or may be the second serial number. The following separately provides descriptions.

In a possible implementation, the target serial number is a first serial number. The sixth access network device sends, to the terminal device, at least one data packet that carries a first serial number, where the first serial number of each of the at least one data packet is greater than or equal to the target serial number. For a specific example, refer to descriptions of the seventh indication information in step 808. Details are not described herein again.

In another possible implementation, the target serial number is a second serial number. The sixth access network device determines a second serial number of each data packet based on a first serial number of each data packet and the first mapping rule. The sixth access network device sends, to the terminal device, at least one data packet that carries the second serial number, where the second serial number of each of the at least one data packet is greater than or equal to the target serial number.

For example, the target serial number is the serial number of the last data packet whose receiving has been consecutively acknowledged by the terminal device. If the terminal device has received a data packet with a serial number A, a data packet with a serial number B, and a data packet with a serial number C, the target serial number is C. The sixth access network device determines, based on a data packet with a serial number 4, that a second serial number of the data packet is D, and determines, based on a data packet with a serial number 5, that a second serial number of the data packet is E. Then, the sixth access network device continues to send the data packet with the serial number D and the data packet with the serial number E to the terminal device. The rest can be deduced by analogy.

In this embodiment, the core network device can replicate the plurality of data packets for the terminal device, send the data packets for the terminal device to a plurality of access network devices, and send the context of the terminal device to the plurality of access network devices. In this way, when one of the access network devices cannot send all the data packets to the terminal device, another access network device can send a data packet to the terminal device. This helps maintain continuity of data received by the terminal device.

In correspondence to the solutions provided in the foregoing method embodiments, embodiments of this application further provide corresponding communication apparatuses (sometimes also referred to as communication devices) and a communication system. The communication apparatus includes a corresponding module or unit configured to perform each part in the foregoing embodiments. The module or unit may be software, hardware, or a combination of software and hardware. The following only briefly describes the communication apparatus and system. For implementation details of the solutions, refer to descriptions in the foregoing method embodiments. Details are not described below again.

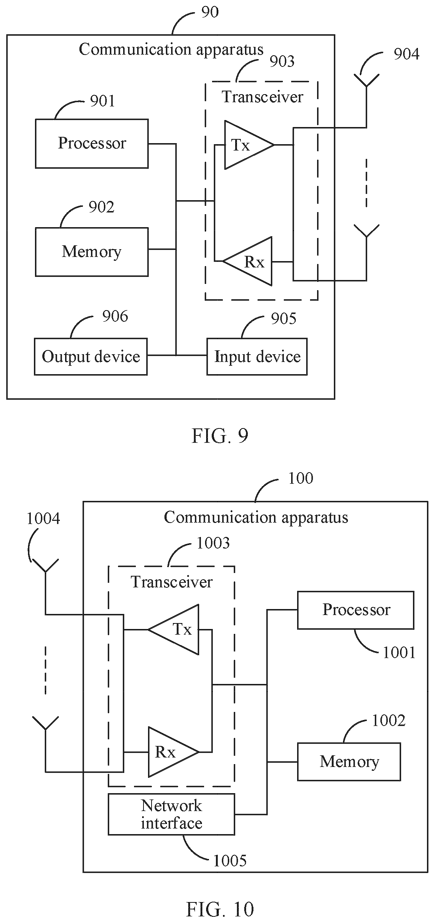

FIG. 9 is a diagram of a structure of a communication apparatus 90 according to an embodiment. It should be understood that the terminal device in the method embodiment corresponding to FIG. 2, FIG. 3, FIG. 5, FIG. 7, or FIG. 8 may be based on the structure of the communication apparatus 90 shown in FIG. 9 in this embodiment.

The communication apparatus 90 includes at least one processor 901, at least one memory 902, and at least one transceiver 903. The processor 901, the memory 902, and the transceiver 903 are connected. Optionally, the communication apparatus 90 may further include an input device 905, an output device 906, and one or more antennas 904. The antenna 904 is connected to the transceiver 903, and the input device 905 and the output device 906 are connected to the processor 901.

**In** this embodiment, the memory 902 is mainly configured to store a software program and data. The memory 902 may exist independently and is connected to the processor 901. Optionally, the memory 902 and the processor 901 may be integrated, for example, integrated into one or more chips. The memory 902 can store program code for executing the technical solutions in embodiments of this application, and the processor 901 controls the execution. Various types of executed computer program code may also be considered as drivers of the processor 901. It should be understood that FIG. 9 in this embodiment shows only one memory and one processor. However, during actual application, the communication apparatus 90 may include a plurality of processors or a plurality of memories. This is not specifically limited herein. **In** addition, the memory 902 may also be referred to as a storage medium, a storage device, or the like. The memory 902 may be a storage element on a same chip as the processor, namely, an on-chip storage element, or may be an independent storage element. This is not limited in this embodiment of this application.

In this embodiment, the transceiver 903 may be configured to support receiving or sending of a radio frequency signal between the communication apparatus 90 and an access network device. The transceiver 903 may be connected to the antenna 904. The transceiver 903 includes a transmitter Tx and a receiver Rx. Specifically, the one or more antennas 904 may receive a radio frequency signal. The receiver Rx in the transceiver 903 is configured to: receive the radio frequency signal from the antenna 904, convert the radio frequency signal into a digital baseband signal or a digital intermediate frequency signal, and provide the digital baseband signal or the digital intermediate frequency signal for the processor 901, to enable the processor 901 to perform further processing, for example, demodulation processing and decoding processing, on the digital baseband signal or the digital intermediate frequency signal. In addition, the transmitter Tx in the transceiver 903 is further configured to: receive a modulated digital baseband signal or a modulated digital intermediate frequency signal from the processor 901, convert the modulated digital baseband signal or the modulated digital intermediate frequency signal into a radio frequency signal, and send the radio frequency signal through the one or more antennas 904. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or the modulated digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

It should be understood that the transceiver 903 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiver circuit, or the like. The sending unit may be referred to as a transmitter, a transmitter machine, a transmitter circuit, or the like.

The processor 901 may be a baseband processor, or may be a central processing unit (central processing unit, CPU). The baseband processor and the CPU may be integrated together or separated from each other. The processor 901 may be configured to implement various functions for the terminal device, for example, configured to process a communication protocol and communication data; configured to: control the entire terminal device, execute a software program, and process data of the software program; or configured to assist in completing a computing processing task, for example, graphics and image processing or audio processing. Alternatively, the processor 901 is configured to implement one or more of the foregoing functions.

In addition, the output device 906 communicates with the processor 901, and may display information in a plurality of manners. This is not specifically limited herein.

In a design, the communication apparatus 90 is configured to perform the method of the terminal device in the embodiment corresponding to FIG. 2, FIG. 3, or FIG. 5. The transceiver 903 in the communication apparatus 90 is configured to receive first indication information from a first access network device, where the first indication information indicates that the first access network device is incapable of exchanging information with a core network device. After the terminal device accesses the first access network device, the processor 901 controls, based on the first indication information, the memory 902 to store a context of the terminal device, where the context of the terminal device is information used by the terminal device to access a second access network device after the first access network device stops providing a service for the terminal device.

In a possible implementation, the second access network device is an access network device that has a context of the terminal device.

In a possible implementation, the processor 901 is further configured to set up a connection to the second access network device based on the context of the terminal device after the first access network device stops providing the service for the terminal device.

In a possible implementation, the second access network device and the first access network device are a same access network device. The processor 901 is specifically configured to access a first cell of the first access network device based on the context of the terminal device, where the first cell is a cell stored in the context of the terminal device.

In a possible implementation, the context of the terminal device includes cell identification information of the first cell. The transceiver 903 is configured to receive the cell identification information of the first cell from the first access network device. The processor 901 is configured to access the first cell based on the cell identification information of the first cell.

In a possible implementation, the transceiver 903 is further configured to receive second indication information from the first access network device, where the second indication information indicates the terminal device to initiate access. The processor 901 is further configured to access the first cell of the first access network device based on the second indication information.

In a possible implementation, the second access network device and the first access network device are different access network devices, and the context of the terminal device includes cell identification information of a first cell. The transceiver 903 is configured to receive the cell identification information of the first cell from the second access network device. The processor 901 is configured to access a second cell of the second access network device based on the cell identification information of the first cell.

In a possible implementation, the second access network device and the first access network device are different access network devices. The transceiver 903 receives third indication information from the second access network device, where the third indication information indicates the terminal device to initiate access. The processor 901 accesses a second cell of the second access network device based on the third indication information.

In a possible implementation, the transceiver 903 receives first identification information from the first access network device, where the first identification information uniquely identifies the terminal device for the first access network device.

In a possible implementation, the transceiver 903 sends an uplink NAS message of the terminal device to the first access network device; sends the first identification information to the second access network device, where the first identification information is used by the second access network device to determine the context of the terminal device; and receives a downlink NAS message for the terminal device from the second access network device.

In a possible implementation, the processor 901 is specifically configured to: start a first NAS timer when the uplink NAS message is sent, where the first NAS timer is a NAS timer used when an access network device is incapable of exchanging information with the core network device; or start a second NAS timer after first duration since the uplink NAS message is sent, where the second NAS timer is a NAS timer used when an access network device is capable of exchanging information with the core network device.

In a possible implementation, the transceiver 903 is further configured to receive first time information from the first access network device, where the first time information is for determining duration of the first NAS timer or the first duration.

In another design, the communication apparatus 90 is configured to perform the method of the terminal device in the embodiment corresponding to FIG. 7. The transceiver 903 in the communication apparatus 90 is configured to receive a paging message from a third access network device. Alternatively, the transceiver 903 in the communication apparatus 90 is configured to receive a paging message from a fourth access network device.

In another design, the communication apparatus 90 is configured to perform the method of the terminal device in the embodiment corresponding to FIG. 8. The transceiver 903 in the communication apparatus 90 is configured to: receive, from a fifth access network device, a data packet that carries a first serial number or a second serial number; and send, to the fifth access network device, an indication (for example, an acknowledgment character (acknowledgment character, ACK)) indicating receiving acknowledgment for a received data packet. In addition, the transceiver 903 further sends seventh indication information to a sixth access network device, where the seventh indication information indicates data packets that have been consecutively received by the terminal device successfully. Optionally, the seventh indication information includes a target serial number, and the target serial number is a serial number of a last data packet whose receiving has been consecutively acknowledged by the terminal device.

It should be noted that, for specific implementations and beneficial effects of this embodiment, refer to the methods of the terminal device in the foregoing embodiments. Details are not described herein again.

FIG. 10 is a diagram of a structure of another communication apparatus 100 according to an embodiment. It should be understood that the access network device in the method embodiment corresponding to FIG. 2, FIG. 3, FIG. 5, FIG. 7, or FIG. 8, for example, the first access network device or the second access network device in the method embodiment corresponding to FIG. 2, FIG. 3, or FIG. 5, the third access network device or the fourth access network device in the method embodiment corresponding to FIG. 7, or the fifth access network device or the sixth access network device in the method embodiment corresponding to FIG. 8, may be based on the structure of the communication apparatus 100 shown in FIG. 10 in this embodiment.

The communication apparatus 100 includes at least one processor 1001, at least one memory 1002, at least one transceiver 1003, at least one network interface 1005, and one or more antennas 1004. The processor 1001, the memory 1002, the transceiver 1003, and the network interface 1005 are connected through a connection apparatus, and the antenna 1004 is connected to the transceiver 1003. The connection apparatus may include various types of interfaces, transmission cables, buses, or the like. This is not limited in this embodiment.

The memory 1002 is mainly configured to store a software program and data. The memory 1002 may exist independently, and is connected to the processor 1001. Optionally, the memory 1002 and the processor 1001 may be integrated, for example, integrated into one or more chips. The memory 1002 can store program code for executing the technical solutions in embodiments of this application, and the processor 1001 controls the execution. Various types of executed computer program code may also be considered as drivers of the processor 1001. It should be understood that FIG. 10 in this embodiment shows only one memory and one processor. However, during actual application, the communication apparatus 100 may include a plurality of processors or a plurality of memories. This is not specifically limited herein. In addition, the memory 1002 may also be referred to as a storage medium, a storage device, or the like. The memory 1002 may be a storage element on a same chip as the processor, namely, an on-chip storage element, or may be an independent storage element. This is not limited in this embodiment of this application.

In this embodiment, the transceiver 1003 may be configured to support receiving or sending of a radio frequency signal between the communication apparatus 100 and a terminal device. The transceiver 1003 may be connected to the antenna 1004. The transceiver 1003 includes a transmitter Tx and a receiver Rx. Specifically, the one or more antennas 1004 may receive a radio frequency signal. The receiver Rx in the transceiver 1003 is configured to: receive the radio frequency signal from the antenna 1004, convert the radio frequency signal into a digital baseband signal or a digital intermediate frequency signal, and provide the digital baseband signal or the digital intermediate frequency signal for the processor 1001, to enable the processor 1001 to perform further processing, for example, demodulation processing and decoding processing, on the digital baseband signal or the digital intermediate frequency signal. In addition, the transmitter Tx in the transceiver 1003 is further configured to: receive a modulated digital baseband signal or a modulated digital intermediate frequency signal from the processor 1001, convert the modulated digital baseband signal or the modulated digital intermediate frequency signal into a radio frequency signal, and send the radio frequency signal through the one or more antennas 1004. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or the modulated digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

It should be understood that the transceiver 1003 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiver circuit, or the like. The sending unit may be referred to as a transmitter, a transmitter machine, a transmitter circuit, or the like.

In addition, the processor 1001 is mainly configured to: process a communication protocol and communication data, control the entire network device, execute a software program, and process data of the software program, for example, configured to support the communication apparatus 100 in performing an action described in the foregoing embodiment. The communication apparatus 100 may include a baseband processor and a central processing unit. The baseband processor is mainly configured to process the communication protocol and the communication data. The central processing unit is mainly configured to: control the entire communication apparatus 100, execute the software program, and process the data of the software program. Functions of the baseband processor and the central processing unit may be integrated into the processor 1001 in FIG. 10. A person skilled in the art may understand that the baseband processor and the central processing unit may alternatively be processors independent of each other and are interconnected by using a technology such as a bus. A person skilled in the art may understand that the communication apparatus 100 may include a plurality of baseband processors to adapt to different network standards, the communication apparatus 100 may include a plurality of central processing units to enhance a processing capability thereof, and components in the communication apparatus 100 may be connected through various buses. The baseband processor may also be expressed as a baseband processing circuit or a baseband processing chip. The central processing unit may alternatively be expressed as a central processing circuit or a central processing chip. The function of processing the communication protocol and the communication data may be built in the processor; or may be stored in the memory in a form of a software program, where the processor executes the software program to implement a baseband processing function.

In addition, the network interface 1005 is configured to enable the communication apparatus 100 to be connected to another communication apparatus through a communication link. Specifically, the network interface 1005 may include a network interface, for example, an S1 interface, between the communication apparatus 100 and a core network element. Alternatively, the network interface 1005 may include a network interface, for example, an X2 interface or an Xn interface, between the communication apparatus 100 and another network device (for example, another access network device or a core network element).

In a design, the communication apparatus 100 is configured to perform the method of the first access network device in the embodiment corresponding to FIG. 2, FIG. 3, or FIG. 5. The transceiver 1003 in the communication apparatus 100 is configured to broadcast first indication information, where the first indication information indicates that the first access network device is incapable of exchanging information with a core network device. The processor 1001 is configured to set up a connection to a terminal device. The memory 1002 is configured to store a context of the terminal device after the first access network device sets up the connection to the terminal device, where the context of the terminal device is information used by a second access network device to accept the terminal device after the first access network device stops providing a service for the terminal device.

In a possible implementation, the transceiver 1003 is configured to broadcast the first indication information in a first area, where the first area is an area in which the access network device is incapable of setting up a connection to the core network device.

In a possible implementation, the transceiver 1003 is configured to receive, in the first area, an uplink NAS message from the terminal device. The processor 1001 is further configured to: when the first access network device moves to a second area, control the transceiver 1003 to send the uplink NAS message to the core network device, where the second area is an area in which the access network device is capable of setting up a connection to the core network device.

In a possible implementation, the second access network device is the first access network device. The processor 1001 sets up a connection to the terminal device based on the context of the terminal device when the first access network device moves to the first area again.

In a possible implementation, the processor 1001 is configured to provide a service for the terminal device through a first cell of the first access network device based on the context of the terminal device, where the first cell is a cell accessed by the terminal device when the first access network device stores the context of the terminal device.

In a possible implementation, the transceiver 1003 is configured to broadcast cell identification information of the first cell in the first area, where the cell identification information of the first cell is used by the terminal device to access the first cell.

In a possible implementation, the transceiver 1003 is configured to send, in the first cell, second indication information to the terminal device, where the second indication information indicates the terminal device to initiate access based on the context of the terminal device.

In a possible implementation, the transceiver 1003 is configured to: receive a downlink NAS message for the terminal device from the core network device in a second area, and send the downlink NAS message to the terminal device.

In a possible implementation, the transceiver 1003 is configured to: send first identification information to the terminal device, where the first identification information uniquely identifies the terminal device for the first access network device; and receive the first identification information from the terminal device. The processor 1001 is configured to: determine the context of the terminal device based on the first identification information of the terminal device; and determine the downlink NAS message based on the context of the terminal device.

In a possible implementation, the context of the terminal device includes geographical area information of the terminal device. The processor 1001 is configured to: determine the context of the terminal device based on a cell radio network temporary identifier of the terminal device and the geographical area information of the terminal device; and determine the downlink NAS message based on the context of the terminal device.

In a possible implementation, the context of the terminal device includes time information about access of the terminal device to the first access network device. The processor 1001 is configured to: determine the context of the terminal device based on a cell radio network temporary identifier of the terminal device and the time information about the access of the terminal device to the first access network device; and determine the downlink NAS message based on the context of the terminal device.

In a possible implementation, the second access network device and the first access network device are different access network devices. The processor 1001 is configured to: when the first access network device moves to a second area, control the transceiver 1003 to send the context of the terminal device to the core network device, where the second area is an area in which the access network device is capable of setting up a connection to the core network device, and the context of the terminal device is used by the second access network device determined by the core network device to set up a connection to the terminal device.

In a possible implementation, the transceiver 1003 is configured to broadcast first time information in the first area, where the first time information is for determining a first NAS timer.

In a possible implementation, the processor 1001 is configured to: when the first access network device moves to the second area, control the transceiver 1003 to send fourth indication information to the core network device, where the fourth indication information indicates that the terminal device accesses the first access network device when the first access network device is incapable of setting up a connection to the core network device.

In a possible implementation, the processor 1001 is configured to: when the first access network device moves to the second area, control the transceiver 1003 to send first time information to the core network device, where the first time information is for determining a first NAS timer of the core network device.

In another design, the communication apparatus 100 is configured to perform the method of the second access network device in the embodiment corresponding to FIG. 2, FIG. 3, or FIG. 5. The transceiver 1003 is configured to receive a context of a terminal device and a downlink NAS message for the terminal device from a core network device. The processor 1001 is configured to determine, based on the context of the terminal device, a geographical area in which the terminal device is located. The processor 1001 is further configured to: when the second access network device moves to the geographical area in which the terminal device is located, control the transceiver 1003 to send second indication information to the terminal device, where the second indication information indicates the terminal device to initiate random access; and after the terminal device accesses the second access network device, control the transceiver 1003 to send the downlink NAS message for the terminal device to the terminal device.

In a possible implementation, the transceiver 1003 is configured to receive first identification information from the terminal device, where the first identification information uniquely identifies the terminal device for a first access network device. The processor 1001 is configured to: determine the context of the terminal device based on the first identification information, and determine the downlink NAS message based on the context of the terminal device.

In a possible implementation, the context of the terminal device includes geographical area information of the terminal device. The processor 1001 is configured to: determine the context of the terminal device based on a cell radio network temporary identifier of the terminal device and the geographical area information of the terminal device, and determine the downlink NAS message based on the context of the terminal device.

In a possible implementation, the context of the terminal device includes time information about access of the terminal device to the first access network device. The processor 1001 determines the context of the terminal device based on a cell radio network temporary identifier of the terminal device and the time information about the access of the terminal device to the first access network device, and determines the downlink NAS message based on the context of the terminal device.

In another design, the communication apparatus 100 is configured to perform the method of the third access network device in the embodiment corresponding to FIG. 7. The transceiver 1003 in the communication apparatus 100 is configured to receive a paging message, where the paging message includes geographical area information of a terminal device. The processor 1001 is configured to: when the third access network device moves to a geographical area in which the terminal device is located, control the transceiver 1003 to broadcast the paging message in the geographical area in which the terminal device is located.

In a possible implementation, the transceiver 1003 is configured to send fifth indication information to a fourth access network device, where the fourth access network device is an access network device that provides a service for the terminal device after the third access network device stops providing a service for the terminal device, and the fifth indication information indicates the fourth access network device to delete the paging message for paging the terminal device.

In another design, the communication apparatus 100 is configured to perform the method of the fourth access network device in the embodiment corresponding to FIG. 7. The transceiver 1003 is configured to receive fifth indication information from a third access network device, where the fifth indication information indicates the fourth access network device to delete a paging message for paging a terminal device.

In another design, the communication apparatus 100 is configured to perform the method of the fifth access network device in the embodiment corresponding to FIG. 8. The transceiver 1003 in the communication apparatus 100 is configured to receive a plurality of data packets for a terminal device from a core network device, where each data packet corresponds to one first serial number. The processor 1001 is configured to: when the fifth access network device moves to a geographical area in which the terminal device is located, control, based on the first serial number, the transceiver 1003 to send, to the terminal device, the data packet that carries the first serial number; or when the fifth access network device moves to a geographical area in which the terminal device is located, determine a second serial number of each data packet based on the first serial number of each data packet and the first mapping rule, and control, based on the second serial number, the transceiver 1003 to send, to the terminal device, the data packet that carries the second serial number.

In a possible implementation, the processor 1001 is configured to: before stopping providing a service for the terminal device, control the transceiver 1003 to send sixth indication information to the terminal device, where the sixth indication information indicates that there is a to-be-sent data packet.

In another design, the communication apparatus 100 is configured to perform the method of the sixth access network device in the embodiment corresponding to FIG. 8. The transceiver 1003 is configured to receive a plurality of data packets for a terminal device and a context of the terminal device from a core network device, where each data packet corresponds to one first serial number. The processor 1001 is configured to set up a connection to the terminal device based on the context of the terminal device. The transceiver 1003 receives seventh indication information from the terminal device, where the seventh indication information indicates data packets that have been consecutively received by the terminal device successfully; and the transceiver 1003 sends at least one of the plurality of data packets to the terminal device based on the seventh indication information.

In a possible implementation, the seventh indication information includes a target serial number, and the target serial number is a serial number of a last data packet whose receiving has been consecutively acknowledged by the terminal device.

In a possible implementation, the target serial number is a first serial number. The transceiver 1003 is configured to send, to the terminal device, at least one data packet that carries a first serial number, where the first serial number of each of the at least one data packet is greater than the target serial number.

In a possible implementation, the target serial number is a second serial number. The processor 1001 is configured to determine a second serial number of each data packet based on a first serial number of each data packet and a first mapping rule. The transceiver 1003 is configured to send, to the terminal device, at least one data packet that carries the second serial number, where the second serial number of each of the at least one data packet is greater than the target serial number.

It should be noted that for specific implementations and beneficial effects of this embodiment, refer to the methods of the access network devices in the foregoing embodiments. Details are not described herein again.

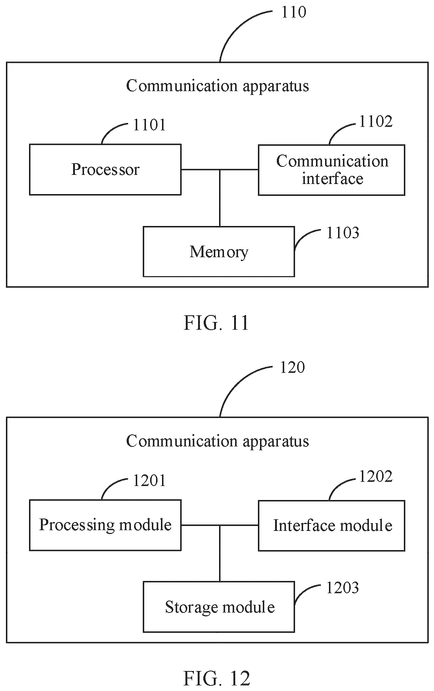

FIG. 11 is a diagram of a structure of another communication apparatus 110 according to an embodiment. It should be understood that the core network device in the method embodiment corresponding to FIG. 2, FIG. 3, FIG. 5, FIG. 7, or FIG. 8 may be based on the structure of the communication apparatus 110 shown in FIG. 11 in this embodiment. As shown in FIG. 11, the communication apparatus 110 may include a processor 1101, a memory 1103, and a communication interface 1102. The processor 1101 is coupled to the memory 1103, and the processor 1101 is coupled to the communication interface 1102.

The communication interface 1102 is connected to another communication apparatus through a communication link. For example, the communication interface 1102 may include a network interface, for example, an S1 interface, between the communication apparatus 100 and an access network device (for example, the communication apparatus 90 shown in FIG. 9).

The processor 1101 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 1101 may be one processor, or may include a plurality of processors. This is not specifically limited herein.

In addition, the memory 1103 is mainly configured to store a software program and data. The memory 1103 may exist independently, and is connected to the processor 1101. Optionally, the memory 1103 and the processor 1101 may be integrated, for example, integrated into one or more chips. The memory 1103 can store program code for executing the technical solutions in embodiments of this application, and the processor 1101 controls the execution. Various types of executed computer program code may also be considered as drivers of the processor 1101. The memory 1103 may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 1103 may alternatively include a combination of the foregoing types of memories. The memory 1103 may be one memory, or may include a plurality of memories. For example, the memory 1103 is configured to store various data, for example, a first reference location or a first distance threshold. In addition, the memory 1103 is further configured to store first rule information, second rule information, third rule information, fourth rule information, and the like. For details, refer to related descriptions in the foregoing embodiments. The details are not described herein again.

In a design, the communication apparatus 110 is configured to perform the method of the core network device in the embodiment corresponding to FIG. 2, FIG. 3, or FIG. 5. The communication interface 1102 is configured to receive an uplink NAS message of a terminal device and fourth indication information from a first access network device, where the fourth indication information indicates that the terminal device accesses the first access network device when the first access network device is incapable of exchanging information with the core network device. The processor 1101 is configured to make, based on the fourth indication information, a first NAS timer take effect.

In a possible implementation, the communication interface 1102 is configured to receive first time information from the first access network device, where the first time information is for determining a first NAS timer of the core network device.

In a possible implementation, the communication interface 1102 is configured to send a downlink NAS message for the terminal device to the first access network device, and the core network device starts the first NAS timer. The processor 1101 receives, from the first access network device by using the communication interface 1102 before the first NAS timer expires, an uplink NAS message corresponding to the downlink NAS message.

In a possible implementation, the processor 1101 sends a downlink NAS message for the terminal device to a second access network device by using the communication interface 1102 before the first NAS timer expires, and the core network device starts the first NAS timer, where the second access network device is an access network device that moves to a geographical area in which the terminal device is located. The processor 1101 receives, by using the communication interface 1102 before the first NAS timer expires, an uplink NAS message corresponding to the downlink NAS message.

In a possible implementation, the communication interface 1102 is configured to receive a context of the terminal device from the first access network device. The processor 1101 is configured to determine the second access network device based on the context of the terminal device. The communication interface 1102 is further configured to send the context of the terminal device to the second access network device.

In a design, the communication apparatus 110 is configured to perform the method of the core network device in the embodiment corresponding to FIG. 7. The processor 1101 is configured to determine at least one access network device based on geographical area information of a terminal device, where a current coverage area of the access network device does not include a geographical area in which the terminal device is located, and a movement path of the coverage area of the access network device passes through the geographical area in which the terminal device is located. The communication interface 1102 is configured to send a paging message to the at least one access network device, where the paging message includes the geographical area information of the terminal device.

In a possible implementation, when the communication interface 1102 is configured to send the paging message, the core network device starts a first paging timer, where duration of the first paging timer is greater than duration of a pre-configured paging timer.

In a design, the communication apparatus 110 is configured to perform the method of the core network device in the embodiment corresponding to FIG. 8. The processor 1101 is configured to determine a plurality of data packets for a terminal device and a first serial number corresponding to each data packet. The communication interface 1102 is configured to send the plurality of data packets for the terminal device, where each data packet corresponds to one first serial number. The communication interface 1102 is further configured to send a context of the terminal device and a plurality of data packets for the terminal device to a sixth access network device, where the sixth access network device is an access network device that provides a service for the terminal device after a fifth access network device stops providing a service for the terminal device, and the context of the terminal device is used by the sixth access network device to set up a connection to the terminal device and send the plurality of data packets for the terminal device to the terminal device.

It should be noted that for specific implementations and beneficial effects of this embodiment, refer to the methods of the core network device in the foregoing embodiments. Details are not described herein again.

As shown in FIG. 12, this application further provides a communication apparatus 120. The communication apparatus 120 may be a terminal device, an access network device, or a core network device, or may be a component (for example, an integrated circuit or a chip) of the terminal device, the access network device, or the core network device. Alternatively, the communication apparatus 120 may be another communication module configured to implement the methods in the method embodiments of this application.

The communication apparatus 120 may include a processing module 1201 (or referred to as a processing unit), and optionally, may further include an interface module 1202 (or referred to as a transceiver unit or a transceiver module) and a storage module 1203 (or referred to as a storage unit). The interface module 1202 is configured to implement communication with another device. The interface module 1202 may be, for example, a transceiver module or an input/output module.

In a possible design, one or more modules in FIG. 12 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately or may be integrated.

The communication apparatus 120 has a function of implementing the terminal device described in embodiments of this application. For example, the communication apparatus 120 includes a corresponding module, unit, or means (means) for the terminal device to perform the steps related to the terminal device described in embodiments of this application. The function, unit, or means (means) may be implemented by software or hardware, may be implemented by hardware executing corresponding software, or may be implemented by a combination of software and hardware. For details, further refer to corresponding descriptions in the foregoing corresponding method embodiments. Specifically, refer to the communication apparatus 90 in the embodiment corresponding to FIG. 9.

Alternatively, the communication apparatus 120 has a function of implementing the access network device described in embodiments of this application. For example, the communication apparatus 120 includes a corresponding module, unit, or means (means) for the access network device to perform the steps related to the access network device described in embodiments of this application. The function, unit, or means (means) may be implemented by software or hardware, may be implemented by hardware executing corresponding software, or may be implemented by a combination of software and hardware. For details, further refer to corresponding descriptions in the foregoing corresponding method embodiments. Specifically, refer to the communication apparatus 100 in the embodiment corresponding to FIG. 10.

Alternatively, the communication apparatus 120 has a function of implementing the core network device described in embodiments of this application. For example, the communication apparatus 120 includes a corresponding module, unit, or means (means) for the core network device to perform the steps related to the core network device described in embodiments of this application. The function, unit, or means (means) may be implemented by software or hardware, may be implemented by hardware executing corresponding software, or may be implemented by a combination of software and hardware. For details, further refer to corresponding descriptions in the foregoing corresponding method embodiments. Specifically, refer to the communication apparatus 110 in the embodiment corresponding to FIG. 11.

In addition, this application provides a computer program product. The computer program product includes one or more computer instructions. When the computer program instructions are loaded and executed on a computer, all or some of the procedures or functions according to embodiments of this application are generated. For example, the method related to the access network device in FIG. 2, FIG. 3, FIG. 5, FIG. 7, or FIG. 8 is implemented. For another example, the method related to the terminal device in FIG. 2, FIG. 3, FIG. 5, FIG. 7, or FIG. 8 is implemented. For another example, the method related to the core network device in FIG. 2, FIG. 3, FIG. 5, FIG. 7, or FIG. 8 is implemented. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the access network device in FIG. 2, FIG. 3, FIG. 5, FIG. 7, or FIG. 8.

In addition, this application further provides a computer-readable storage medium. The storage medium stores a computer program, and the computer program is executed by a processor to implement the method related to the terminal device in FIG. 2, FIG. 3, FIG. 5, FIG. 7, or FIG. 8.

In addition, this application further provides a computer-readable storage medium. The storage medium stores a computer program, and the computer program is executed by a processor to implement the method related to the core network device in FIG. 2, FIG. 3, FIG. 5, FIG. 7, or FIG. 8.

It should be understood that the sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

## Claims

1. A communication method, comprising:
receiving, by a terminal device, first indication information from a first access network device, wherein the first indication information indicates that the first access network device is incapable of exchanging information with a core network device; and
storing, by the terminal device, a context of the terminal device based on the first indication information after the terminal device accesses the first access network device, wherein the context of the terminal device is information used by the terminal device to access a second access network device after the first access network device stops providing a service for the terminal device.

2. The method according to claim 1, wherein the second access network device is an access network device that has a context of the terminal device.

3. The method according to claim 1 or 2, wherein after the storing, by the terminal device, a context of the terminal device based on the first indication information, the method further comprises:
setting up, by the terminal device, a connection to the second access network device based on the context of the terminal device after the first access network device stops providing the service for the terminal device.

4. The method according to claim 3, wherein the second access network device and the first access network device are a same access network device; and
the performing, by the terminal device, a connection to the second access network device based on the context of the terminal device comprises:
accessing, by the terminal device, a first cell of the first access network device based on the context of the terminal device, wherein the first cell is a cell stored in the context of the terminal device.

5. The method according to claim 4, wherein the context of the terminal device comprises cell identification information of the first cell; and
the accessing, by the terminal device, a first cell of the first access network device based on the context of the terminal device comprises:
if the terminal device receives the cell identification information of the first cell from the first access network device, accessing, by the terminal device, the first cell based on the cell identification information of the first cell.

6. The method according to claim 4, wherein the accessing, by the terminal device, a first cell of the first access network device based on the context of the terminal device comprises:
receiving, by the terminal device, second indication information from the first access network device, wherein the second indication information indicates the terminal device to initiate access; and
accessing, by the terminal device, the first cell of the first access network device based on the second indication information.

7. The method according to claim 3, wherein the second access network device and the first access network device are different access network devices, and the context of the terminal device comprises cell identification information of a first cell; and
the setting up, by the terminal device, a connection to the second access network device based on the context of the terminal device comprises:
if the terminal device receives the cell identification information of the first cell from the second access network device, accessing, by the terminal device, a second cell of the second access network device based on the cell identification information of the first cell.

8. The method according to claim 3, wherein the second access network device and the first access network device are different access network devices; and
the setting up, by the terminal device, a connection to the second access network device based on the context of the terminal device comprises:
receiving, by the terminal device, third indication information from the second access network device, wherein the third indication information indicates the terminal device to initiate access; and
accessing, by the terminal device, a second cell of the second access network device based on the third indication information.

9. The method according to any one of claims 3 to 8, wherein the method further comprises:
receiving, by the terminal device, first identification information from the first access network device, wherein the first identification information uniquely identifies the terminal device for the first access network device.

10. The method according to claim 9, wherein before the first access network device stops providing the service for the terminal device, the method further comprises:
sending, by the terminal device, an uplink NAS message of the terminal device to the first access network device; and
after the setting up, by the terminal device, a connection to the second access network device based on the context of the terminal device, the method further comprises:
sending, by the terminal device, the first identification information to the second access network device, wherein the first identification information is used by the second access network device to determine the context of the terminal device; and
receiving, by the terminal device, a downlink NAS message for the terminal device from the second access network device.

11. The method according to any one of claims 1 to 10, wherein before the first access network device stops providing the service for the terminal device, the method further comprises:
starting, by the terminal device, a first NAS timer when sending the uplink NAS message, wherein the first NAS timer is a NAS timer used when an access network device is incapable of exchanging information with the core network device;
or
starting, by the terminal device, a second NAS timer after first duration since the uplink NAS message is sent, wherein the second NAS timer is a NAS timer used when an access network device is capable of exchanging information with the core network device.

12. The method according to claim 11, wherein the method further comprises:
receiving, by the terminal device, first time information from the first access network device, wherein the first time information is for determining duration of the first NAS timer or the first duration.

13. A communication method, comprising:
broadcasting, by a first access network device, first indication information, wherein the first indication information indicates that the first access network device is incapable of exchanging information with a core network device; and
storing, by the first access network device, a context of a terminal device after the first access network device sets up a connection to the terminal device, wherein the context of the terminal device is information used by a second access network device to accept the terminal device after the first access network device stops providing a service for the terminal device.

14. The method according to claim 13, wherein the broadcasting, by a first access network device, first indication information comprises:
broadcasting, by the first access network device, the first indication information in a first area, wherein the first area is an area in which the access network device is incapable of setting up a connection to the core network device.

15. The method according to claim 14, wherein
before the first access network device stops providing the service for the terminal device, the method further comprises:
receiving, by the first access network device in the first area, an uplink NAS message from the terminal device; and
after the storing, by the first access network device, a context of a terminal device, the method further comprises:
sending, by the first access network device, the uplink NAS message to the core network device when the first access network device moves to a second area, wherein the second area is an area in which the access network device is capable of setting up a connection to the core network device.

16. The method according to claim 15, wherein the second access network device and the first access network device are a same access network device; and
the method further comprises:
setting up, by the first access network device, a connection to the terminal device based on the context of the terminal device when the first access network device moves to the first area again.

17. The method according to claim 16, wherein the setting up, by the first access network device, a connection to the terminal device based on the context of the terminal device comprises:
providing, by the first access network device, a service for the terminal device through a first cell of the first access network device based on the context of the terminal device, wherein the first cell is a cell accessed by the terminal device when the first access network device stores the context of the terminal device.

18. The method according to claim 17, wherein before the setting up, by the first access network device, a connection to the terminal device based on the context of the terminal device, the method further comprises:
sending, by the first access network device in the first cell, second indication information to the terminal device, wherein the second indication information indicates the terminal device to initiate access.

19. The method according to any one of claims 15 to 18, wherein after the sending, by the first access network device, the uplink NAS message to the core network device, the method further comprises:
receiving, by the first access network device in the second area, a downlink NAS message for the terminal device from the core network device; and
after the setting up, by the first access network device, a connection to the terminal device based on the context of the terminal device, the method further comprises:
sending, by the first access network device, the downlink NAS message to the terminal device.

20. The method according to claim 19, wherein before the receiving, by the first access network device in the first area, an uplink NAS message from the terminal device, the method further comprises:
sending, by the first access network device, first identification information to the terminal device, wherein the first identification information uniquely identifies the terminal device for the first access network device; and
before the sending, by the first access network device, the downlink NAS message to the terminal device, the method further comprises:
receiving, by the first access network device, the first identification information from the terminal device;
determining, by the first access network device, the context of the terminal device based on the first identification information; and
determining, by the first access network device, the downlink NAS message based on the context of the terminal device.

21. The method according to claim 19, wherein the context of the terminal device comprises geographical area information of the terminal device; and
before the sending, by the first access network device, the downlink NAS message to the terminal device, the method further comprises:
determining, by the first access network device, the context of the terminal device based on a cell radio network temporary identifier of the terminal device and the geographical area information of the terminal device; and
determining, by the first access network device, the downlink NAS message based on the context of the terminal device.

22. The method according to claim 19, wherein the context of the terminal device comprises time information about access of the terminal device to the first access network device; and
before the sending, by the first access network device, the downlink NAS message to the terminal device, the method further comprises:
determining, by the first access network device, the context of the terminal device based on a cell radio network temporary identifier of the terminal device and the time information about the access of the terminal device to the first access network device; and
determining, by the first access network device, the downlink NAS message based on the context of the terminal device.

23. The method according to claim 13 or 14, wherein the second access network device and the first access network device are different access network devices; and
after the storing, by the first access network device, a context of a terminal device, the method further comprises:
sending, by the first access network device, the context of the terminal device to the core network device when the first access network device moves to a second area, wherein the second area is an area in which the access network device is capable of setting up a connection to the core network device, and the context of the terminal device is used by the second access network device determined by the core network device to set up a connection to the terminal device.

24. The method according to any one of claims 14 to 23, wherein before the receiving, by the first access network device in the first area, an uplink NAS message from the terminal device, the method further comprises:
broadcasting, by the first access network device, first time information in the first area, wherein the first time information is for determining a first NAS timer of the terminal device.

25. The method according to any one of claims 15 to 24, wherein the method further comprises:
sending, by the first access network device, fourth indication information to the core network device when the first access network device moves to the second area, wherein the fourth indication information indicates that the terminal device accesses the first access network device when the first access network device is incapable of setting up a connection to the core network device.

26. The method according to any one of claims 15 to 25, wherein the method further comprises:
sending, by the first access network device, first time information to the core network device when the first access network device moves to the second area, wherein the first time information is for determining a first NAS timer of the core network device.

27. A communication method, comprising:
receiving, by a core network device, an uplink NAS message of a terminal device and fourth indication information from a first access network device, wherein the fourth indication information indicates that the terminal device accesses the first access network device when the first access network device is incapable of setting up a connection to the core network device, and the fourth indication information is further used by the core network device to start a first NAS timer when sending a downlink NAS message.

28. The method according to claim 27, wherein the method further comprises:
receiving, by the core network device, first time information from the first access network device, wherein the first time information is for determining the first NAS timer.

29. The method according to claim 27 or 28, wherein the method further comprises:
sending, by the core network device, a downlink NAS message for the terminal device to the first access network device, and starting, by the core network device, the first NAS timer; and
receiving, by the core network device from the first access network device before the first NAS timer expires, an uplink NAS message corresponding to the downlink NAS message.

30. The method according to claim 27 or 28, wherein the method further comprises:
sending, by the core network device, a downlink NAS message for the terminal device to a second access network device, and starting, by the core network device, the first NAS timer, wherein the second access network device is an access network device that is to move to a geographical area in which the terminal device is located; and
receiving, by the core network device before the first NAS timer expires, an uplink NAS message corresponding to the downlink NAS message.

31. The method according to claim 30, wherein the method further comprises:
receiving, by the core network device, a context of the terminal device from the first access network device; and
sending, by the core network device, the context of the terminal device to the second access network device.

32. A communication method, comprising:
receiving, by a second access network device, a context of a terminal device and a downlink NAS message for the terminal device from a core network device;
determining, by the second access network device based on the context of the terminal device, a geographical area in which the terminal device is located;
sending, by the second access network device, second indication information to the terminal device when the second access network device moves to the geographical area in which the terminal device is located, wherein the second indication information indicates the terminal device to initiate random access; and
sending, by the second access network device, the downlink NAS message for the terminal device to the terminal device after the terminal device accesses the second access network device.

33. The method according to claim 32, wherein before the sending the downlink NAS message for the terminal device to the terminal device, the method further comprises:
receiving, by the second access network device, first identification information from the terminal device, wherein the first identification information uniquely identifies the terminal device in the first access network device;
determining, by the second access network device, the context of the terminal device based on the first identification information; and
determining, by the second access network device, the downlink NAS message based on the context of the terminal device.

34. The method according to claim 33, wherein the context of the terminal device comprises geographical area information of the terminal device; and
before the sending, by the second access network device, the downlink NAS message to the terminal device, the method further comprises:
determining, by the second access network device, the context of the terminal device based on a cell radio network temporary identifier of the terminal device and the geographical area information of the terminal device; and
determining, by the second access network device, the downlink NAS message based on the context of the terminal device.

35. The method according to claim 33, wherein the context of the terminal device comprises time information about access of the terminal device to the first access network device; and
before the sending, by the second access network device, the downlink NAS message to the terminal device, the method further comprises:
determining, by the second access network device, the context of the terminal device based on a cell radio network temporary identifier of the terminal device and the time information about the access of the terminal device to the first access network device; and
determining, by the second access network device, the downlink NAS message based on the context of the terminal device.

36. A communication method, comprising:
receiving, by a terminal device, at least one data packet from a fifth access network device, wherein each data packet corresponds to one first serial number or one second serial number;
setting up, by the terminal device, a connection to a sixth access network device after the fifth access network device stops providing a service for the terminal device;
sending, by the terminal device, seventh indication information to the sixth access network device, wherein the seventh indication information indicates data packets that have been consecutively received by the terminal device successfully; and
receiving, by the terminal device, at least one data packet from the sixth access network device.

37. The method according to claim 36, wherein the seventh indication information comprises a target serial number, and the target serial number is a serial number of a last data packet whose receiving has been consecutively acknowledged by the terminal device.

38. The method according to claim 37, wherein before the fifth access network device stops providing the service for the terminal device, the method further comprises:
receiving, by the terminal device, sixth indication information from the fifth access network device, wherein the sixth indication information indicates that there is a to-be-sent data packet.

39. A communication apparatus, comprising a processor and a memory, wherein
the memory stores a computer program; and
the processor invokes the computer program, to enable the communication apparatus to perform the method according to any one of claims 1 to 12 or perform the method according to any one of claims 36 to 38.

40. A communication apparatus, comprising a processor and a memory, wherein
the memory stores a computer program; and
the processor invokes the computer program, to enable the communication apparatus to perform the method according to any one of claims 13 to 26 or perform the method according to any one of claims 32 to 35.

41. A communication apparatus, comprising a processor and a memory, wherein
the memory stores a computer program; and
the processor invokes the computer program, to enable the communication apparatus to perform the method according to any one of claims 27 to 31.

42. A computer-readable storage medium, storing instructions, wherein when the instructions are run on a computer, the computer is enabled to perform the method according to any one of claims 1 to 12, perform the method according to any one of claims 13 to 26, perform the method according to any one of claims 27 to 31, perform the method according to any one of claims 32 to 35, or perform the method according to any one of claims 36 to 38.
